# EUROPEAN PATENT SPECIFICATION

(11) **EP 2 410 193 B1**
(45) Date of publication and mention of the grant of the patent: **11.09.2013**
(21) Application number: 11175121.0
(22) Date of filing: 22.07.2011
(51) Int. Cl.: F16D 43/04, F16D 43/21, F16D 41/22, F16D 45/00, F16D 67/02

(54) **Centrifugal Force Sliding Damping Type Clutch Actuated By Torque**
Durch Drehmoment betätigte Fliehkraftgleitdämpfungskupplung
Embrayage de type centrifuge actionné par couple avec amortissement coulissant

(30) Priority: 22.07.2010 US 805281; 22.07.2010 US 805280
(43) Date of publication of application: 25.01.2012
(73) Proprietor: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(56) References cited:
- EP-A1- 1 648 078
- DE-B- 1 224 621
- GB-A- 2 265 677
- US-A1- 2006 240 926
- US-B1- 6 182 808

## Description

### BACKGROUND OF THE INVENTION

### (a) Field of the invention

A centrifugal force sliding damping type clutch actuated by torque comprising:
a clutch device,
a relay transmission structure assembly (104),
a rotary prime motive end (101),
an output-end clutch structure (1052),
a relay coupling structure (204),
a limit-torque sliding damping device (106),
a centrifugal clutch (1006),
a recovering actuation spring (120)>
is disclosed, wherein the centrifugal force sliding damping type clutch actuated by torque is capable of controlling a clutch device to perform operations of coupling or disengaging with the driving torque, and being equipped with a relay transmission structure assembly (104) between a rotary prime motive end (101) and an output-end clutch structure (1052) installed at an output end (102), the relay transmission structure assembly (104) is installed with a relay coupling structure (204) having an active side of relay coupling structure and a passive side of relay coupling structure, the prime motive end (101) is provided with a limiting structure (115) for limiting relative positions of the relay transmission structure assembly (104) and the prime motive end (101);
a limit-torque sliding damping device (106) and a centrifugal force combining type centrifugal clutch (1006) are installed between the relay transmission structure assembly (104) and the static housing (107) and is rotated in a first rotational direction at the prime motive end (101) to drive the active side of relay coupling structure of the relay coupling structure (204) installed in the relay transmission structure assembly (104) to be in an idle rotating state before reaching a pre-set rotational speed, and at the time reaching or exceeding the pre-set rotational speed the centrifugal force combining type centrifugal clutch (1006) installed between the relay transmission structure assembly (104) and the static housing (107) turns to be in an engaged state so as to be combined with the limit-torque sliding damping device (106) for generating a sliding damping effect, such that the passive side of relay output coupling structure is driven by the active side of relay coupling structure to move, and the relay transmission structure assembly (104) and a relay output clutch structure (1051) installed in the relay transmission structure assembly (104) is driven to perform closing/opening operations with the output-end clutch structure (1052) installed at the output end (102) so as to transmit rotary kinetic energy, and to force the recovering actuation spring (120) provided between the relay output clutch structure (1051) and the output-end clutch structure (1052) to be tightened;
when the rotational driving torque at the prime motive end (101) is no longer provided, the relay transmission structure assembly (104) is returned and the relay output clutch structure (1051) and the output-end clutch structure (1052) are disengaged through actions of the recovering actuation spring (120), thereby the output end (102) is released;
moreover, when the rotational speed in which the centrifugal force combining type centrifugal clutch (1006) driven at the prime motive end (101) is greater or equal to its disengaging rotational speed, the centrifugal force combining type centrifugal clutch (1006) is in a disengaged state, such that the damping between the relay transmission structure assembly (104) and the static housing (107) is not provided, and the passive side of relay coupling structure of the relay transmission structure assembly (104) is moved by the recovering actuation spring (120) to be returned, thereby the relay output clutch structure (1051) and the output-end clutch structure (1052) are disengaged; or
a centrifugal force cutting type centrifugal clutch (1006) and a limit-torque sliding damping device (106) are installed between the relay transmission structure assembly (104) and the static housing (107) and is rotated in a first rotational direction at the prime motive end (101), thereby when the active side of relay coupling structure of the relay coupling structure (204) installed in the relay transmission structure assembly (104) is driven, a sliding damping effect is generated by the centrifugal force cutting type centrifugal clutch (1006) and the limit-torque sliding damping device (106) installed between the relay transmission structure assembly (104) and the static housing (107) such that the passive side of relay output coupling structure is driven by the active side of relay coupling structure to move, and the relay transmission structure assembly (104) and a relay output clutch structure (1051) installed in the relay transmission structure assembly (104) are driven to perform closing/opening operations with the output-end clutch structure (1052) installed at the output end (102) so as to transmit rotary kinetic energy, and to force a recovering actuation spring (120) provided between the relay output clutch structure (1051) and the output-end clutch structure (1052) being tightened; when reaching a set rotational speed, the centrifugal force cutting type centrifugal clutch (1006) cuts the connection between the relay transmission structure assembly (104) and the limit-torque sliding damping device (106) and the static housing (107); and through the driving torque from the prime motive end (101) to the output end (102), the passive side of relay output coupling structure is continuously driven by the active side of relay coupling structure, so the relay transmission structure assembly (104) and the relay output clutch structure (1051) installed in the relay transmission structure assembly (104) are further driven to perform closing/opening operations with the output-end clutch structure (1052) installed at the output end (102) so as to transmit rotary kinetic energy, and to force the recovering actuation spring (120) provided between the relay output clutch structure (1051) and the output-end clutch structure (1052) being tightened;
when the rotational driving torque at the prime motive end (101) is no longer provided, the relay transmission structure assembly (104) is returned and the relay output clutch structure (1051) and the output-end clutch structure (1052) are disengaged through actions of the recovering actuation spring (120), thereby the output end (102) is released.

### (b) Description of the Prior Art

A conventional single-way clutch (S.W.C.) or an over running clutch (O.R.C) has following transmission features:
when an active side is driven in one rotational direction, e.g. the clockwise direction, a passive side is able to be linked; on the other hand, when the passive side is driven in the counterclockwise direction, the active side is able to be linked:
   when the active side is driven in the counterclockwise direction, the passive side is not able to be linked; when the passive side is driven in the clockwise direction, the active side is not able to be linked, the abovementioned are its transmission features:
when the active side is desired to be driven in one of the directions, e.g. the clockwise direction, the passive side is able to be linked for rotational outputting, and when the passive side is driven in the counterclockwise direction, the active side is not able to be linked, which is not the function that the conventional single-way transmission device can provide.

German patent DE 1224621 discloses a free-wheel braking system in which the brake members are arranged in an annular body, and the system further comprises free wheeling ring-members which are driven such that the relative motion between the braking members and the ring members is relatively small. In this way wear and heat generation are minimised.

Document DE 1 224 621 discloses a centrifugal force sliding damping type clutch actuated by torque comprising: a clutch device, relay transmission structure assembly, a rotary prime motive end, an output-end clutch structure, a relay coupling structure, a limit-torque sliding damping device, a centrifugal clutch (the limit-torque sliding damping device and the centrifugal clutch being integrated as a single braking unit), wherein the centrifugal force sliding damping type clutch actuated by torque is capable of controlling a clutch device to perform operations of coupling or disengaging with the driving torque, and a relay transmission structure assembly between a rotary prime motive end and an output-end clutch structure is installed at an output end, the relay transmission structure assembly is installed with a relay coupling structure having an active side of relay coupling structure and a passive side of relay coupling structure, the prime motive end is provided with a limiting structure for limiting relative positions of the relay transmission structure assembly and the prime motive end;
a limit-torque sliding damping device and a centrifugal clutch are installed between the relay transmission structure assembly and a external housing and is rotated in a first rotational direction at the prime motive end to drive the active side of relay coupling structure of the relay coupling structure installed in the relay transmission structure assembly so that at the time reaching or exceeding the pre-set rotational speed the centrifugal clutch installed between the relay transmission structure assembly and the static housing turns to be in an engaged state so as to be combined with the limit-torque sliding damping device for generating a sliding damping effect, such that the passive side of relay output coupling structure is driven by the active side of relay coupling structure to move, and the relay transmission structure assembly and a relay output clutch structure installed in the relay transmission structure assembly is driven to perform closing/opening operations with the output-end clutch structure installed at the output end so as to transmit rotary kinetic energy, and to force the recovering actuation spring provided between the relay output clutch structure and the output-end clutch structure to be tightened;
when the rotational driving torque at the prime motive end is no longer provided, the relay transmission structure assembly is returned and the relay output clutch structure and the output-end clutch structure are disengaged, thereby the output end is released.

### SUMMARY OF THE INVENTION

According to a first and aspect of the invention, a centrifugal force sliding damping type clutch actuated by torque comprising:
a clutch device,
a relay transmission structure assembly (104),
a rotary prime motive end (101),
an output-end clutch structure (1052),
a relay coupling structure (204),
a limit-torque sliding damping device (106),
a centrifugal clutch (1006),
a recovering actuation spring (120)>
is disclosed, wherein the centrifugal force sliding damping type clutch actuated by torque is capable of controlling a clutch device to perform operations of coupling or disengaging with the driving torque, and being equipped with a relay transmission structure assembly (104) between a rotary prime motive end (101) and an output-end clutch structure (1052) installed at an output end (102), the relay transmission structure assembly (104) is installed with a relay coupling structure (204) having an active side of relay coupling structure and a passive side of relay coupling structure, the prime motive end (101) is provided with a limiting structure (115) for limiting relative positions of the relay transmission structure assembly (104) and the prime motive end (101);
a limit-torque sliding damping device (106) and a centrifugal force combining type centrifugal clutch (1006) are installed between the relay transmission structure assembly (104) and the static housing (107) and is rotated in a first rotational direction at the prime motive end (101) to drive the active side of relay coupling structure of the relay coupling structure (204) installed in the relay transmission structure assembly (104) to be in an idle rotating state before reaching a pre-set rotational speed, and at the time reaching or exceeding the pre-set rotational speed the centrifugal force combining type centrifugal clutch (1006) installed between the relay transmission structure assembly (104) and the static housing (107) turns to be in an engaged state so as to be combined with the limit-torque sliding damping device (106) for generating a sliding damping effect, such that the passive side of relay output coupling structure is driven by the active side of relay coupling structure to move, and the relay transmission structure assembly (104) and a relay output clutch structure (1051) installed in the relay transmission structure assembly (104) is driven to perform closing/opening operations with the output-end clutch structure (1052) installed at the output end (102) so as to transmit rotary kinetic energy, and to force the recovering actuation spring (120) provided between the relay output clutch structure (1051) and the output-end clutch structure (1052) to be tightened;
when the rotational driving torque at the prime motive end (101) is no longer provided, the relay transmission structure assembly (104) is returned and the relay output clutch structure (1051) and the output-end clutch structure (1052) are disengaged through actions of the recovering actuation spring (120), thereby the output end (102) is released;
moreover, when the rotational speed in which the centrifugal force combining type centrifugal clutch (1006) driven at the prime motive end (101) is greater or equal to its disengaging rotational speed, the centrifugal force combining type centrifugal clutch (1006) is in a disengaged state, such that the damping between the relay transmission structure assembly (104) and the static housing (107) is not provided, and the passive side of relay coupling structure of the relay transmission structure assembly (104) is moved by the recovering actuation spring (120) to re returned, thereby the relay output clutch structure (1051) and the output-end clutch structure (1052) are disengaged.

According to a second aspect of the invention, a centrifugal force cutting off sliding damping type clutch actuated by torque is disclosed, characterized in that being capable of controlling a clutch device to perform operations of coupling or disengaging with the driving torque, and being equipped with a relay transmission structure assembly (104) between a rotary prime motive end (101) and an output-end clutch structure (1052) installed at an output end (102), the relay transmission structure assembly (104) is installed with a relay coupling structure (204) having an active side of relay coupling structure and a passive side of relay coupling structure, and the prime motive end (101) is provided with a limiting structure (115) for limiting relative positions of the relay transmission structure assembly (104) and the prime motive end (101);
a centrifugal force cutting type centrifugal clutch (1006) and a limit-torque sliding damping device (106) are installed between the relay transmission structure assembly (104) and the static housing (107) and is rotated in a first rotational direction at the prime motive end (101), thereby when the active side of relay coupling structure of the relay coupling structure (204) installed in the relay transmission structure assembly (104) is driven, a sliding damping effect is generated by the centrifugal force cutting type centrifugal clutch (1006) and the limit-torque sliding damping device (106) installed between the relay transmission structure assembly (104) and the static housing (107) such that the passive side of relay output coupling structure is driven by the active side of relay coupling structure to move, and the relay transmission structure assembly (104) and a relay output clutch structure (1051) installed in the relay transmission structure assembly (104) are driven to perform closing/opening operations with the output-end clutch structure (1052) installed at the output end (102) so as to transmit rotary kinetic energy, and to force a recovering actuation spring (120) provided between the relay output clutch structure (1051) and the output-end clutch structure (1052) being tightened; when reaching a set rotational speed, the centrifugal force cutting type centrifugal clutch (1006) cuts the connection between the relay transmission structure assembly (104) and the limit-torque sliding damping device (106) and the static housing (107); and through the driving torque from the prime motive end (101) to the output end (102), the passive side of relay output coupling structure is continuously driven by the active side of relay coupling structure, so the relay transmission structure assembly (104) and the relay output clutch structure (1051) installed in the relay transmission structure assembly (104) are further driven to perform closing/opening operations with the output-end clutch structure (1052) installed at the output end (102) so as to transmit rotary kinetic energy, and to force the recovering actuation spring (120) provided between the relay output clutch structure (1051) and the output-end clutch structure (1052) being tightened;
when the rotational driving torque at the prime motive end (101) is no longer provided, the relay transmission structure assembly (104) is returned and the relay output clutch structure (1051) and the output-end clutch structure (1052) are disengaged through actions of the recovering actuation spring (120), thereby the output end (102) is released.

### BRIEF DESCRIPTION OF THE DRAWINGS

FIG. 1 is a schematic view of the structural theory of the centrifugal force cutting off or combined with sliding damping type clutch actuated by torque of the present invention.
FIG. 2 is a schematic structural view of one embodiment illustrating that the relay coupling structure installed in the relay transmission structure assembly (104) is composed by the screw rod structure (1041) having axial actuation screw angle and the screw nut structure (1042) having axial actuation screw angle.
FIG. 3 is a schematic structural view of one embodiment illustrating that the relay coupling structure installed in the relay transmission structure assembly (104) is composed by the coil-shaped spring capable of rotating for axial actuation (1043).
FIG. 4 is a schematic structural view of one embodiment illustrating that the relay coupling structure installed in the relay transmission structure assembly (104) is composed by the axial compelling over running clutch.
FIG. 5 is a schematic structural view of one embodiment illustrating that the relay coupling structure installed in the relay transmission structure assembly (104) is composed by the axial relay clutch of the axial clutch transmission block having axial compelling pre-forced recovering.
FIG. 6 is a cross sectional view of FIG. 5 intersected along an A-A line.
FIG. 7 is a schematic view illustrating the disengaged state of the axial clutch structure (1077) and the output-end clutch structure (1052) as shown in FIG. 5.
FIG. 8 is a schematic view illustrating the engaged state of the axial clutch structure (1077) and the output-end clutch structure (1052) as shown in FIG. 5.
FIG. 9 is a schematic structural view of one embodiment illustrating that the relay coupling structure and the relay outputting structure installed in the relay transmission structure assembly (104) is composed by the radial relay clutch of the radial clutch transmission block having radial compelling pre-forced recovering.
FIG. 10 is a cross sectional view of FIG. 9.

### DESCRIPTION OF MAIN COMPONENT SYMBOLS

- 101:: prime motive end
- 102:: output end
- 104:: relay transmission structure assembly
- 106:: limit-torque sliding damping device
- 107:: static housing
- 115:: limiting structure
- 120:: recovering actuation spring
- 204:: relay coupling structure
- 1006:: centrifugal force cutting off or combining type centrifugal clutch
- 1041:: screw rod structure
- 1042:: screw nut structure
- 1043:: coil-shaped spring capable of rotating for axial actuation
- 1051:: relay output clutch structure
- 1052:: output-end clutch structure
- 1060:: axial compelling over running clutch
- 1061:: active side of axial compelling over running clutch
- 1062:: passive side of axial compelling over running clutch
- 1063:: middle rolling member
- 1071: active side of axial relay clutch
- 1072:: axial clutch transmission block
- 1073:: axial clutch transmission block recovering spring
- 1074:: axial relay clutch transmission board
- 1075:: middle rolling member
- 1076:: passive side of axial relay clutch
- 1077:: axial clutch structure
- 1079:: transmission end
- 1081:: active side of radial relay clutch
- 1082:: radial clutch transmission block
- 1083:: radial clutch transmission block recovering spring
- 1084:: radial relay clutch transmission board
- 1085:: middle rolling member
- 1086:: passive side of radial relay clutch
- 1087:: radial clutch structure
- 1089:: transmission end

### DETAILED DESCRIPTION OF THE PREFERRED EMBODIMENTS

The present invention relates to a centrifugal force sliding damping type clutch actuated by torque comprising:
a clutch device,
a relay transmission structure assembly (104),
a rotary prime motive end (101),
an output-end clutch structure (1052),
a relay coupling structure (204),
a limit-torque sliding damping device (106),
a centrifugal clutch (1006),
a recovering actuation spring (120)>
is disclosed, wherein the centrifugal force sliding damping type clutch actuated by torque is capable of controlling a clutch device to perform operations of coupling or disengaging with the driving torque, and being equipped with a relay transmission structure assembly (104) between a rotary prime motive end (101) and an output-end clutch structure (1052) installed at an output end (102), the relay transmission structure assembly (104) is installed with a relay coupling structure (204) having an active side of relay coupling structure and a passive side of relay coupling structure, the prime motive end (101) is provided with a limiting structure (115) for limiting relative positions of the relay transmission structure assembly (104) and the prime motive end (101);
a limit-torque sliding damping device (106) and a centrifugal force centrifugal clutch (1006) are installed between the relay transmission structure assembly (104) and the static housing (107) and is rotated in a first rotational direction at the prime motive end (101) to drive the active side of relay coupling structure of the relay coupling structure (204) installed in the relay transmission structure assembly (104) to be in an idle rotating state before reaching a pre-set rotational speed, and at the time reaching or exceeding the pre-set rotational speed the centrifugal force centrifugal clutch (1006) installed between the relay transmission structure assembly (104) and the static housing (107) turns to be in an engaged state so as to be combined with the limit-torque sliding damping device (106) for generating a sliding damping effect, such that the passive side of relay output coupling structure is driven by the active side of relay coupling structure to move, and the relay transmission structure assembly (104) and a relay output clutch structure (1051) installed in the relay transmission structure assembly (104) is driven to perform closing/opening operations with the output-end clutch structure (1052) installed at the output end (102) so as to transmit rotary kinetic energy, and to force the recovering actuation spring (120) provided between the relay output clutch structure (1051) and the output-end clutch structure (1052) to be tightened;
when the rotational driving torque at the prime motive end (101) is no longer provided, the relay transmission structure assembly (104) is returned and the relay output clutch structure (1051) and the output-end clutch structure (1052) are disengaged through actions of the recovering actuation spring (120), thereby the output end (102) is released;
moreover, when the rotational speed in which the centrifugal force centrifugal clutch (1006) driven at the prime motive end (101) is greater or equal to its disengaging rotational speed, the centrifugal force combining type centrifugal clutch (1006) is in a disengaged state, such that the damping between the relay transmission structure assembly (104) and the static housing (107) is not provided, and the passive side of relay coupling structure of the relay transmission structure assembly (104) is moved by the recovering actuation spring (120) to be returned, thereby the relay output clutch structure (1051) and the output-end clutch structure (1052) are disengaged.

The centrifugal force centrifugal clutch (1006) may be a combining type centrifugal clutch or a cutting off type centrifugal clutch. Both are described below. The description of the cutting type centrifugal clutch is a condensed version of the combined type centrifugal clutch. This is done for brevity, and the features which apply to the combined-type clutch embodiments also apply to the cutting type.

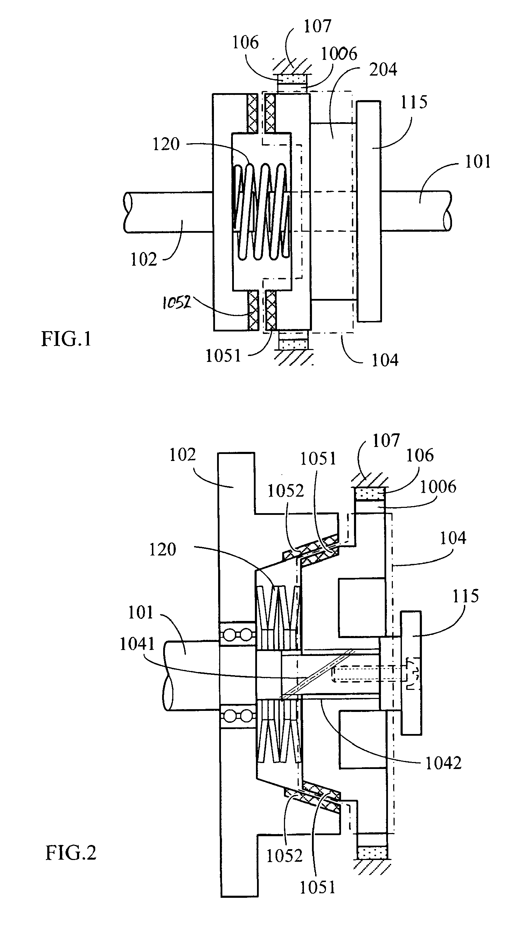

FIG. 1 is a schematic view of the structural theory of the present invention;
As shown in FIG. 1, it mainly consists of:
-- a prime motive end (101): composed by a rotational mechanism for inputting rotary kinetic energy; the prime motive end (101) is served to drive an active side of relay coupling structure of a relay coupling structure (204) installed in a relay transmission structure assembly (104), the prime motive end (101) is installed with a limiting structure (115) for limiting relative positions of the relay transmission structure assembly (104) and the prime motive end (101);
-- an output end (102): composed by a rotational mechanism for outputting rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), and is capable of performing rotational driving and axial movements, the relay transmission structure assembly (104) is provided with a relay coupling structure (204) driven by the prime motive end (101), the relay coupling structure (204) has an active side of relay coupling structure and a passive side of relay coupling structure coaxially coupled and interacted with the active side, a limit-torque sliding damping device (106) and a centrifugal force combining type centrifugal clutch (1006) are installed between the mentioned transmission structure assembly (104) and the static housing (107), when the active side of the relay coupling structure is driven by the prime motive end (101) to be in an idle rotating state before reaching a pre-set rotational speed, and at the time reaching or exceeding the pre-set rotational speed the centrifugal force combining type centrifugal clutch (1006) installed between the relay transmission structure assembly (104) and the static housing (107) turns to be in an engaged state so as to be combined with the limit-torque sliding damping device (106) for generating a damping effect, thereby applying the rotational drive torque onto the passive side of relay coupling structure to move the passive side of relay coupling structure, and further to cause the relay transmission structure assembly (104) generating a relative movement, so as to drive the relay output clutch structure (1051) installed in the relay transmission structure assembly (104) to perform closing/opening operations with an output-end clutch structure (1052) for transmitting rotary kinetic energy, and forcing a recovering actuation spring (120) to be tightened;
   when the rotational driving torque from the prime motive end (101) to the output end (102) is no longer provided, the relay output clutch structure (1051) and the output-end clutch structure (1052) are disengaged and the passive side of relay coupling structure is returned through a releasing recovering effect provided by the recovering actuation spring (120), thereby terminating the transmission of the rotary kinetic energy;
   moreover, when the rotational speed in which the centrifugal force combining type centrifugal clutch (1006) driven at the prime motive end (101) is greater or equal to its disengaging rotational speed, the centrifugal force combining type centrifugal clutch (1006) is in a disengaged state, such that the damping between the relay transmission structure assembly (104) and the static housing (107) is not provided, and the passive side of relay coupling structure of the relay transmission structure assembly (104) is moved by the recovering actuation spring (120) to be returned, thereby allowing the relay output clutch structure (1051) and the output-end clutch structure (1052) to be disengaged;
-- a limit-torque sliding damping device (106): composed by a mechanism device having limit-torque sliding damping effect with a restraining function while relative rotational movements are generated between the relay transmission structure assembly (104) and the static housing (107); and is installed between the centrifugal force combining type centrifugal clutch (1006)and the static housing (107), so through actions of the limit-torque sliding damping device (106), relative movements are generated between the active side of relay coupling structure and the passive side of relay coupling structure combined in the relay transmission structure assembly (104) when the active side of relay coupling structure is rotationally driven by the prime motive end (101);
   the structure includes: constituted by the mechanism device, which is through the mechanical force, the spring pre-stressing force, the electromagnetic force of electric excited coil, or the action force of permanent magnet for the limit-torque sliding damping device (106) including between solid and solid, or between solid and viscous fluid, or between viscous fluid and viscous fluid, or between solid and gaseous or liquidity fluids to generate sliding damping;
-- centrifugal force combining type centrifugal clutch (1006): configured by a centrifugal clutch structure device having the function of cutoff at static and low-speed, and installed between the relay transmission structure assembly (104) and the limit-torque sliding damping device (106), and when the active side of relay coupling structure is rotationally driven by the prime motive end (101) to reach a pre-set rotational speed, the centrifugal clutch (1006) is in an engaged state, so as to combine the relay transmission structure assembly (104) and the limit-torque sliding damping device (106) for generating the limit-torque sliding damping between the relay transmission structure assembly (104) and the static housing (107), thereby a relative movement is generated between the active side of relay coupling structure and the passive side of relay coupling structure combined in the relay transmission structure assembly (104);
-- a static housing (107): configured by a static housing structure for accommodating the centrifugal force combined with sliding damping type torque-actuated clutch;
-- a limiting structure (115): composed by a mechanism capable of limiting relative positions of the relay transmission structure assembly (104) and the prime motive end (101), and is combined with the rotary part of the prime motive end (101);
-- a recovering actuation spring (120): which is a spring device capable of being pressed for storing energy and being released for outputting energy, and is disposed between the relay output clutch structure (1051) and the output-end clutch structure (1052), and the normal state thereof is to separate the relay output clutch structure (1051) and the output-end clutch structure (1052), so as to terminate the transmission of the rotary kinetic energy; when the relay output clutch structure (1051) and the output-end clutch structure (1052) are driven so as to be engaged, the recovering actuation spring (120) is synchronously pre-pressed for being in an energy-storing state;
-- a relay output clutch structure (1051): the relay output clutch structure (1051) is composed by a clutch function structure and is installed in the relay transmission structure assembly (104), when the active side of relay coupling structure is driven by the prime motive end (101), the relay output clutch structure (1051) and the relay transmission structure assembly (104) are driven by the active side of relay coupling structure of the relay coupling structure (204), for performing closing/opening operations with the output-end clutch structure (1052) so as to transmit rotary kinetic energy, when the driving force from the prime motive end (101) to the output end (102) is no longer provided, the relay output clutch structure (1051) and the output-end clutch structure (1052) are disengaged through the releasing elastic force of the recovering actuation spring (120), thereby terminating the transmission of the rotary kinetic energy;
-- an output-end clutch structure (1052): composed by a clutch function structure capable of performing closing/opening operations with the relay output clutch structure (1051) to transmit rotary kinetic energy, or being disengaged for terminating the transmission of the rotary kinetic energy, and the output-end clutch structure (1052) is connected to the output end (102);
-- the clutch structure of the relay output clutch structure (1051) and the output-end clutch structure (1052) consists of the friction-type clutch structure, the engaging-type clutch structure or the synchro-engaging clutch structure;
   In the centrifugal force sliding damping type torque-actuated clutch of the present invention, the relay coupling structure (204) installed in the relay transmission structure assembly (104) can be further composed by a screw rod structure (1041) and a screw nut structure (1042);
   Where the centrifugal clutch (1006) is a cutting type clutch, a sliding damping effect is generated by the centrifugal force cutting type centrifugal clutch (1006) in an engaged state and the limit-torque sliding damping device (106) installed between the relay transmission structure assembly (104) and the static housing (107) such that the passive side of relay coupling structure is driven to move, and further enables the relay transmission structure assembly (104) to generate a relative movement, so as to drive the relay output clutch structure (1051) installed in the relay transmission structure assembly (104) to perform closing/opening operations with an output-end clutch structure (1052) for transmitting rotary kinetic energy, and to force a recovering actuation spring (120) being tightened; when reaching a set rotational speed, the centrifugal force cutting type centrifugal clutch (1006) cuts the connection between the relay transmission structure assembly (104) and the limit-torque sliding damping device (106) and the static housing (107); and through the driving torque from the prime motive end (101) to the output end (102), the passive side of relay output coupling structure is continuously driven by the active side of relay coupling structure, thereby the relay transmission structure assembly (104) and the relay output clutch structure (1051) installed in the relay transmission structure assembly (104) are further driven to perform closing/opening operations with the output-end clutch structure (1052) installed at the output end (102) so as to transmit rotary kinetic energy, and to force the recovering actuation spring (120) provided between the relay output clutch structure (1051) and the output-end clutch structure (1052) being tightened;
   when the rotational driving torque from the prime motive end (101) to the output end (102) is no longer provided, the relay output clutch structure (1051) and the output-end clutch structure (1052) are disengaged and the passive side of relay coupling structure is returned through a releasing recovering effect provided by the recovering actuation spring (120), thereby terminating the transmission of the rotary kinetic energy;
-- a limit-torque sliding damping device (106): composed by a mechanism device having limit-torque sliding damping effect with a restraining function while relative rotational movements are generated between the relay transmission structure assembly (104) and the static housing (107), and is installed between the centrifugal force cutting type centrifugal clutch (1006) and the static housing (107), so through actions of the limit-torque sliding damping device (106), relative movements are generated between the active side of relay coupling structure and the passive side of relay coupling structure combined in the relay transmission structure assembly (104) when the active side of relay coupling structure is driven by the prime motive end (101) to perform rotational driving;
   the structure includes: constituted by the mechanism device, which is through the mechanical force, the spring pre-stressing force, the electromagnetic force of electric excited coil, or the action force of permanent magnet for the limit-torque sliding damping device (106) including between solid and solid, or between solid and viscous fluid, or between viscous fluid and viscous fluid, or between solid and gaseous or liquidity fluids to generate sliding damping;
-- centrifugal force cutting type centrifugal clutch (1006): configured by a device having limit-torque damping function and being controlled by the centrifugal force to be in a cut state while reaching a set rotational speed and be in an engaged state while being static or in low speed so as to restrain the rotational motion between the relay transmission structure assembly (104) and the static housing (107), and is installed between the relay transmission structure assembly (104) and the limit-torque sliding damping device (106), when the active side of relay coupling structure is driven by the prime motive end (101) to perform rotational driving, with a sliding damping effect generated through the centrifugal force cutting type centrifugal clutch (1006) being combined with the limit-torque sliding damping device (106), a relative movement is generated between the active side of relay coupling structure and the passive side of relay coupling structure combined in the relay transmission structure assembly (104);
   In the centrifugal force cutting off sliding damping type torque-actuated clutch of the present invention, the relay coupling structure (204) installed in the relay transmission structure assembly (104) can be further composed by a screw rod structure (1041) and a screw nut structure (1042);
   FIG. 2 is a schematic structural view of one embodiment illustrating that the relay coupling structure installed in the relay transmission structure assembly (104) is composed by the screw rod structure (1041) having axial actuation screw angle and the screw nut structure (1042) having axial actuation screw angle.
   As shown in FIG. 2, it mainly consists of:
-- a prime motive end (101): composed by a rotational mechanism for inputting rotary kinetic energy; the prime motive end (101) is a screw rod structure (1041) constituting the function of active end of relay coupling structure, for driving the relay transmission structure assembly (104); the prime motive end (101) is installed with a limiting structure (115) for limiting relative positions of the relay transmission structure assembly (104) and the prime motive end (101);
-- an output end (102): composed by a rotational mechanism for outputting the rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), and is capable of performing rotational driving and axial movements, the relay transmission structure assembly (104) is installed with a relay coupling structure driven by the prime motive end (101), the relay coupling structure has the function of the active side of relay coupling structure composed by the screw rod structure (1041) and the function of the passive side of relay coupling structure composed by the screw nut structure (1042), the screw rod structure (1041) and the screw nut structure (1042) are coaxially coupled and interacted, the mentioned passive side of relay coupling structure composed by the screw nut structure (1042) is connected to the relay transmission structure assembly (104), a limit-torque sliding damping device (106) and a centrifugal force combining type centrifugal clutch (1006) are installed between the relay transmission structure assembly (104) and the static housing (107), when the screw rod structure (1041) is driven by the prime motive end (101) to be in an idle rotating state before reaching a set rotational speed, and at the time reaching or exceeding the pre-set rotational speed the centrifugal force combining type centrifugal clutch (1006) installed between the relay transmission structure assembly (104) and the static housing (107) turns to be in an engaged state so as to be combined with the limit-torque sliding damping device (106) for generating a damping effect, thereby applying the rotational drive torque onto the screw nut structure (1042) to move, and further to cause the relay transmission structure assembly (104) connected with the screw nut structure (1042) generating a relative axial movement for driving the relay output clutch structure (1051) installed in the relay transmission structure assembly (104) to perform closing/opening operations with the output-end clutch structure (1052) for transmitting rotary kinetic energy, and forcing the recovering actuation spring (120) to be tightened;
   when the rotational driving torque from the prime motive end (101) to the output end (102) is no longer provided, the relay output clutch structure (1051) and the output-end clutch structure (1052) are disengaged and the screw nut structure (1042) is returned through the releasing recovering effect provided by the recovering actuation spring (120), thereby terminating the transmission of the rotary kinetic energy;
   moreover, when the rotational speed in which the centrifugal force combining type centrifugal clutch (1006) driven at the prime motive end (101) is greater or equal to its disengaging rotational speed, the centrifugal force combining type centrifugal clutch (1006) is in a disengaged state, such that the damping between the relay transmission structure assembly (104) and the static housing (107) is not provided, and the passive side of relay coupling structure of the relay transmission structure assembly (104) is moved by the recovering actuation spring (120) to be returned, thereby allowing the relay output clutch structure (1051) and the output-end clutch structure (1052) to be disengaged;
-- a limit-torque sliding damping device (106): composed by a mechanism device having limit-torque sliding damping effect with a restraining function while relative rotational movements are generated between the relay transmission structure assembly (104) and the static housing (107); and is installed between the centrifugal force combining type centrifugal clutch (1006)and the static housing (107), so when the screw rod structure (1041) is rotationally driven by the prime motive end (101), through actions of the limit-torque sliding damping device (106), relative movements are generated between the screw rod structure (1041) and the screw nut structure (1042) combined in the relay transmission structure assembly (104) during the screw rod structure (1041) performing rotational driving to the screw nut structure (1042) ;
   the structure includes: constituted by the mechanism device, which is through the mechanical force, the spring pre-stressing force, the electromagnetic force of electric excited coil, or the action force of permanent magnet for the limit-torque sliding damping device (106) including between solid and solid, or between solid and viscous fluid, or between viscous fluid and viscous fluid, or between solid and gaseous or liquidity fluids to generate sliding damping;
-- centrifugal force combining type centrifugal clutch (1006): configured by a centrifugal clutch structure device having the function of cutoff at static and low-speed, and installed between the relay transmission structure assembly (104) and the limit-torque sliding damping device (106), and when the active side of relay coupling structure is rotationally driven by the prime motive end (101) to reach a pre-set rotational speed, the centrifugal clutch (1006) is in an engaged state, so as to combine the relay transmission structure assembly (104) and the limit-torque sliding damping device (106) for generating the limit-torque sliding damping between the relay transmission structure assembly (104) and the static housing (107), thereby a relative movement is generated between the active side of relay coupling structure and the passive side of relay coupling structure combined in the relay transmission structure assembly (104);
-- a static housing (107): configured by a static housing structure for accommodating the centrifugal force combined with sliding damping type torque-actuated clutch;
-- a limiting structure (115): composed by a mechanism capable of limiting relative positions of the relay transmission structure assembly (104) and the prime motive end (101), and is combined with the rotary part of the prime motive end (101);
-- a recovering actuation spring (120): which is a spring device capable of being pressed for storing energy and being released for outputting energy, and is disposed between the relay output clutch structure (1051) and the output-end clutch structure (1052), and the normal state thereof is to separate the relay output clutch structure (1051) and the output-end clutch structure (1052), so as to terminate the transmission of the rotary kinetic energy; when the relay output clutch structure (1051) and the output-end clutch structure (1052) are driven so as to be engaged, the recovering actuation spring (120) is synchronously pre-pressed for being in an energy-storing state;
-- a relay output clutch structure (1051): the relay output clutch structure (1051) is composed by a clutch function structure and is installed in the relay transmission structure assembly (104), when the screw rod structure (1041) is driven by the prime motive end (101), the relay output clutch structure (1051) and the relay transmission structure assembly (104) are driven by the screw rod structure (1041) of the relay coupling structure, for performing closing/opening operations with the output-end clutch structure (1052) so as to transmit rotary kinetic energy and to force the recovering actuation spring (120) being tightened; when the rotational driving torque from the prime motive end (101) to the output end (102) is no longer provided, the relay output clutch structure (1051) and the output-end clutch structure (1052) are disengaged through the releasing elastic force of the recovering actuation spring (120), thereby terminating the transmission of the rotary kinetic energy;
-- an out-put end clutch structure (1052): composed by a clutch function structure capable of performing closing/opening operations with the relay output clutch structure (1051) to transmit rotary kinetic energy, or being disengaged for terminating the transmission of the rotary kinetic energy, and the output-end clutch structure (1052) is connected to the output end (102);
-- the clutch structure of the relay output clutch structure (1051) and the output-end clutch structure (1052) consists of the friction-type clutch structure, the engaging-type clutch structure or the synchro-engaging clutch structure;
   In the centrifugal force combined with sliding damping type torque-actuated clutch of the present invention, the relay coupling structure installed in the relay transmission structure assembly (104) can be further composed by a coil-shaped spring capable of rotating for axial actuation (1043);
   Where the centrifugal clutch is a cutting type centrifugal clutch, a centrifugal force cutting type centrifugal clutch (1006) and a limit-torque sliding damping device (106) are installed between the relay transmission structure assembly (104) and the static housing (107), when the screw rod structure (1041) is driven by the prime motive end (101) to apply the rotational driving torque to the screw nut structure (1042), through a sliding damping effect generated by the centrifugal force cutting type centrifugal clutch (1006) being in an engaged state and the limit-torque sliding damping device (106) installed between the relay transmission structure assembly (104) and the static housing (107), the relay transmission structure assembly (104) connected with the screw nut structure (1042) generates a relative axial movement for driving the relay output clutch structure (1051) installed in the relay transmission structure assembly (104) to perform closing/opening operations with the output-end clutch structure (1052) for transmitting the rotary kinetic energy, and forcing the recovering actuation spring (120) being tightened, and when reaching a set rotational speed, the centrifugal force cutting type centrifugal clutch (1006) cuts the connection between the relay transmission structure assembly (104) and the static housing (107); meanwhile through the driving torque from the prime motive end (101) to the output end (102), the passive side of relay output coupling structure is continuously driven by the active side of relay coupling structure, so the relay transmission structure assembly (104) and the relay output clutch structure (1051) installed in the relay transmission structure assembly (104) are driven to perform closing/opening operations with the output-end clutch structure (1052) installed at the output end (102) so as to transmit the rotary kinetic energy and to force the recovering actuation spring (120) provided between the relay output clutch structure (1051) and the output-end clutch structure (1052) being tightened;
   when the rotational driving torque from the prime motive end (101) to the output end (102) is no longer provided, the relay output clutch structure (1051) and the output-end clutch structure (1052) are disengaged and the screw nut structure (1042) is returned, thereby terminating the transmission of the rotary kinetic energy;
-- a limit-torque sliding damping device (106): composed by a mechanism device having limit-torque sliding damping effect with a restraining function while relative rotational movements are generated between the relay transmission structure assembly (104) and the static housing (107), and is installed between the centrifugal force cutting type centrifugal clutch (1006) and the static housing (107); when the screw rod structure (1041) is rotationally driven by the prime motive end (101), through actions of the limit-torque sliding damping device (106), relative movements are generated between the screw rod structure (1041) and the screw nut structure (1042) combined in the relay transmission structure assembly (104) during the screw rod structure (1041) performing rotational driving to the screw nut structure (1042);
   the structure includes: constituted by the mechanism device, which is through the mechanical force, the spring pre-stressing force, the electromagnetic force of electric excited coil, or the action force of permanent magnet for the limit-torque sliding damping device (106) including between solid and solid, or between solid and viscous fluid, or between viscous fluid and viscous fluid, or between solid and gaseous or liquidity fluids to generate sliding damping;
-- centrifugal force cutting type centrifugal clutch (1006): configured by a device having limit-torque damping function and being controlled by the centrifugal force to be in a cut state while reaching a set rotational speed and be in an engaged state while being static or in low speed so as to restrain the rotational motion between the relay transmission structure assembly (104) and the static housing (107), and is installed between the relay transmission structure assembly (104) and the limit-torque sliding damping device (106), when the screw rod structure (1041) is driven by the prime motive end (101) to perform rotational driving, with a sliding damping effect generated through the centrifugal force cutting type centrifugal clutch (1006) being combined with the limit-torque sliding damping device (106), a relative movement is generated between the screw rod structure (1041) and the screw nut structure (1042) combined in the relay transmission structure assembly (104) while the screw rod structure (1041) performs rotation driving to the screw nut structure (1042);
   In the centrifugal force cutting off sliding damping type torque-actuated clutch of the present invention, the relay coupling structure installed in the relay transmission structure assembly (104) can be further composed by a coil-shaped spring capable of rotating for axial actuation (1043);

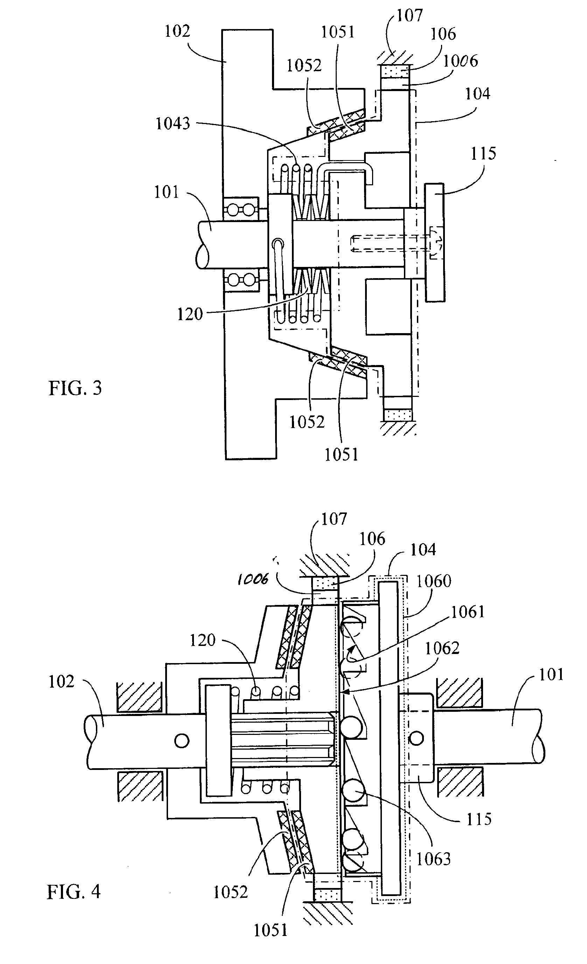

   FIG. 3 is a schematic structural view of one embodiment illustrating that the relay coupling structure installed in the relay transmission structure assembly (104) is composed by the coil-shaped spring capable of rotating for axial actuation (1043).
   As shown in FIG. 3, it main consists of:
-- a prime motive end (101): composed by a rotational mechanism for inputting rotary kinetic energy; the prime motive end (101) is a coil-shaped spring capable of rotating for axial actuation (1043) for driving the relay transmission structure assembly (104), the prime motive end (101) is installed with a limiting structure (115) for limiting relative positions of the relay transmission structure assembly (104) and the prime motive end (101);
-- an output end (102): composed by a rotational mechanism for outputting rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), and is capable of performing rotational driving and axial movements, the relay transmission structure assembly (104) is installed with a coil-shaped spring capable of rotating for axial actuation (1043) serving to provide the relay coupling structure function and is coaxially shaft-installed between the relay transmission structure assembly (104) and the prime motive end (101), one end of the coil-shaped spring capable of rotating for axial actuation (1043) is fastened at the prime motive end (101) for providing the function of the active side of relay coupling structure, the other end of the coil-shaped spring capable of rotating for axial actuation (1043) is installed in the relay transmission structure assembly (104) for providing the function of the passive side of relay coupling structure, a limit-torque sliding damping device (106) and a centrifugal force combining type centrifugal clutch (1006) are installed between the relay transmission structure assembly (104) and the static housing (107); when the coil-shaped spring capable of rotating for axial actuation (1043) and the relay transmission structure assembly (104) are driven by the prime motive end (101) to be in an idle rotating state before reaching a set rotational speed, and at the time reaching or exceeding the pre-set rotational speed a damping effect is generated through the centrifugal force combining type centrifugal clutch (1006) and the limit-torque sliding damping device (106) installed between the relay transmission structure assembly (104) and the static housing (107), so the coil-shaped spring capable of rotating for axial actuation (1043) is rotated and tightened to generate an axial actuation force, and causes the relay transmission structure assembly (104) to generate a relative axial movement, such that the relay output clutch structure (1051) installed in the relay transmission structure assembly (104) is driven to perform closing/opening operations with the output-end clutch structure (1052) so as to transmit rotary kinetic energy, and to force the recovering actuation spring (120) to be tightened;
   when the rotational driving torque from the prime motive end (101) to the output end (102) is no longer provided, through the releasing recovering force of the recovering actuation spring (120) the relay output clutch structure (1051) and the output-end clutch structure (1052) are disengaged and the coil-shaped spring capable of rotating for axial actuation (1043) is returned, thereby terminating the transmission of the rotary kinetic energy;
   moreover, when the rotational speed in which the centrifugal force combining type centrifugal clutch (1006) driven at the prime motive end (101) is greater or equal to its disengaging rotational speed, the centrifugal force combining type centrifugal clutch (1006) is in a disengaged state, such that the damping between the relay transmission structure assembly (104) and the static housing (107) is not provided, and the passive side of relay coupling structure of the relay transmission structure assembly (104) is moved by the recovering actuation spring (120) to be returned, thereby allowing the relay output clutch structure (1051) and the output-end clutch structure (1052) to be disengaged;
-- a limit-torque sliding damping device (106): composed by a mechanism device having limit-torque sliding damping effect with a restraining function while relative rotational movements are generated between the relay transmission structure assembly (104) and the static housing (107); and is installed between the centrifugal force combining type centrifugal clutch (1006)and the static housing (107); when the coil-shaped spring capable of rotating for axial actuation (1043) is applied with an angular displacement driving force of tightening by the prime motive end (101), through actions of the limit-torque sliding damping device (106), relative movements are generated in the relay transmission structure assembly (104);
   the structure includes: constituted by the mechanism device, which is through the mechanical force, the spring pre-stressing force, the electromagnetic force of electric excited coil, or the action force of permanent magnet for the limit-torque sliding damping device (106) including between solid and solid, or between solid and viscous fluid, or between viscous fluid and viscous fluid, or between solid and gaseous or liquidity fluids to generate sliding damping;
-- centrifugal force combining type centrifugal clutch (1006): configured by a centrifugal clutch structure device having the function of cutoff at static and low-speed, and installed between the relay transmission structure assembly (104) and the limit-torque sliding damping device (106), and when the active side of relay coupling structure is rotationally driven by the prime motive end (101) to reach a pre-set rotational speed, the centrifugal clutch (1006) is in an engaged state, so as to combine the relay transmission structure assembly (104) and the limit-torque sliding damping device (106) for generating the limit-torque sliding damping between the relay transmission structure assembly (104) and the static housing (107), thereby a relative movement is generated between the active side of relay coupling structure and the passive side of relay coupling structure combined in the relay transmission structure assembly (104);
-- a static housing (107): configured by a static housing structure for accommodating the centrifugal force combined with sliding damping type torque-actuated clutch;
-- a limiting structure (115): composed by a mechanism capable of limiting relative positions of the relay transmission structure assembly (104) and the prime motive end (101), and is combined with the rotary part of the prime motive end (101);
-- a recovering actuation spring (120): which is a spring device capable of being pressed for storing energy and being released for outputting energy, and is disposed between the relay output clutch structure (1051) and the output-end clutch structure (1052), and the normal state thereof is to separate the relay output clutch structure (1051) and the output-end clutch structure (1052), so as to terminate the transmission of the rotary kinetic energy; when the relay output clutch structure (1051) and the output-end clutch structure (1052) are driven so as to be engaged, the recovering actuation spring (120) is synchronously pre-pressed for being in an energy-storing state;
-- relay output clutch structure (1051): the relay output clutch structure (1051) is composed by a clutch function structure and is installed in the relay transmission structure assembly (104), when the coil-shaped spring capable of rotating for axial actuation (1043) is driven at the prime motive end (101), the relay output clutch structure (1051) and the relay transmission structure assembly (104) are driven by the coil-shaped spring capable of rotating for axial actuation (1043) having the relay coupling structure function and installed between the relay transmission structure assembly (104) and the prime motive end (101), so as to perform closing/opening operations with the output-end clutch structure (1052) for transmitting rotary kinetic energy and forcing the recovering actuation spring (120) to be tightened; when the rotational driving torque from the prime motive end (101) to the output end (102) is no longer provided, the relay output clutch structure (1051) and the output-end clutch structure (1052) are disengaged and the coil-shaped spring capable of rotating for axial actuation (1043) is returned through the releasing recovering force of the recovering actuation spring (120), thereby terminating the transmission of the rotary kinetic energy;
-- an out-put end clutch structure (1052): composed by a clutch function structure capable of performing closing/opening operations with the relay output clutch structure (1051) to transmit rotary kinetic energy, or being disengaged for terminating the transmission of the rotary kinetic energy, and the output-end clutch structure (1052) is connected to the output end (102);
-- the clutch structure of the relay output clutch structure (1051) and the output-end clutch structure (1052) consists of the friction-type clutch structure, the engaging-type clutch structure or the synchro-engaging clutch structure;
   In the centrifugal force combined with sliding damping type torque-actuated clutch of the present invention, the relay coupling structure installed in the relay transmission structure assembly (104) can be further composed by an axial compelling over running clutch;
   Where the centrifugal clutch is a cutting type, the a centrifugal force cutting type centrifugal clutch (1006) and a limit-torque sliding damping device (106) are installed between the relay transmission structure assembly (104) and the static housing (107); when the coil-shaped spring capable of rotating for axial actuation (1043) is processed with a tighten operation of angle displacement driving by the prime motive end (101), through a sliding damping effect generated by the centrifugal force cutting type centrifugal clutch (1006) being in an engaged state and the limit-torque sliding damping device (106) installed between the relay transmission structure assembly (104) and the static housing (107), the coil-shaped spring capable of rotating for axial actuation (1043) generates an axial actuation force for the relay transmission structure assembly (104) to generate a relative axial movement, such that the relay output clutch structure (1051) installed in the relay transmission structure assembly (104) is driven to perform closing/opening operations with the output-end clutch structure (1052) so as to transmit the rotary kinetic energy and to force the recovering actuation spring (120) being tightened, and when reaching a set rotational speed, the centrifugal force cutting type centrifugal clutch (1006) cuts the connection between the relay transmission structure assembly (104) and the static housing (107); meanwhile through the driving torque from the prime motive end (101) to the output end (102), the passive side of relay output coupling structure is continuously driven by the active side of relay coupling structure, so the relay transmission structure assembly (104) and the relay output clutch structure (1051) installed in the relay transmission structure assembly (104) are driven to perform closing/opening operations with the output-end clutch structure (1052) installed at the output end (102) so as to transmit the rotary kinetic energy and to force the recovering actuation spring (120) provided between the relay output clutch structure (1051) and the output-end clutch structure (1052) being tightened;
   when the rotational driving torque form the prime motive end (101) to the output end (102) is no longer provided, through the releasing recovering force of the recovering actuation spring (120) the relay output clutch structure (1051) and the output-end clutch structure (1052) are disengaged and the coil-shaped spring capable of rotating for axial actuation (1043) is returned, thereby terminating the transmission of the rotary kinetic energy;
-- a limit-torque sliding damping device (106): composed by a mechanism device having limit-torque sliding damping effect with a restraining function while relative rotational movements are generated between the relay transmission structure assembly (104) and the static housing (107), and is installed between the centrifugal force cutting type centrifugal clutch (1006)and the static housing (107); when the coil-shaped spring capable of rotating for axial actuation (1043) is applied with an angular displacement driving force of tightening operations by the prime motive end (101), through actions of the limit-torque sliding damping device (106), relative movements are generated in the relay transmission structure assembly (104);
   the structure includes: constituted by the mechanism device, which is through the mechanical force, the spring pre-stressing force, the electromagnetic force of electric excited coil, or the action force of permanent magnet for the limit-torque sliding damping device (106) including between solid and solid, or between solid and viscous fluid, or between viscous fluid and viscous fluid, or between solid and gaseous or liquidity fluids to generate sliding damping;
-- centrifugal force cutting type centrifugal clutch (1006): configured by a device having limit-torque damping function and being controlled by the centrifugal force to be in a cut state while reaching a set rotational speed and be in an engaged state while being static or in low speed so as to restrain the rotational motion between the relay transmission structure assembly (104) and the static housing (107), and is installed between the relay transmission structure assembly (104) and the limit-torque sliding damping device (106), when the coil-shaped spring capable of rotating for axial actuation (1043) is applied with a tightening angular displacement driving force by the prime motive end (101), with a sliding damping effect generated through the centrifugal force cutting type centrifugal clutch (1006) being combined with the limit-torque sliding damping device (106), the relay transmission structure assembly (104) generates a relative movement;
-- a static housing (107): configured by a static housing structure for accommodating the centrifugal force cutting off sliding damping type torque-actuated clutch;
-- a limiting structure (115): composed by a mechanism capable of limiting relative positions of the relay transmission structure assembly (104) and the prime motive end (101), and is combined with the rotary part of the prime motive end (101);
-- a recovering actuation spring (120): which is a spring device capable of being pressed for storing energy and being released for outputting energy, and is disposed between the relay output clutch structure (1051) and the output-end clutch structure (1052), and the normal state thereof is to separate the relay output clutch structure (1051) and the output-end clutch structure (1052), so as to terminate the transmission of the rotary kinetic energy; when the relay output clutch structure (1051) and the output-end clutch structure (1052) are driven so as to be engaged, the recovering actuation spring (120) is synchronously pre-pressed for being in an energy-storing state;
-- relay output clutch structure (1051): the relay output clutch structure (1051) is composed by a clutch function structure and is installed in the relay transmission structure assembly (104), when the coil-shaped spring capable of rotating for axial actuation (1043) is driven by the prime motive end (101), the relay output clutch structure (1051) and the relay transmission structure assembly (104) are driven by the coil-shaped spring capable of rotating for axial actuation (1043) having the relay coupling structure function and installed between the relay transmission structure assembly (104) and the prime motive end (101), so as to perform closing/opening operations with the output-end clutch structure (1052) for transmitting the rotary kinetic energy and forcing the recovering actuation spring (120) being tightened; when the rotational driving torque from the prime motive end (101) to the output end (102) is no longer provided, the relay output clutch structure (1051) and the output-end clutch structure (1052) are disengaged and the coil-shaped spring capable of rotating for axial actuation (1043) is returned through the releasing recovering force of the recovering actuation spring (120), thereby further terminating the transmission of the rotary kinetic energy;
-- an out-put end clutch structure (1052): composed by a clutch function structure capable of performing closing/opening operations with the relay output clutch structure (1051) to transmit rotary kinetic energy, or being disengaged for terminating the transmission of the rotary kinetic energy, and the output-end clutch structure (1052) is connected to the output end (102);
-- the clutch structure of the relay output clutch structure (1051) and the output-end clutch structure (1052) consists of the friction-type clutch structure, the engaging-type clutch structure or the synchro-engaging clutch structure;
   In the centrifugal force cutting off sliding damping type torque-actuated clutch of the present invention, the relay coupling structure installed in the relay transmission structure assembly (104) can be further composed by an axial compelling over running clutch;
   FIG 4 is a schematic structural view of one embodiment illustrating that the relay coupling structure installed in the relay transmission structure assembly (104) is composed by the axial compelling over running clutch.
   As shown in FIG. 4, it mainly consists of:
-- a prime motive end (101): composed by a rotational mechanism for outputting rotary kinetic energy; the prime motive end (101) is an active side of axial compelling over running clutch (1061), having the function of active side of relay input coupling structure, for driving the relay transmission structure assembly (104), the prime motive end (101) is installed with a limiting structure (115) for limiting relative positions of the relay transmission structure assembly (104) and the prime motive end (101);
-- an output end (102): composed by a rotational mechanism for outputting rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), the relay transmission structure assembly (104) is installed with an axial compelling over running clutch (1060) having the function of relay coupling structure, the axial compelling over running clutch (1060) has an active side of axial compelling over running clutch (1061) and a passive side of axial compelling over running clutch (1062) and middle rolling members (1063), a plurality of saw-shaped intervals are formed between the active side of axial compelling over running clutch (1061) and the passive side of axial compelling over running clutch (1062) for accommodating the middle rolling members (1063) so as to constitute the over running clutch function; a limit-torque sliding damping device (106) and a centrifugal force combining type centrifugal clutch (1006) are installed between the relay transmission structure assembly (104) and the static housing (107), when the axial compelling over running clutch (1060) is driven by the prime motive end (101) to be in an idle state before reaching a set rotational speed, and at the time reaching or exceeding the set rotational speed a damping effect is generated through the centrifugal force combining type centrifugal clutch (1006) and the limit-torque sliding damping device (106) installed between the relay transmission structure assembly (104) and the static housing (107), so the active side of axial compelling over running clutch (1061) applies the rotational driving torque to the passive side of axial compelling over running clutch (1062) via the middle running members (1063); before the middle rolling members (1063) are forced to be latched between the active side of axial compelling over running clutch (1061) and the passive side of axial compelling over running clutch (1062), the passive side of axial compelling over running clutch (1062) is compelled to be axially moved, so the relay transmission structure assembly (104) installed with the axial compelling over running clutch (1060) generates a relative movement for driving the relay output clutch structure (1051) and the output-end clutch structure (1052) installed in the relay transmission structure assembly (104) to perform opening/closing operations for transmitting the rotary kinetic energy and to force the recovering actuation spring (120) being tightened;
   when the rotational driving torque from the prime motive end (101) to the output end (102) is no longer provided, through the releasing recovering force of the recovering actuation spring (120) the relay output clutch structure (1051) and the output-end clutch structure (1052) are disengaged and the passive side of axial compelling over running clutch (1062) is returned, thereby terminating the transmission of the rotary kinetic energy;
   moreover, when the rotational speed in which the centrifugal force combining type centrifugal clutch (1006) driven at the prime motive end (101) is greater or equal to its disengaging rotational speed, the centrifugal force combining type centrifugal clutch (1006) is in a disengaged state, such that the damping between the relay transmission structure assembly (104) and the static housing (107) is not provided, and the passive side of relay coupling structure of the relay transmission structure assembly (104) is moved by the recovering actuation spring (120) to be returned, thereby allowing the relay output clutch structure (1051) and the output-end clutch structure (1052) to be disengaged;
-- a limit-torque sliding damping device (106): composed by a mechanism device having limit-torque sliding damping effect with a restraining function while relative rotational movements are generated between the relay transmission structure assembly (104) and the static housing (107); and is installed between the centrifugal force combining type centrifugal clutch (1006)and the static housing (107); when the active side of axial compelling over running clutch (1061) is rotationally driven by the prime motive end (101), through actions of the limit-torque sliding damping device (106), relative movements are generated between the active side of axial compelling over running clutch (1061) and the passive side of axial compelling over running clutch (1062);
   the structure includes: constituted by the mechanism device, which is through the mechanical force, the spring pre-stressing force, the electromagnetic force of electric excited coil, or the action force of permanent magnet for the limit-torque sliding damping device (106) including between solid and solid, or between solid and viscous fluid, or between viscous fluid and viscous fluid, or between solid and gaseous or liquidity fluids to generate sliding damping;
-- centrifugal force combining type centrifugal clutch (1006): configured by a centrifugal clutch structure device having the function of cutoff at static and low-speed, and installed between the relay transmission structure assembly (104) and the limit-torque sliding damping device (106), and when the active side of relay coupling structure is rotationally driven by the prime motive end (101) to reach a pre-set rotational speed, the centrifugal clutch (1006) is in an engaged state, so as to combine the relay transmission structure assembly (104) and the limit-torque sliding damping device (106) for generating the limit-torque sliding damping between the relay transmission structure assembly (104) and the static housing (107), thereby a relative movement is generated between the active side of relay coupling structure and the passive side of relay coupling structure combined in the relay transmission structure assembly (104);
-- a static housing (107): configured by a static housing structure for accommodating the centrifugal force combined with sliding damping type torque-actuated clutch;
-- a limiting structure (115): composed by a mechanism capable of limiting relative positions of the relay transmission structure assembly (104) and the prime motive end (101), and is combined with the rotary part of the prime motive end (101);
-- a recovering actuation spring (120): which is a spring device capable of being pressed for storing energy and being released for outputting energy, and is disposed between the relay output clutch structure (1051) and the output-end clutch structure (1052), and the normal state thereof is to separate the relay output clutch structure (1051) and the output-end clutch structure (1052), so as to terminate the transmission of the rotary kinetic energy; when the relay output clutch structure (1051) and the output-end clutch structure (1052) are driven so as to be engaged, the recovering actuation spring (120) is synchronously pre-pressed for being in an energy-storing state;
-- a relay output clutch structure (1051): the relay output clutch structure (1051) is composed by a clutch function structure and is installed in the relay transmission structure assembly (104), when the active side of axial compelling over running clutch (1061) is driven by the prime motive end (101), the passive side of axial compelling over running clutch (1062) installed in the relay transmission structure assembly (104) is axially driven so as to drive the relay transmission structure assembly (104) and the relay output clutch structure (1051) installed in the relay transmission structure assembly (104) for performing opening/closing operations with the output-end clutch structure (1052) for transferring rotary kinetic energy and forcing the recovering actuation spring (120) to be tightened; when the rotational driving torque from the prime motive end (101) to the output end (102) is no longer provided, the relay output clutch structure (1051) and the output-end clutch structure (1052) are disengaged and the passive side of axial compelling over running clutch (1062) is returned through the releasing recovering force of the recovering actuation spring (120), thereby terminating the transmission of the rotary kinetic energy;
-- an out-put end clutch structure (1052): composed by a clutch function structure capable of performing closing/opening operations with the relay output clutch structure (1051) to transmit rotary kinetic energy, or being disengaged for terminating the transmission of the rotary kinetic energy, and the output-end clutch structure (1052) is connected to the output end (102);
-- the clutch structure of the relay output clutch structure (1051) and the output-end clutch structure (1052) consists of the friction-type clutch structure, the engaging-type clutch structure or the synchro-engaging clutch structure;
   In the centrifugal force combined with sliding damping type torque-actuated clutch of the present invention, wherein the relay coupling structure installed in the relay transmission structure assembly (104) can be further composed by an axial relay clutch of the axial clutch transmission block having axial compelling pre-forced recovering.
   Where the centrifugal clutch is a cutting type centrifugal clutch, the centrifugal force cutting type centrifugal clutch (1006) and a limit-torque sliding damping device (106) are installed between the relay transmission structure assembly (104) and the static housing (107), when the axial compelling over running clutch (1060) is driven by the prime motive end (101), through a sliding damping effect generated by the centrifugal force cutting type centrifugal clutch (1006) being in an engaged state and the limit-torque sliding damping device (106) installed between the relay transmission structure assembly (104) and the static housing (107), the active side of axial compelling over running clutch (1061) applies rotational driving torque to the passive side of axial compelling over running clutch (1062) via the middle running members (1063); before the middle rolling members (1063) are forced to be latched between the active side of axial compelling over running clutch (1061) and the passive side of axial compelling over running clutch (1062), the passive side of axial compelling over running clutch (1062) is compelled to be axially moved, so the relay transmission structure assembly (104) installed with the axial compelling over running clutch (1060) generates a relative movement for driving the relay output clutch structure (1051) installed in the relay transmission structure assembly (104) to perform opening/closing operations with the output-end clutch structure (1052) so as to transmit the rotary kinetic energy and to force the recovering actuation spring (120) being tightened, and when reaching a set rotational speed, the centrifugal force cutting type centrifugal clutch (1006) cuts the connection between the relay transmission structure assembly (104) and the static housing (107); meanwhile through the driving torque from the prime motive end (101) to the output end (102), the passive side of relay output coupling structure is continuously driven by the active side of relay coupling structure, so the relay transmission structure assembly (104) and the relay output clutch structure (1051) installed in the relay transmission structure assembly (104) are driven to perform closing/opening operations with the output-end clutch structure (1052) installed at the output end (102) so as to transmit the rotary kinetic energy and to force the recovering actuation spring (120) provided between the relay output clutch structure (1051) and the output-end clutch structure (1052) being tightened;
   when the rotational driving torque from the prime motive end (101) to the output end (102) is no longer provided, through the releasing recovering force of the recovering actuation spring (120) the relay output clutch structure (1051) and the output-end clutch structure (1052) are disengaged and the passive side of axial compelling over running clutch (1062) is returned, thereby terminating the transmission of the rotary kinetic energy;
-- a limit-torque sliding damping device (106): composed by a mechanism device having limit-torque sliding damping effect with a restraining function while relative rotational movements are generated between the relay transmission structure assembly (104) and the static housing (107), and is installed between the centrifugal force cutting type centrifugal clutch (1006) and the static housing (107); when the active side of axial compelling over running clutch (1061) is rotationally driven by the prime motive end (101), through actions of the limit-torque sliding damping device (106), relative movements are generated between the active side of axial compelling over running clutch (1061) and the passive side of axial compelling over running clutch (1062);
   the structure includes: constituted by the mechanism device, which is through the mechanical force, the spring pre-stressing force, the electromagnetic force of electric excited coil, or the action force of permanent magnet for the limit-torque sliding damping device (106) including between solid and solid, or between solid and viscous fluid, or between viscous fluid and viscous fluid, or between solid and gaseous or liquidity fluids to generate sliding damping;
-- centrifugal force cutting type centrifugal clutch (1006): configured by a device having limit-torque damping function and being controlled by the centrifugal force to be in a cut state while reaching a set rotational speed and be in an engaged state while being static or in low speed so as to restrain the rotational motion between the relay transmission structure assembly (104) and the static housing (107), and is installed between the relay transmission structure assembly (104) and the limit-torque sliding damping device (106), when the active side of axial compelling over running clutch (1061) is driven by the prime motive end (101) to perform rotational driving, with a sliding damping effect of the limit-torque sliding damping device (106) being combined with the centrifugal force cutting type centrifugal clutch (1006) , a relative movement is generated between the active side of axial compelling over running clutch (1061) and the passive side of axial compelling over running clutch (1062);
-- a static housing (107): configured by a static housing structure for accommodating the centrifugal force cutting off sliding damping type torque-actuated clutch;
-- a limiting structure (115): composed by a mechanism capable of limiting relative positions of the relay transmission structure assembly (104) and the prime motive end (101), and is combined with the rotary part of the prime motive end (101);
-- a recovering actuation spring (120): which is a spring device capable of being pressed for storing energy and being released for outputting energy, and is disposed between the relay output clutch structure (1051) and the output-end clutch structure (1052), and the normal state thereof is to separate the relay output clutch structure (1051) and the output-end clutch structure (1052), so as to terminate the transmission of the rotary kinetic energy; when the relay output clutch structure (1051) and the output-end clutch structure (1052) are driven so as to be engaged, the recovering actuation spring (120) is synchronously pre-pressed for being in an energy-storing state;
-- a relay output clutch structure (1051): the relay output clutch structure (1051) is composed by a clutch function structure and is installed in the relay transmission structure assembly (104), when the active side of axial compelling over running clutch (1061) is driven by the prime motive end (101), the passive side of axial compelling over running clutch (1062) installed in the relay transmission structure assembly (104) is axially driven so as to drive the relay transmission structure assembly (104) and the relay output clutch structure (1051) installed in the relay transmission structure assembly (104) for performing opening/closing operations with the output-end clutch structure (1052) to transfer the rotary kinetic energy and force the recovering actuation spring (120) being tightened; when the rotational driving torque from the prime motive end (101) to the output end (102) is no longer provided, through the releasing recovering force of the recovering actuation spring (120), the relay output clutch structure (1051) and the output-end clutch structure (1052) are disengaged and the passive side of axial compelling over running clutch (1062) is returned, thereby further terminating the transmission of the rotary kinetic energy;
-- an out-put end clutch structure (1052): composed by a clutch function structure capable of performing closing/opening operations with the relay output clutch structure (1051) to transmit the rotary kinetic energy, or being disengaged for terminating the transmission of the rotary kinetic energy, and the output-end clutch structure (1052) is connected to the output end (102);
-- the clutch structure of the relay output clutch structure (1051) and the output-end clutch structure (1052) consists of the friction-type clutch structure, the engaging-type clutch structure or the synchro-engaging clutch structure;
   In the centrifugal force cutting off sliding damping type torque-actuated clutch of the present invention, wherein the relay coupling structure installed in the relay transmission structure assembly (104) can be further composed by an axial relay clutch of the axial clutch transmission block having axial compelling pre-forced recovering.

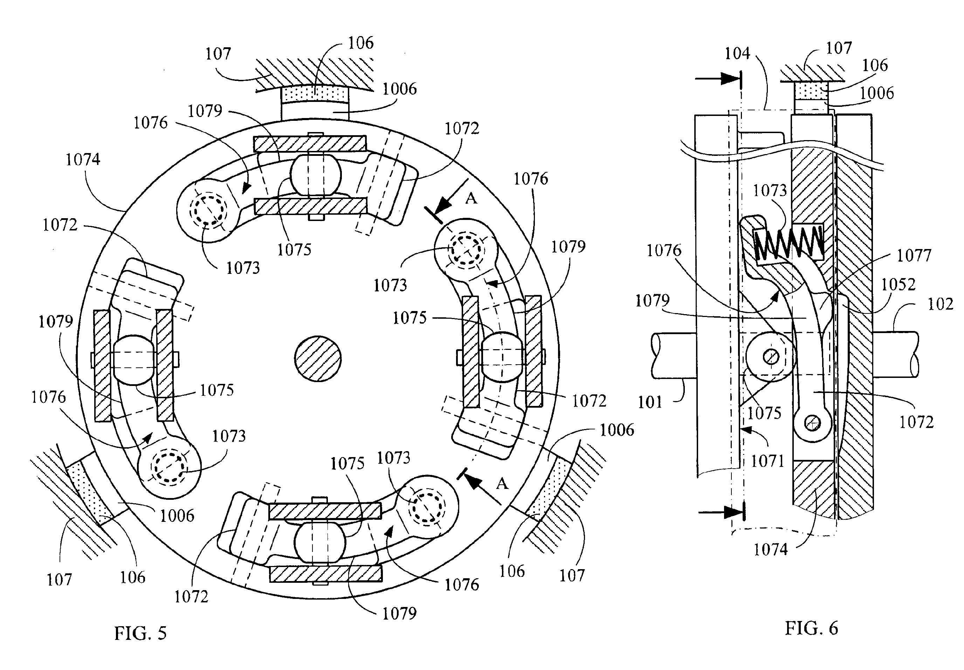

   FIG. 5 is a structural schematic view of one embodiment illustrating that the relay coupling structure installed in the relay transmission structure assembly (104) is composed by the axial relay clutch of the axial clutch transmission block having axial compelling pre-forced recovering.
   As shown in FIG. 5, it mainly consists of:
-- a prime motive end (101): composed by a rotational mechanism for inputting rotary kinetic energy; the prime motive end (101) is an axial relay clutch having the function of relay coupling structure, for driving the relay transmission structure assembly (104);
-- an output end (102): composed by a rotational mechanism for outputting rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), the relay transmission structure assembly (104) has an axial relay clutch which mainly consists of an active side of axial relay clutch (1071), an axial clutch transmission block (1072), an axial clutch transmission block recovering spring (1073), an axial relay clutch transmission board (1074), and a middle rolling member (1075); wherein the active side of axial relay clutch (1071) accommodating the middle rolling member (1075) is driven by the prime motive end (101), the middle rolling member (1075) is coupled to a passive side of axial relay clutch (1076) which is an obliquely compelled surface with respect to the axial clutch transmission block (1072), the axial clutch transmission block (1072) is installed on the axial relay clutch transmission board (1074), a limit-torque sliding damping device (106) and a centrifugal force combining type centrifugal clutch (1006) are installed between the axial relay clutch transmission board (1074) and the static housing (107), one end of the axial clutch transmission block (1072) is fastened on the axial relay clutch transmission board (1074), the other end of the axial clutch transmission block (1072) is served as a transmission end (1079), the passive side of axial relay clutch (1076) of the transmission end (1079) is an obliquely compelled surface allowing the middle rolling member (1075) to be coupled, the other surface of the transmission end (1079) is served as an axial clutch structure (1077), when the active side of axial relay clutch (1071) equipped with the middle rolling member (1075) by the prime motive end (101) to be in an idle state before reaching a set rotational speed, and at the time reaching or exceeding the set rotational speed the centrifugal force combining type centrifugal clutch (1006) installed between the relay transmission structure assembly (104) and the static housing (107) is in an engaged state so as to be combined with the limit-torque sliding damping device (106) for generating a damping effect, thereby the passive side of axial relay clutch (1076) which is an obliquely compelled surface with respect to the axial clutch transmission block (1072) is compelled to move by the middle rolling member (1075) installed at the active side of axial relay clutch (1071), and the axial clutch structure (1077) is further moved to be coupled with the output-end clutch structure (1052) of the output end (102) for transferring rotary kinetic energy, when the rotational driving torque from the prime motive end (101) to the output end (102) is no longer provided, through the elasticity of the axial clutch transmission block (1072) and/or the releasing recovering force of the axial clutch transmission block recovering spring (1073) installed between the axial relay clutch transmission board (1074) and the middle rolling member (1075), such that the axial clutch structure (1077) of the axial clutch transmission block (1072) and the output-end clutch structure (1052) of the output end (102) are disengaged, and the axial relay clutch transmission board (1074) is returned, thereby terminating the transmission of the rotary kinetic energy;
   moreover, when the rotational speed in which the centrifugal force combining type centrifugal clutch (1006) driven at the prime motive end (101) is smaller or equal to its disengaging rotational speed, the centrifugal force combining type centrifugal clutch (1006) is in a disengaged state, such that the damping between the relay transmission structure assembly (104) and the static housing (107) is not provided, and the passive side of relay coupling structure of the relay transmission structure assembly (104) is moved by the axial clutch transmission block recovering spring (1073) to be returned, thereby allowing the axial clutch structure (1077) and the output-end clutch structure (1052) to be disengaged;
-- a limit-torque sliding damping device (106): composed by a mechanism device having limit-torque sliding damping effect with a restraining function while relative rotational movements are generated between the axial relay clutch transmission board (1074) and the static housing (107), and is installed between the static housing (107) and the axial relay clutch transmission board (1074), when the active side of axial relay clutch (1071) is rotationally driven by the prime motive end (101), through actions of the limit-torque sliding damping device (106), during the active side of axial relay clutch (1071) performing rotational driving to the axial relay clutch transmission board (1074), the axial clutch transmission block (1072) and the axial clutch structure (1077) of the axial relay clutch transmission board (1074) is compelled to move by the middle rolling member (1075) driven by the active side of axial relay clutch (1071)to generate relative movements;
   the structure includes: constituted by the mechanism device, which is through the mechanical force, the spring pre-stressing force, the electromagnetic force of electric excited coil, or the action force of permanent magnet for the limit-torque sliding damping device (106) including between solid and solid, or between solid and viscous fluid, or between viscous fluid and viscous fluid, or between solid and gaseous or liquidity fluids to generate sliding damping;
-- centrifugal force combining type centrifugal clutch (1006): configured by a centrifugal clutch structure device having the function of cutoff at static and low-speed, and installed between the axial relay clutch transmission board (1074) and the limit-torque sliding damping device (106), and when the active side of relay coupling structure is driven by the prime motive end (101) to perform rotationally driving to reach a set rotational speed, the centrifugal clutch (1006) is in an engaged state, so as to combine the axial relay clutch transmission board (1074) and the limit-torque sliding damping device (106) for generating limit-torque sliding damping between the axial relay clutch transmission board (1074) and the static housing (107), thereby a relative movement is generated between the active side of relay coupling structure and the passive side of relay coupling structure combined in the relay transmission structure assembly (104);
-- a static housing (107): configured by a static housing structure for accommodating the centrifugal force combined with sliding damping type torque-actuated clutch;
-- an output-end clutch structure (1052): the output-end clutch structure (1052) is composed by a clutch function structure and is connected to the output end (102) to be served to perform opening/closing operations with the axial clutch structure (1077) of the transmission end (1079) of the axial clutch transmission block (1072) of the axial relay clutch transmission board (1074) for transferring rotary kinetic energy, or in a disengaged state for terminating the transmission of the rotary kinetic energy;
-- the clutch structure of the relay output clutch structure (1051) and the output-end clutch structure (1052) consists of the friction-type clutch structure, the engaging-type clutch structure or the synchro-engaging clutch structure;
-- a middle rolling member (1075): which can be replaced by rolling balls, cone-shaped cylinders, or spherical or arc-shaped protrusions;
   In the centrifugal force combined with sliding damping type torque-actuated clutch of the present invention, the relay output coupling structure installed in the relay transmission structure assembly (104) can be further composed by the radial relay clutch of the radial clutch transmission block having radial compelling pre-forced recovering;
   Where the centrifugal clutch is a cutting type centrifugal clutch, the -- centrifugal force cutting type centrifugal clutch (1006): configured by a device having limit-torque damping function and being controlled by the centrifugal force to be in a cut state while reaching a set rotational speed and be in an engaged state while being static or in low speed so as to restrain the rotational motion between the axial relay clutch transmission board (1074) and the static housing (107), and is installed between the axial relay clutch transmission board (1074) and the limit-torque sliding damping device (106), when the active side of axial relay clutch (1071) is rotationally driven by the prime motive end (101), with a sliding damping effect of the limit-torque sliding damping device (106) being combined with the centrifugal force cutting type centrifugal clutch (1006), the middle rolling member (1075) driven by the active side of axial relay clutch (1071) compels the axial clutch transmission block (1072) of the axial relay clutch transmission board (1074) and the axial clutch structure (1077) to generate a relative movement while the active side of axial relay clutch (1071) performs rotationally driving to the axial relay clutch transmission board (1074);
-- a static housing (107): configured by a static housing structure for accommodating the centrifugal force cutting off sliding damping type torque-actuated clutch;
-- an output-end clutch structure (1052): the output-end clutch structure (1052) is composed by a clutch function structure and is connected to the output end (102) to be served to perform opening/closing operations with the axial clutch structure (1077) of the transmission end (1079) of the axial clutch transmission block (1072) of the axial relay clutch transmission board (1074) for transferring the rotary kinetic energy, or in a disengaged state for terminating the transmission of the rotary kinetic energy;
-- the clutch structure of the axial clutch structure (1077) and the output-end clutch structure (1052) consists of the friction-type clutch structure, the engaging-type clutch structure or the synchro-engaging clutch structure;
-- a middle rolling member (1075): which can be replaced by rolling balls, cone-shaped cylinders, or spherical or arc-shaped protrusions;
   In the centrifugal force cutting off sliding damping type torque-actuated clutch of the present invention, the relay output coupling structure installed in the relay transmission structure assembly (104) can be further composed by a radial relay clutch of the radial clutch transmission block having radial compelling pre-forced recovering;
   FIG. 6 is a cross sectional view of FIG 5 intersected along an A-A line.

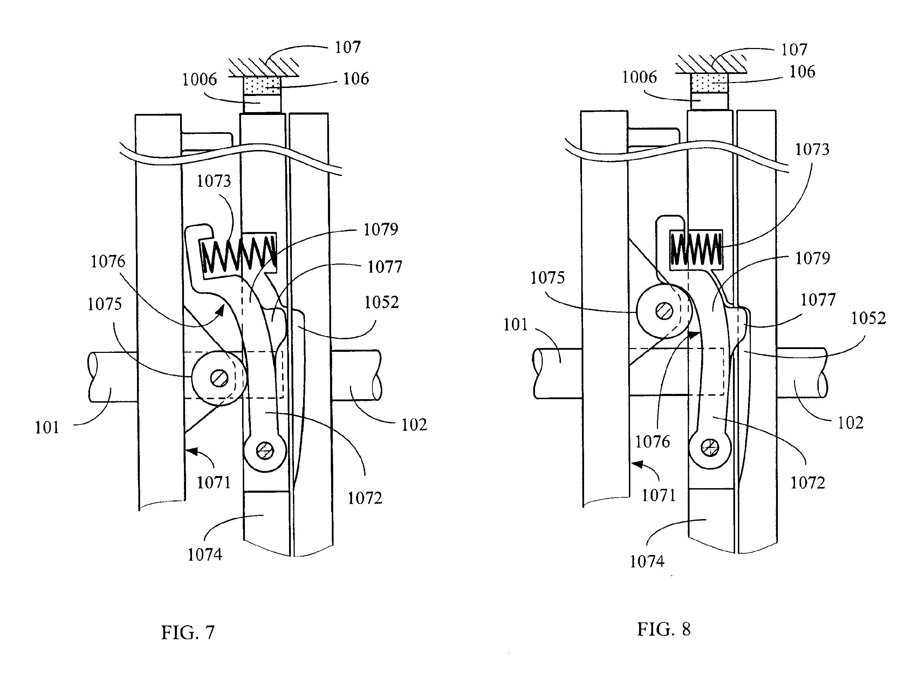

   FIG. 7 is a schematic view illustrating the disengaged state of the axial clutch structure (1077) and the output-end clutch structure (1052) as shown in FIG. 5.
   FIG. 8 is a schematic view illustrating the engaged state of the axial clutch structure (1077) and the output-end clutch structure (1052) as shown in FIG. 5.

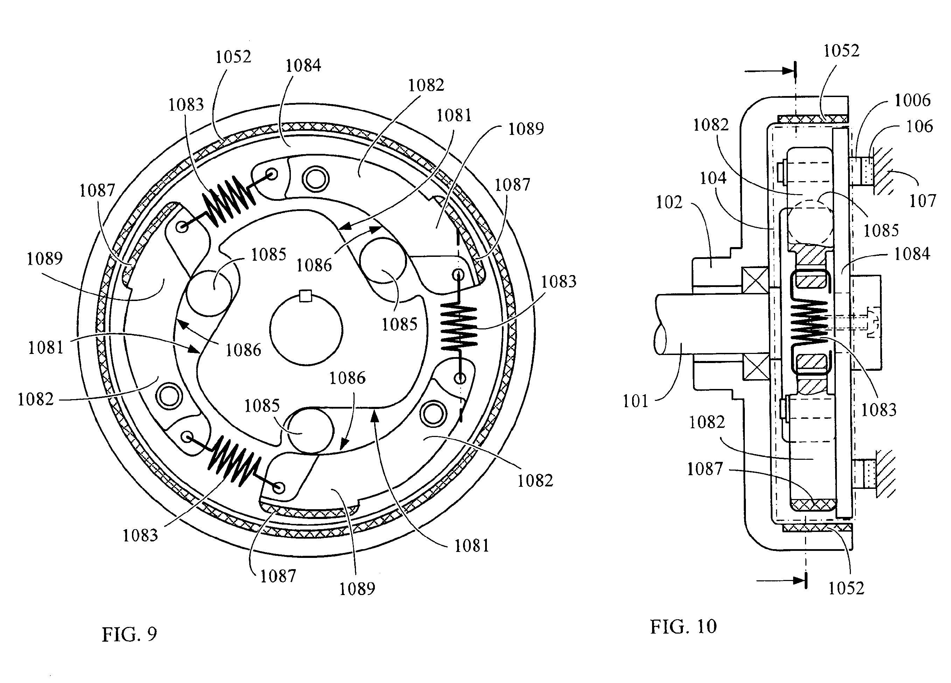

   FIG. 9 is a schematic structural view of one embodiment illustrating that the relay coupling structure and the relay outputting structure installed in the relay transmission structure assembly (104) is composed by the radial relay clutch of the radial clutch transmission block having radial compelling pre-forced recovering.
   As shown in FIG. 9, it mainly consists of:
-- a prime motive end (101): composed by a rotational mechanism for inputting the rotary kinetic energy; the prime motive end (101) is a radial relay clutch constituting the function of relay coupling structure, for driving the relay transmission structure assembly (104);
-- an output end (102): composed by a rotational mechanism for outputting the rotary kinetic energy; the annular interior of the output end (102) is installed with an output-end clutch structure (1052), and is controlled by the output-end clutch structure (1052);
-- a relay transmission structure assembly (104): the relay transmission structure assembly (104) is installed between the prime motive end (101) and the output end (102), the three components are arranged as a concentric annular structure, the relay transmission structure assembly (104) has a radial relay clutch which mainly consists of an active side of radial relay clutch (1081), a radial clutch transmission block (1082), a radial clutch transmission block recovering spring (1083), a radial relay clutch transmission board (1084), and a middle rolling member (1085); wherein the active side of radial relay clutch (1081) accommodating the middle rolling member (1085) is driven by the prime motive end (101), the middle rolling member (1085) is coupled to a passive side of radial relay clutch (1086) which is an obliquely compelled surface with respect to the radial clutch transmission block (1082), the radial clutch transmission block (1082) is installed on the radial relay clutch transmission board (1084), a limit-torque sliding damping device (106) and a centrifugal force combining type centrifugal clutch (1006) are installed between the radial relay clutch transmission board (1084) and the static housing (107), one end of the radial clutch transmission block (1082) is fastened on the radial relay clutch transmission board (1084), the other end of the radial clutch transmission block (1082) is served as a transmission end (1089), the passive side of radial relay clutch (1086) of the transmission end (1089) is an obliquely compelled surface allowing the middle rolling member (1085) to be coupled, the other surface of the transmission end (1089) is served as a radial clutch structure (1087), when the active side of radial relay clutch (1081) equipped with the middle rolling member (1085) is driven by the prime motive end (101) to be in an idle state before reaching a set rotational speed, and at the time reaching or exceeding the set rotational speed the centrifugal force combining type centrifugal clutch (1006) installed between the relay transmission structure assembly (104) and the static housing (107) is in an engaged state so as to be combined with the limit-torque sliding damping device (106) for generating a damping effect, thereby the passive side of radial relay clutch (1086) which is an obliquely compelled surface with respect to the radial clutch transmission block (1082) is compelled to move by the middle rolling member (1085) installed at the active side of radial relay clutch (1081), and the radial clutch structure (1087) is further moved to be coupled with the output-end clutch structure (1052) of the output end (102) for transferring rotary kinetic energy;
   when the rotational driving torque from the prime motive end (101) to the output end (102) is no longer provided, through the elasticity of the radial clutch transmission block (1082) and/or the releasing recovering force of the radial clutch transmission block recovering spring (1083) installed between the radial relay clutch transmission board (1084) and the middle rolling member (1085), such that the radial clutch structure (1087) of the radial clutch transmission block (1082) and the output-end clutch structure (1052) of the output end (102) are disengaged, and the radial relay clutch transmission board (1084) is returned, thereby terminating the transmission of the rotary kinetic energy;
   moreover, when the rotational speed in which the centrifugal force combining type centrifugal clutch (1006) driven at the prime motive end (101) is smaller or equal to its disengaging rotational speed, the centrifugal force combining type centrifugal clutch (1006) is in a disengaged state, such that the damping between the relay transmission structure assembly (104) and the static housing (107) is not provided, and the passive side of relay coupling structure of the relay transmission structure assembly (104) is moved by the radial clutch transmission block recovering spring (1083) to be returned, thereby allowing the radial clutch structure (1087) and the output-end clutch structure (1052) to be disengaged;
-- a limit-torque sliding damping device (106): composed by a mechanism device having limit-torque sliding damping effect with a restraining function while relative rotational movements are generated between the radial relay clutch transmission board (1084) and the static housing (107), and is installed between the static housing (107) and the radial relay clutch transmission board (1084), when the active side of radial relay clutch (1081) is rotationally driven by the prime motive end (101), through actions of the limit-torque sliding damping device (106), during the active side of radial relay clutch (1081) performing rotational driving to the radial relay clutch transmission board (1084), the radial clutch transmission block (1082) and the radial clutch structure (1087) of the radial relay clutch transmission board (1084) is compelled to move by the middle rolling member (1085) driven by the active side of radial relay clutch (1081) to generate relative movements;
   the structure includes: constituted by the mechanism device, which is through the mechanical force, the spring pre-stressing force, the electromagnetic force of electric excited coil, or the action force of permanent magnet for the limit-torque sliding damping device (106) including between solid and solid, or between solid and viscous fluid, or between viscous fluid and viscous fluid, or between solid and gaseous or liquidity fluids to generate sliding damping;
-- centrifugal force combining type centrifugal clutch (1006): configured by a centrifugal clutch structure device having the function of cutoff at static and low-speed, and installed between the radial relay clutch transmission board (1084) and the limit-torque sliding damping device (106), and when the active side of relay coupling structure is driven by the prime motive end (101) to perform rotationally driving to reach a set rotational speed, the centrifugal clutch (1006) is in an engaged state, so as to combine the radial relay clutch transmission board (1084) and the limit-torque sliding damping device (106) for generating limit-torque sliding damping between the radial relay clutch transmission board (1084) and the static housing (107), thereby a relative movement is generated between the active side of relay coupling structure and the passive side of relay coupling structure combined in the relay transmission structure assembly (104);
-- a static housing (107): configured by a static housing structure for accommodating the centrifugal force combined with sliding damping type torque-actuated clutch;
-- an output-end clutch structure (1052): the output-end clutch structure (1052) is composed by a clutch function structure and is connected to the output end (102) to be served to perform opening/closing operations with the radial clutch structure (1087) of the transmission end (1089) of the radial clutch transmission block (1082) of the radial relay clutch transmission board (1084) for transferring rotary kinetic energy, or in a disengaged state for terminating the transmission of the rotary kinetic energy;
-- the clutch structure of the relay output clutch structure (1051) and the output-end clutch structure (1052) consists of the friction-type clutch structure, the engaging-type clutch structure or the synchro-engaging clutch structure;
-- a middle rolling member (1085): which can be replaced by rolling balls, cone-shaped cylinders, or spherical or arc-shaped protrusions;
   Where the centrifugal clutch is a cutting type centrifugal clutch, the centrifugal force cutting type centrifugal clutch (1006) is configured by a device having limit-torque damping function and being controlled by centrifugal force to be in a cut state while reaching a set rotational speed and be in an engaged state while being static or in low speed so as to restrain the rotational motion between the radial relay clutch transmission board (1084) and the static housing (107), and is installed between the radial relay clutch transmission board (1084) and the limit-torque sliding damping device (106), when the active side of radial relay clutch (1081) is rotationally driven by the prime motive end (101), with a sliding damping effect of the limit-torque sliding damping device (106) being combined with the centrifugal force cutting type centrifugal clutch (1006), the middle rolling member (1085) driven by the active side of radial relay clutch (1081) compels the radial clutch transmission block (1082) of the radial relay clutch transmission board (1084) and the radial clutch structure (1087) to generate a relative movement while the active side of radial relay clutch (1081) performs rotationally driving to the radial relay clutch transmission board (1084);
-- a static housing (107): configured by a static housing structure for accommodating the centrifugal force cutting off sliding damping type torque-actuated clutch;
-- an output-end clutch structure (1052): the output-end clutch structure (1052) is composed by a clutch function structure and is connected to the output end (102) to be served to perform opening/closing operations with the radial clutch structure (1087) of the transmission end (1089) of the radial clutch transmission block (1082) of the radial relay clutch transmission board (1084) for transferring rotation kinetic energy, or in a disengaged state for terminating the transmission of the rotary kinetic energy;
-- the clutch structure of the radial clutch structure (1087) and the output-end clutch structure (1052) consists of the friction-type clutch structure, the engaging-type clutch structure or the synchro-engaging clutch structure;
-- a middle rolling member (1085): which can be replaced by rolling balls, cone-shaped cylinders, or spherical or arc-shaped protrusions;

FIG. 10 is a cross sectional view of FIG. 9.
For the centrifugal force sliding damping type torque-actuated clutch of the present invention, it can be composed by two sets of centrifugal force sliding damping type torque-actuated clutches and having the same prime motive end (101), including:
1. two sets of centrifugal force combined with sliding damping type clutches actuated by torque both transmitting in the axial direction, having different operation directions and having the same prime motive end (101);
2. two sets of centrifugal force combined with sliding damping type clutches actuated by torque both transmitting in the axial direction, having the same operation direction and having the same prime motive end (101);
3. two sets of centrifugal force combined with sliding damping type clutches actuated by torque both transmitting in the radial direction, having different operation directions and having the same prime motive end (101);
4. two sets of centrifugal force combined with sliding damping type clutches actuated by torque both transmitting in the radial direction, having the same operation direction and having the same prime motive end (101);
5. two sets of centrifugal force combined with sliding damping type clutches actuated by torque in which one set transmitting in the radial direction and the other transmitting in the axial direction, having different operation directions and having the same prime motive end (101);
6. two sets of centrifugal force combined with sliding damping type clutches actuated by torque in which one set transmitting in the radial direction and the other transmitting in the axial direction, having the same operation direction and having the same prime motive end (101).

For the centrifugal force cutting off sliding damping type torque-actuated clutch of the present invention, it can be composed by two sets of centrifugal force cutting off sliding damping type torque-actuated clutches and having the same prime motive end (101), including:
1. two sets of centrifugal force cutting off sliding damping type clutches actuated by torque both transmitting in the axial direction, having different operation directions and having the same prime motive end (101);
2. two sets of centrifugal force cutting off sliding damping type clutches actuated by torque both transmitting in the axial direction, having the same operation direction and having the same prime motive end (101);
3. two sets of centrifugal force cutting off sliding damping type clutches actuated by torque both transmitting in the radial direction, having different operation directions and having the same prime motive end (101);
4. two sets of centrifugal force cutting off sliding damping type clutches actuated by torque both transmitting in the radial direction, having the same operation direction and having the same prime motive end (101);
5. two sets of centrifugal force cutting off sliding damping type clutches actuated by torque in which one set transmitting in the radial direction and the other transmitting in the axial direction, having different operation directions and having the same prime motive end (101);
6. two sets of centrifugal force cutting off sliding damping type clutches actuated by torque in which one set transmitting in the radial direction and the other transmitting in the axial direction, having the same operation direction and having the same prime motive end (101).

According to one aspect of the present invention, a centrifugal force sliding damping type clutch actuated by torque capable of controlling a clutch device to perform operations of coupling or disengaging with the driving torque comprises a relay transmission structure assembly (104) installed between a rotary prime motive end (101) and an output end clutch structure (1052) installed at an output end (102), the relay transmission structure assembly (104) being installed with a relay coupling structure (204) having an active side and a passive side, a limit torque sliding damping device (106) and a centrifugal force combining type centrifugal clutch (1006) installed between the relay transmission structure assembly (104) and the static housing (107).

According to one aspect of the present invention, a centrifugal force cutting off sliding damping type torque actuated clutch capable of controlling a clutch device to perform operations of coupling or disengaging with the driving torque comprises a relay transmission structure assembly (104) installed between a rotary prime motive end (101) and an output end clutch structure (1052) installed at an output end (102), the relay transmission structure assembly (104) is installed with a relay coupling structure (204) having an active side and a passive side, and a centrifugal force cutting type centrifugal clutch (1006) and a limit-torque sliding damping device (106) are installed between the relay transmission structure assembly (104) and the static housing (107).

## Claims

1. A centrifugal force sliding damping type clutch actuated by torque comprising:
a clutch device,
a relay transmission structure assembly (104),
a rotary prime motive end (101),
an output-end clutch structure (1052),
a relay coupling structure (204),
a limit-torque sliding damping device (106),
a centrifugal clutch (1006),
a recovering actuation spring (120),
wherein the centrifugal force sliding damping type clutch actuated by torque is capable of controlling a clutch device to perform operations of coupling or disengaging with the driving torque, and a relay transmission structure assembly (104) between a rotary prime motive end (101) and an output-end clutch structure (1052) is installed at an output end (102), the relay transmission structure assembly (104) is installed with a relay coupling structure (204) having an active side of relay coupling structure and a passive side of relay coupling structure, the prime motive end (101) is provided with a limiting structure (115) for limiting relative positions of the relay transmission structure assembly (104) and the prime motive end (101);
a limit-torque sliding damping device (106) and a centrifugal clutch (1006) are installed between the relay transmission structure assembly (104) and the static housing (107) and is rotated in a first rotational direction at the prime motive end (101) to drive the active side of relay coupling structure of the relay coupling structure (204) installed in the relay transmission structure assembly (104) to be in an idle rotating state before reaching a pre-set rotational speed, and at the time reaching or exceeding the pre-set rotational speed the centrifugal clutch (1006) installed between the relay transmission structure assembly (104) and the static housing (107) turns to be in an engaged state so as to be combined with the limit-torque sliding damping device (106) for generating a sliding damping effect, such that the passive side of relay output coupling structure is driven by the active side of relay coupling structure to move, and the relay transmission structure assembly (104) and a relay output clutch structure (1051) installed in the relay transmission structure assembly (104) is driven to perform closing/opening operations with the output-end clutch structure (1052) installed at the output end (102) so as to transmit rotary kinetic energy, and to force the recovering actuation spring (120) provided between the relay output clutch structure (1051) and the output-end clutch structure (1052) to be tightened;
when the rotational driving torque at the prime motive end (101) is no longer provided, the relay transmission structure assembly (104) is returned and the relay output clutch structure (1051) and the output-end clutch structure (1052) are disengaged through actions of the recovering actuation spring (120), thereby the output end (102) is released;
moreover, when the rotational speed in which the centrifugal clutch (1006) driven at the prime motive end (101) is greater or equal to its disengaging rotational speed, the centrifugal clutch (1006) is in a disengaged state, such that the damping between the relay transmission structure assembly (104) and the static housing (107) is not provided, and the passive side of relay coupling structure of the relay transmission structure assembly (104) is moved by the recovering actuation spring (120) to be returned, thereby the relay output clutch structure (1051) and the output-end clutch structure (1052) are disengaged.

2. The centrifugal force sliding damping type clutch actuated by torque according to claim 1, wherein the centrifugal clutch (1006) is one of a cutting off type and a combining type centrifugal clutch.

3. The centrifugal force sliding damping type clutch actuated by torque as claimed in claim 1 or 2, wherein it consists of:
-- a prime motive end (101): composed by a rotational mechanism for inputting rotary kinetic energy; the prime motive end (101) is served to drive an active side of relay coupling structure of a relay coupling structure (204) installed in a relay transmission structure assembly (104), the prime motive end (101) is installed with a limiting structure (115) for limiting relative positions of the relay transmission structure assembly (104) and the prime motive end (101);
-- an output end (102): composed by a rotational mechanism for outputting rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), and is capable of performing rotational driving and axial movements, the relay transmission structure assembly (104) is provided with a relay coupling structure (204) driven by the prime motive end (101), the relay coupling structure (204) has an active side of relay coupling structure and a passive side of relay coupling structure coaxially coupled and interacted with the active side, a limit-torque sliding damping device (106) and a cen trifugal clutch (1006) are installed between the mentioned transmission structure assembly (104) and the static housing (107), when the active side of the relay coupling structure is driven by the prime motive end (101) to be in an idle rotating state before reaching a pre-set rotational speed, and at the time reaching or exceeding the pre-set rotational speed the centrifugal clutch (1006) installed between the relay transmission structure assembly (104) and the static housing (107) turns to be in an engaged state so as to be combined with the limit-torque sliding damping device (106) for generating a damping effect, thereby applying the rotational drive torque onto the passive side of relay coupling structure to move the passive side of relay coupling structure, and further to cause the relay transmission structure assembly (104) generating a relative movement, so as to drive the relay output clutch structure (1051) installed in the relay transmission structure assembly (104) to perform closing/opening operations with an output-end clutch structure (1052) for transmitting rotary kinetic energy, and forcing a recovering actuation spring (120) to be tightened;
when the rotational driving torque from the prime motive end (101) to the output end (102) is no longer provided, the relay output clutch structure (1051) and the output-end clutch structure (1052) are disengaged and the passive side of relay coupling structure is returned through a releasing recovering effect provided by the recovering actuation spring (120), thereby terminating the transmission of the rotary kinetic energy;
moreover, when the rotational speed in which the centrifugal clutch (1006) driven at the prime motive end (101) is greater or equal to its disengaging rotational speed, the centrifugal clutch (1006) is in a disengaged state, such that the damping between the relay transmission structure assembly (104) and the static housing (107) is not provided, and the passive side of relay coupling structure of the relay transmission structure assembly (104) is moved by the recovering actuation spring (120) to be returned, thereby allowing the relay output clutch structure (1051) and the output-end clutch structure (1052) to be disengaged;
-- a limit-torque sliding damping device (106): composed by a mechanism device having limit-torque sliding damping effect with a restraining function while relative rotational movements are generated between the relay transmission structure assembly (104) and the static housing (107); and is installed between the centrifugal clutch (1006) and the static housing (107), so through actions of the limit-torque sliding damping device (106), relative movements are generated between the active side of relay coupling structure and the passive side of relay coupling structure combined in the relay transmission structure assembly (104) when the active side of relay coupling structure is rotationally driven by the prime motive end (101);
the structure includes: constituted by the mechanism device, which is through the mechanical force, the spring pre-stressing force, the electromagnetic force of electric excited coil, or the action force of permanent magnet for the limit-torque sliding damping device (106) including between solid and solid, or between solid and viscous fluid, or between viscous fluid and viscous fluid, or between solid and gaseous or liquidity fluids to generate sliding damping;
-- centrifugal clutch (1006): configured by a centrifugal clutch structure device having the function of cutoff at static and low-speed, and installed between the relay transmission structure assembly (104) and the limit-torque sliding damping device (106), and when the active side of relay coupling structure is rotationally driven by the prime motive end (101) to reach a pre-set rotational speed, the centrifugal clutch (1006) is in an engaged state, so as to combine the relay transmission structure assembly (104) and the limit-torque sliding damping device (106) for generating the limit-torque sliding damping between the relay transmission structure assembly (104) and the static housing (107), thereby a relative movement is generated between the active side of relay coupling structure and the passive side of relay coupling structure combined in the relay transmission structure assembly (104);
--a static housing (107): configured by a static housing structure for accommodating the centrifugal force combined with sliding damping type torque-actuated clutch;
-- a limiting structure (115): composed by a mechanism capable of limiting relative positions of the relay transmission structure assembly (104) and the prime motive end (101), and is combined with the rotary part of the prime motive end (101);
--a recovering actuation spring (120): which is a spring device capable of being pressed for storing energy and being released for outputting energy, and disposed between the relay output clutch structure (1051) and the output-end clutch structure (1052), and the normal state thereof is to separate the relay output clutch structure (1051) and the output-end clutch structure (1052), so as to terminate the transmission of the rotary kinetic energy; when the relay output clutch structure (1051) and the output-end clutch structure (1052) are driven so as to be engaged, the recovering actuation spring (120) is synchronously pre-pressed for being in an energy-storing state;
--a relay output clutch structure (1051): the relay output clutch structure (1051) is composed by a clutch function structure and is installed in the relay transmission structure assembly (104), when the active side of relay coupling structure is driven by the prime motive end (101), the relay output clutch structure (1051) and the relay transmission structure assembly (104) are driven by the active side of relay coupling structure of the relay coupling structure (204), for performing closing/opening operations with the output-end clutch structure (1052) so as to transmit rotary kinetic energy, when the driving force from the prime motive end (101) to the output end (102) is no longer provided, the relay output clutch structure (1051) and the output-end clutch structure (1052) are disengaged through the releasing elastic force of the recovering actuation spring (120), thereby terminating the transmission of the rotary kinetic energy;
--an output-end clutch structure (1052): composed by a clutch function structure capable of performing closing/opening operations with the relay output clutch structure (1051) to transmit rotary kinetic energy, or being disengaged for terminating the transmission of the rotary kinetic energy, and the output-end clutch structure (1052) is connected to the output end (102);
--the clutch structure of the relay output clutch structure (1051) and the output-end clutch structure (1052) consists of the friction-type clutch structure, the engaging-type clutch structure or the synchro-engaging clutch structure.

4. The centrifugal force sliding damping type clutch actuated by torque as claimed in any one of the preceding claims, wherein the relay coupling structure installed in the relay transmission structure assembly (104) is further composed by a screw rod structure (1041) and a screw nut structure (1042), and it consists of:
-- a prime motive end (101): composed by a rotational mechanism for inputting rotary kinetic energy; the prime motive end (101) is served to drive an active side of relay coupling structure of a relay coupling structure (204) installed in a relay transmission structure assembly (104), the prime motive end (101) is installed with a limiting structure (115) for limiting relative positions of the relay transmission structure assembly (104) and the prime motive end (101);
-- an output end (102): composed by a rotational mechanism for outputting rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), and is capable of performing rotational driving and axial movements, the relay transmission structure assembly (104) is installed with a relay coupling structure driven by the prime motive end (101), the relay coupling structure has the function of the active side of relay coupling structure composed by the screw rod structure (1041) and the function of the passive side of relay coupling structure composed by the screw nut structure (1042), the screw rod structure (1041) and the screw nut structure (1042) are coaxially coupled and interacted, the mentioned passive side of relay coupling structure composed by the screw nut structure (1042) is connected to the relay transmission structure assembly (104), a limit-torque sliding damping device (106) and a centrifugal clutch (1006) are installed between the relay transmission structure assembly (104) and the static housing (107), when the screw rod structure (1041) is driven by the prime motive end (101) to be in an idle rotating state before reaching a set rotational speed, and at the time reaching or exceeding the pre-set rotational speed the centrifugal clutch (1006) installed between the relay transmission structure assembly (104) and the static housing (107) turns to be in an engaged state so as to be combined with the limit-torque sliding damping device (106) for generating a damping effect, thereby applying the rotational drive torque onto the screw nut structure (1042) to move, and further to cause the relay transmission structure assembly (104) connected with the screw nut structure (1042) generating a relative axial movement for driving the relay output clutch structure (1051) installed in the relay transmission structure assembly (104) to perform closing/opening operations with the output-end clutch structure (1052) for transmitting rotary kinetic energy, and forcing the recovering actuation spring (120) to be tightened;
when the rotational driving torque from the prime motive end (101) to the output end (102) is no longer provided, the relay output clutch structure (1051) and the output-end clutch structure (1052) are disengaged and the screw nut structure (1042) is returned through the releasing recovering effect provided by the recovering actuation spring (120), thereby terminating the transmission of the rotary kinetic energy;
moreover, when the rotational speed in which the centrifugal clutch (1006) driven at the prime motive end (101) is greater or equal to its disengaging rotational speed, the centrifugal clutch (1006) is in a disengaged state, such that the damping between the relay transmission structure assembly (104) and the static housing (107) is not provided, and the passive side of relay coupling structure of the relay transmission structure assembly (104) is moved by the recovering actuation spring (120) to be returned, thereby allowing the relay output clutch structure (1051) and the output-end clutch structure (1052) to be disengaged;
-- a limit-torque sliding damping device (106): composed by a mechanism device having limit-torque sliding damping effect with a restraining function while relative rotational movements are generated between the relay transmission structure assembly (104) and the static housing (107); and is installed between the centrifugal clutch (1006)and the static housing (107), so when the screw rod structure (1041) is rotationally driven by the prime motive end (101), through actions of the limit-torque sliding damping device (106), relative movements are generated between the screw rod structure (1041) and the screw nut structure (1042) combined in the relay transmission structure assembly (104) during the screw rod structure (1041) performing rotational driving to the screw nut structure (1042) ;
the structure includes: constituted by the mechanism device, which is through the mechanical force, the spring pre-stressing force, the electromagnetic force of electric excited coil, or the action force of permanent magnet for the limit-torque sliding damping device (106) including between solid and solid, or between solid and viscous fluid, or between viscous fluid and viscous fluid, or between solid and gaseous or liquidity fluids to generate sliding damping;
-- centrifugal clutch (1006): configured by a centrifugal clutch structure device having the function of cutoff at static and low-speed, and installed between the relay transmission structure assembly (104) and the limit-torque sliding damping device (106), and when the active side of relay coupling structure is rotationally driven by the prime motive end (101) to reach a pre-set rotational speed, the centrifugal clutch (1006) is in an engaged state, so as to combine the relay transmission structure assembly (104) and the limit-torque sliding damping device (106) for generating the limit-torque sliding damping between the relay transmission structure assembly (104) and the static housing (107), thereby a relative movement is generated between the active side of relay coupling structure and the passive side of relay coupling structure combined in the relay transmission structure assembly (104);
--a static housing (107): configured by a static housing structure for accommodating the centrifugal force combined with sliding damping type torque-actuated clutch;
-- a limiting structure (115): composed by a mechanism capable of limiting relative positions of the relay transmission structure assembly (104) and the prime motive end (101), and is combined with the rotary part of the prime motive end (101);
--a recovering actuation spring (120): which is a spring device capable of being pressed for storing energy and being released for outputting energy, and is disposed between the relay output clutch structure (1051) and the output-end clutch structure (1052), and the normal state thereof is to separate the relay output clutch structure (1051) and the output-end clutch structure (1052), so as to terminate the transmission of the rotary kinetic energy; when the relay output clutch structure (1051) and the output-end clutch structure (1052) are driven so as to be engaged, the recovering actuation spring (120) is synchronously pre-pressed for being in an energy-storing state;
--a relay output clutch structure (1051): the relay output clutch structure (1051) is composed by a clutch function structure and is installed in the relay transmission structure assembly (104), when the screw rod structure (1041) is driven by the prime motive end (101), the relay output clutch structure (1051) and the relay transmission structure assembly (104) are driven by the screw rod structure (1041) of the relay coupling structure, for performing closing/opening operations with the output-end clutch structure (1052) so as to transmit rotary kinetic energy and to force the recovering actuation spring (120) being tightened; when the rotational driving torque from the prime motive end (101) to the output end (102) is no longer provided, the relay output clutch structure (1051) and the output-end clutch structure (1052) are disengaged through the releasing elastic force of the recovering actuation spring (120), thereby terminating the transmission of the rotary kinetic energy;
--an out-put end clutch structure (1052): composed by a clutch function structure capable of performing closing/opening operations with the relay output clutch structure (1051) to transmit rotary kinetic energy, or being disengaged for terminating the transmission of the rotary kinetic energy, and the output-end clutch structure (1052) is connected to the output end (102);
--the clutch structure of the relay output clutch structure (1051) and the output-end clutch structure (1052) consists of the friction-type clutch structure, the engaging-type clutch structure or the synchro-engaging clutch structure.

5. The centrifugal force sliding damping type clutch actuated by torque as claimed in any one of the preceding claims, wherein the relay coupling structure (204) installed in the relay transmission structure assembly (104) is further composed by a coil-shaped spring capable of rotating for axial actuation (1043), and it consists of:
-- a prime motive end (101): composed by a rotational mechanism for inputting rotary kinetic energy; the prime motive end (101) is a coil-shaped spring capable of rotating for axial actuation (1043) for driving the relay transmission structure assembly (104), the prime motive end (101) is installed with a limiting structure (115) for limiting relative positions of the relay transmission structure assembly (104) and the prime motive end (101);
-- an output end (102): composed by a rotational mechanism for outputting rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), and is capable of performing rotational driving and axial movements, the relay transmission structure assembly (104) is installed with a coil-shaped spring capable of rotating for axial actuation (1043) serving to provide the relay coupling structure function and is coaxially shaft-installed between the relay transmission structure assembly (104) and the prime motive end (101), one end of the coil-shaped spring capable of rotating for axial actuation (1043) is fastened at the prime motive end (101) for providing the function of the active side of relay coupling structure, the other end of the coil-shaped spring capable of rotating for axial actuation (1043) is installed in the relay transmission structure assembly (104) for providing the function of the passive side of relay coupling structure, a limit-torque sliding damping device (106) and a centrifugal clutch (1006) are installed between the relay transmission structure assembly (104) and the static housing (107); when the coil-shaped spring capable of rotating for axial actuation (1043) and the relay transmission structure assembly (104) are driven by the prime motive end (101) to be in an idle rotating state before reaching a set rotational speed, and at the time reaching or exceeding the pre-set rotational speed a damping effect is generated through the centrifugal force combining type centrifugal clutch (1006) and the limit-torque sliding damping device (106) installed between the relay transmission structure assembly (104) and the static housing (107), so the coil-shaped spring capable of rotating for axial actuation (1043) is rotated and tightened to generate an axial actuation force, and causes the relay transmission structure assembly (104) to generate a relative axial movement, such that the relay output clutch structure (1051) installed in the relay transmission structure assembly (104) is driven to perform closing/opening operations with the output-end clutch structure (1052) so as to transmit rotary kinetic energy, and to force the recovering actuation spring (120) to be tightened;
when the rotational driving torque from the prime motive end (101) to the output end (102) is no longer provided, through the releasing recovering force of the recovering actuation spring (120) the relay output clutch structure (1051) and the output-end clutch structure (1052) are disengaged and the coil-shaped spring capable of rotating for axial actuation (1043) is returned, thereby terminating the transmission of the rotary kinetic energy;
moreover, when the rotational speed in which the centrifugal clutch (1006) driven at the prime motive end (101) is greater or equal to its disengaging rotational speed, the centrifugal clutch (1006) is in a disengaged state, such that the damping between the relay transmission structure assembly (104) and the static housing (107) is not provided, and the passive side of relay coupling structure of the relay transmission structure assembly (104) is moved by the recovering actuation spring (120) to be returned, thereby allowing the relay output clutch structure (1051) and the output-end clutch structure (1052) to be disengaged;
-- a limit-torque sliding damping device (106): composed by a mechanism device having limit-torque sliding damping effect with a restraining function while relative rotational movements are generated between the relay transmission structure assembly (104) and the static housing (107); and is installed between the centrifugal clutch (1006)and the static housing (107); when the coil-shaped spring capable of rotating for axial actuation (1043) is applied with an angular displacement driving force of tightening by the prime motive end (101), through actions of the limit-torque sliding damping device (106), relative movements are generated in the relay transmission structure assembly (104);
the structure includes: constituted by the mechanism device, which is through the mechanical force, the spring pre-stressing force, the electromagnetic force of electric excited coil, or the action force of permanent magnet for the limit-torque sliding damping device (106) including between solid and solid, or between solid and viscous fluid, or between viscous fluid and viscous fluid, or between solid and gaseous or liquidity fluids to generate sliding damping;
-- centrifugal clutch (1006): configured by a centrifugal clutch structure device having the function of cutoff at static and low-speed, and installed between the relay transmission structure assembly (104) and the limit-torque sliding damping device (106), and when the active side of relay coupling structure is rotationally driven by the prime motive end (101) to reach a pre-set rotational speed, the centrifugal clutch (1006) is in an engaged state, so as to combine the relay transmission structure assembly (104) and the limit-torque sliding damping device (106) for generating the limit-torque sliding damping between the relay transmission structure assembly (104) and the static housing (107), thereby a relative movement is generated between the active side of relay coupling structure and the passive side of relay coupling structure combined in the relay transmission structure assembly (104);
--a static housing (107): configured by a static housing structure for accommodating the centrifugal force combined with sliding damping type torque-actuated clutch;
-- a limiting structure (115): composed by a mechanism capable of limiting relative positions of the relay transmission structure assembly (104) and the prime motive end (101), and is combined with the rotary part of the prime motive end (101);
--a recovering actuation spring (120): which is a spring device capable of being pressed for storing energy and being released for outputting energy, and is disposed between the relay output clutch structure (1051) and the output-end clutch structure (1052), and the normal state thereof is to separate the relay output clutch structure (1051) and the output-end clutch structure (1052), so as to terminate the transmission of the rotary kinetic energy; when the relay output clutch structure (1051) and the output-end clutch structure (1052) are driven so as to be engaged, the recovering actuation spring (120) is synchronously pre-pressed for being in an energy-storing state;
--relay output clutch structure (1051): the relay output clutch structure (1051) is composed by a clutch function structure and is installed in the relay transmission structure assembly (104), when the coil-shaped spring capable of rotating for axial actuation (1043) is driven at the prime motive end (101), the relay output clutch structure (1051) and the relay transmission structure assembly (104) are driven by the coil-shaped spring capable of rotating for axial actuation (1043) having the relay coupling structure function and installed between the relay transmission structure assembly (104) and the prime motive end (101), so as to perform closing/opening operations with the output-end clutch structure (1052) for transmitting rotary kinetic energy and forcing the recovering actuation spring (120) to be tightened; when the rotational driving torque from the prime motive end (101) to the output end (102) is no longer provided, the relay output clutch structure (1051) and the output-end clutch structure (1052) are disengaged and the coil-shaped spring capable of rotating for axial actuation (1043) is returned through the releasing recovering force of the recovering actuation spring (120), thereby terminating the transmission of the rotary kinetic energy;
--an out-put end clutch structure (1052): composed by a clutch function structure capable of performing closing/opening operations with the relay output clutch structure (1051) to transmit rotary kinetic energy, or being disengaged for terminating the transmission of the rotary kinetic energy, and the output-end clutch structure (1052) is connected to the output end (102);
--the clutch structure of the relay output clutch structure (1051) and the output-end clutch structure (1052) consists of the friction-type clutch structure, the engaging-type clutch structure or the synchro-engaging clutch structure.

6. The centrifugal force sliding damping type clutch actuated by torque as claimed in any one of the preceding claims, wherein the relay coupling structure installed in the relay transmission structure assembly (104) is further composed by an axial compelling over running clutch, and it consists of:
-- a prime motive end (101): composed by a rotational mechanism for outputting rotary kinetic energy; the prime motive end (101) is an active side of axial compelling over running clutch (1061), having the function of active side of relay input coupling structure, for driving the relay transmission structure assembly (104), the prime motive end (101) is installed with a limiting structure (115) for limiting relative positions of the relay transmission structure assembly (104) and the prime motive end (101);
-- an output end (102): composed by a rotational mechanism for outputting rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), the relay transmission structure assembly (104) is installed with an axial compelling over running clutch (1060) having the function of relay coupling structure, the axial compelling over running clutch (1060) is equipped with an active side of axial compelling over running clutch (1061) and a passive side of axial compelling over running clutch (1062) and middle rolling members (1063), a plurality of saw-shaped intervals are formed between the active side of axial compelling over running clutch (1061) and the passive side of axial compelling over running clutch (1062) for accommodating the middle rolling members (1063) so as to constitute the over running clutch function; a limit-torque sliding damping device (106) and a centrifugal force combining type centrifugal clutch (1006) are installed between the relay transmission structure assembly (104) and the static housing (107), when the axial compelling over running clutch (1060) is driven by the prime motive end (101) to be in an idle state before reaching a set rotational speed, and at the time reaching or exceeding the set rotational speed a damping effect is generated through the centrifugal force combining type centrifugal clutch (1006) and the limit-torque sliding damping device (106) installed between the relay transmission structure assembly (104) and the static housing (107), so the active side of axial compelling over running clutch (1061) applies the rotational driving torque to the passive side of axial compelling over running clutch (1062) via the middle running members (1063); before the middle rolling members (1063) are forced to be latched between the active side of axial compelling over running clutch (1061) and the passive side of axial compelling over running clutch (1062), the passive side of axial compelling over running clutch (1062) is compelled to be axially moved, so the relay transmission structure assembly (104) installed with the axial compelling over running clutch (1060) generates a relative movement for driving the relay output clutch structure (1051) and the output-end clutch structure (1052) installed in the relay transmission structure assembly (104) to perform opening/closing operations for transmitting the rotary kinetic energy and to force the recovering actuation spring (120) being tightened;
when the rotational driving torque from the prime motive end (101) to the output end (102) is no longer provided, through the releasing recovering force of the recovering actuation spring (120) the relay output clutch structure (1051) and the output-end clutch structure (1052) are disengaged and the passive side of axial compelling over running clutch (1062) is returned, thereby terminating the transmission of the rotary kinetic energy;
moreover, when the rotational speed in which the centrifugal clutch (1006) driven at the prime motive end (101) is greater or equal to its disengaging rotational speed, the centrifugal clutch (1006) is in a disengaged state, such that the damping between the relay transmission structure assembly (104) and the static housing (107) is not provided, and the passive side of relay coupling structure of the relay transmission structure assembly (104) is moved by the recovering actuation spring (120) to be returned, thereby allowing the relay output clutch structure (1051) and the output-end clutch structure (1052) to be disengaged;
-- a limit-torque sliding damping device (106): composed by a mechanism device having limit-torque sliding damping effect with a restraining function while relative rotational movements are generated between the relay transmission structure assembly (104) and the static housing (107); and is installed between the centrifugal clutch (1006)and the static housing (107); when the active side of axial compelling over running clutch (1061) is rotationally driven by the prime motive end (101), through actions of the limit-torque sliding damping device (106), relative movements are generated between the active side of axial compelling over running clutch (1061) and the passive side of axial compelling over running clutch (1062);
the structure includes: constituted by the mechanism device, which is through the mechanical force, the spring pre-stressing force, the electromagnetic force of electric excited coil, or the action force of permanent magnet for the limit-torque sliding damping device (106) including between solid and solid, or between solid and viscous fluid, or between viscous fluid and viscous fluid, or between solid and gaseous or liquidity fluids to generate sliding damping;
-- centrifugal clutch (1006): configured by a centrifugal clutch structure device having the function of cutoff at static and low-speed, and installed between the relay transmission structure assembly (104) and the limit-torque sliding damping device (106), and when the active side of relay coupling structure is rotationally driven by the prime motive end (101) to reach a pre-set rotational speed, the centrifugal clutch (1006) is in an engaged state, so as to combine the relay transmission structure assembly (104) and the limit-torque sliding damping device (106) for generating the limit-torque sliding damping between the relay transmission structure assembly (104) and the static housing (107), thereby a relative movement is generated between the active side of relay coupling structure and the passive side of relay coupling structure combined in the relay transmission structure assembly (104);
--a static housing (107): configured by a static housing structure for accommodating the centrifugal force combined with sliding damping type torque-actuated clutch;
-- a limiting structure (115): composed by a mechanism capable of limiting relative positions of the relay transmission structure assembly (104) and the prime motive end (101), and is combined with the rotary part of the prime motive end (101);
--a recovering actuation spring (120): which is a spring device capable of being pressed for storing energy and being released for outputting energy, and is disposed between the relay output clutch structure (1051) and the output-end clutch structure (1052), and the normal state thereof is to separate the relay output clutch structure (1051) and the output-end clutch structure (1052), so as to terminate the transmission of the rotary kinetic energy; when the relay output clutch structure (1051) and the output-end clutch structure (1052) are driven so as to be engaged, the recovering actuation spring (120) is synchronously pre-pressed for being in an energy-storing state;
-- a relay output clutch structure (1051): the relay output clutch structure (1051) is composed by a clutch function structure and is installed in the relay transmission structure assembly (104), when the active side of axial compelling over running clutch (1061) is driven by the prime motive end (101), the passive side of axial compelling over running clutch (1062) installed in the relay transmission structure assembly (104) is axially driven so as to drive the relay transmission structure assembly (104) and the relay output clutch structure (1051) installed in the relay transmission structure assembly (104) for performing opening/closing operations with the output-end clutch structure (1052) for transferring rotary kinetic energy and forcing the recovering actuation spring (120) to be tightened; when the rotational driving torque from the prime motive end (101) to the output end (102) is no longer provided, the relay output clutch structure (1051) and the output-end clutch structure (1052) are disengaged and the passive side of axial compelling over running clutch (1062) is returned through the releasing recovering force of the recovering actuation spring (120), thereby terminating the transmission of the rotary kinetic energy;
--an out-put end clutch structure (1052): composed by a clutch function structure capable of performing closing/opening operations with the relay output clutch structure (1051) to transmit rotary kinetic energy, or being disengaged for terminating the transmission of the rotary kinetic energy, and the output-end clutch structure (1052) is connected to the output end (102);
--the clutch structure of the relay output clutch structure (1051) and the output-end clutch structure (1052) consists of the friction-type clutch structure, the engaging-type clutch structure or the synchro-engaging clutch structure.

7. The centrifugal force sliding damping type clutch actuated by torque as claimed in any one of the preceding claims, wherein the relay coupling structure installed in the relay transmission structure assembly (104) is further composed by an axial relay clutch of the axial clutch transmission block having axial compelling pre-forced recovering, and it consists of:
-- a prime motive end (101): composed by a rotational mechanism for inputting rotary kinetic energy; the prime motive end (101) is an axial relay clutch having the function of relay coupling structure, for driving the relay transmission structure assembly (104);
-- an output end (102): composed by a rotational mechanism for outputting rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), the relay transmission structure assembly (104) has an axial relay clutch which mainly consists of an active side of axial relay clutch (1071), an axial clutch transmission block (1072), an axial clutch transmission block recovering spring (1073), an axial relay clutch transmission board (1074), and a middle rolling member (1075); wherein the active side of axial relay clutch (1071) accommodating the middle rolling member (1075) is driven by the prime motive end (101), the middle rolling member (1075) is coupled to a passive side of axial relay clutch (1076) which is an obliquely compelled surface with respect to the axial clutch transmission block (1072), the axial clutch transmission block (1072) is installed on the axial relay clutch transmission board (1074), a limit-torque sliding damping device (106) and a centrifugal clutch (1006) are installed between the axial relay clutch transmission board (1074) and the static housing (107), one end of the axial clutch transmission block (1072) is fastened on the axial relay clutch transmission board (1074), the other end of the axial clutch transmission block (1072) is served as a transmission end (1079), the passive side of axial relay clutch (1076) of the transmission end (1079) is an obliquely compelled surface allowing the middle rolling member (1075) to be coupled, the other surface of the transmission end (1079) is served as an axial clutch structure (1077), when the active side of axial relay clutch (1071) equipped with the middle rolling member (1075) by the prime motive end (101) to be in an idle state before reaching a set rotational speed, and at the time reaching or exceeding the set rotational speed the centrifugal clutch (1006) installed between the relay transmission structure assembly (104) and the static housing (107) is in an engaged state so as to be combined with the limit-torque sliding damping device (106) for generating a damping effect, thereby the passive side of axial relay clutch (1076) which is an obliquely compelled surface with respect to the axial clutch transmission block (1072) is compelled to move by the middle rolling member (1075) installed at the active side of axial relay clutch (1071), and the axial clutch structure (1077) is further moved to be coupled with the output-end clutch structure (1052) of the output end (102) for transferring rotary kinetic energy, when the rotational driving torque from the prime motive end (101) to the output end (102) is no longer provided, through the elasticity of the axial clutch transmission block (1072) and/or the releasing recovering force of the axial clutch transmission block recovering spring (1073) installed between the axial relay clutch transmission board (1074) and the middle rolling member (1075), such that the axial clutch structure (1077) of the axial clutch transmission block (1072) and the output-end clutch structure (1052) of the output end (102) are disengaged, and the axial relay clutch transmission board (1074) is returned, thereby terminating the transmission of the rotary kinetic energy;
moreover, when the rotational speed in which centrifugal clutch (1006) driven at the prime motive end (101) is smaller or equal to its disengaging rotational speed, centrifugal clutch (1006) is in a disengaged state, such that the damping between the relay transmission structure assembly (104) and the static housing (107) is not provided, and the passive side of relay coupling structure of the relay transmission structure assembly (104) is moved by the axial clutch transmission block recovering spring (1073) to be returned, thereby allowing the axial clutch structure (1077) and the output-end clutch structure (1052) to be disengaged;
-- a limit-torque sliding damping device (106): composed by a mechanism device having limit-torque sliding damping effect with a restraining function while relative rotational movements are generated between the axial relay clutch transmission board (1074) and the static housing (107), and is installed between the static housing (107) and the axial relay clutch transmission board (1074), when the active side of axial relay clutch (1071) is rotationally driven by the prime motive end (101), through actions of the limit-torque sliding damping device (106), during the active side of axial relay clutch (1071) performing rotational driving to the axial relay clutch transmission board (1074), the axial clutch transmission block (1072) and the axial clutch structure (1077) of the axial relay clutch transmission board (1074) is compelled to move by the middle rolling member (1075) driven by the active side of axial relay clutch (1071)to generate relative movements;
the structure includes: constituted by the mechanism device, which is through the mechanical force, the spring pre-stressing force, the electromagnetic force of electric excited coil, or the action force of permanent magnet for the limit-torque sliding damping device (106) including between solid and solid, or between solid and viscous fluid, or between viscous fluid and viscous fluid, or between solid and gaseous or liquidity fluids to generate sliding damping;
-- centrifugal clutch (1006): configured by a centrifugal clutch structure device having the function of cutoff at static and low-speed, and installed between the axial relay clutch transmission board (1074) and the limit-torque sliding damping device (106), and when the active side of relay coupling structure is driven by the prime motive end (101) to perform rotationally driving to reach a set rotational speed, the centrifugal clutch (1006) is in an engaged state, so as to combine the axial relay clutch transmission board (1074) and the limit-torque sliding damping device (106) for generating limit-torque sliding damping between the axial relay clutch transmission board (1074) and the static housing (107), thereby a relative movement is generated between the active side of relay coupling structure and the passive side of relay coupling structure combined in the relay transmission structure assembly (104);
--a static housing (107): configured by a static housing structure for accommodating the centrifugal force combined with sliding damping type torque-actuated clutch;
-- an output-end clutch structure (1052): the output-end clutch structure (1052) is composed by a clutch function structure and is connected to the output end (102) to be served to perform opening/closing operations with the axial clutch structure (1077) of the transmission end (1079) of the axial clutch transmission block (1072) of the axial relay clutch transmission board (1074) for transferring rotary kinetic energy, or in a disengaged state for terminating the transmission of the rotary kinetic energy;
-- the clutch structure of the relay output clutch structure (1051) and the output-end clutch structure (1052) consists of the friction-type clutch structure, the engaging-type clutch structure or the synchro-engaging clutch structure;
-- a middle rolling member (1075): which can be replaced by rolling balls, cone-shaped cylinders, or spherical or arc-shaped protrusions.

8. The centrifugal force sliding damping type clutch actuated by torque as claimed in any one of the preceding claims, wherein the relay output coupling structure installed in the relay transmission structure assembly (104) is further composed by the radial relay clutch of the radial clutch transmission block having radial compelling pre-forced recovering, and it mainly consists of:
-- a prime motive end (101): composed by a rotational mechanism for inputting rotary kinetic energy; the prime motive end (101) is a radial relay clutch having the function of relay coupling structure, for driving the relay transmission structure assembly (104);
-- an output end (102): composed by a rotational mechanism for outputting rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), the three components are arranged as a concentric annular structure, the relay transmission structure assembly (104) has a radial relay clutch which mainly consists of an active side of radial relay clutch (1081), a radial clutch transmission block (1082), a radial clutch transmission block recovering spring (1083), a radial relay clutch transmission board (1084), and a middle rolling member (1085); wherein the active side of radial relay clutch (1081) accommodating the middle rolling member (1085) is driven by the prime motive end (101), the middle rolling member (1085) is coupled to a passive side of radial relay clutch (1086) which is an obliquely compelled surface with respect to the radial clutch transmission block (1082), the radial clutch transmission block (1082) is installed on the radial relay clutch transmission board (1084), a limit-torque sliding damping device (106) and a centrifugal force combining type centrifugal clutch (1006) are installed between the radial relay clutch transmission board (1084) and the static housing (107), one end of the radial clutch transmission block (1082) is fastened on the radial relay clutch transmission board (1084), the other end of the radial clutch transmission block (1082) is served as a transmission end (1089), the passive side of radial relay clutch (1086) of the transmission end (1089) is an obliquely compelled surface allowing the middle rolling member (1085) to be coupled, the other surface of the transmission end (1089) is served as a radial clutch structure (1087), when the active side of radial relay clutch (1081) equipped with the middle rolling member (1085) is driven by the prime motive end (101) to be in an idle state before reaching a set rotational speed, and at the time reaching or exceeding the set rotational speed the centrifugal force combining type centrifugal clutch (1006) installed between the relay transmission structure assembly (104) and the static housing (107) is in an engaged state so as to be combined with the limit-torque sliding damping device (106) for generating a damping effect, thereby the passive side of radial relay clutch (1086) which is an obliquely compelled surface with respect to the radial clutch transmission block (1082) is compelled to move by the middle rolling member (1085) installed at the active side of radial relay clutch (1081), and the radial clutch structure (1087) is further moved to be coupled with the output-end clutch structure (1052) of the output end (102) for transferring rotary kinetic energy;
when the rotational driving torque from the prime motive end (101) to the output end (102) is no longer provided, through the elasticity of the radial clutch transmission block (1082) and/or the releasing recovering force of the radial clutch transmission block recovering spring (1083) installed between the radial relay clutch transmission board (1084) and the middle rolling member (1085), such that the radial clutch structure (1087) of the radial clutch transmission block (1082) and the output-end clutch structure (1052) of the output end (102) are disengaged, and the radial relay clutch transmission board (1084) is returned, thereby terminating the transmission of the rotary kinetic energy;
moreover, when the rotational speed in which the centrifugal clutch (1006) driven at the prime motive end (101) is smaller or equal to its disengaging rotational speed, the centrifugal clutch (1006) is in a disengaged state, such that the damping between the relay transmission structure assembly (104) and the static housing (107) is not provided, and the passive side of relay coupling structure of the relay transmission structure assembly (104) is moved by the radial clutch transmission block recovering spring (1083) to be returned, thereby allowing the radial clutch structure (1087) and the output-end clutch structure (1052) to be disengaged;
-- a limit-torque sliding damping device (106): composed by a mechanism device having limit-torque sliding damping effect with a restraining function while relative rotational movements are generated between the radial relay clutch transmission board (1084) and the static housing (107), and is installed between the static housing (107) and the radial relay clutch transmission board (1084), when the active side of radial relay clutch (1081) is rotationally driven by the prime motive end (101), through actions of the limit-torque sliding damping device (106), during the active side of radial relay clutch (1081) performing rotational driving to the radial relay clutch transmission board (1084), the radial clutch transmission block (1082) and the radial clutch structure (1087) of the radial relay clutch transmission board (1084) is compelled to move by the middle rolling member (1085) driven by the active side of radial relay clutch (1081)to generate relative movements;
the structure includes: constituted by the mechanism device, which is through the mechanical force, the spring pre-stressing force, the electromagnetic force of electric excited coil, or the action force of permanent magnet for the limit-torque sliding damping device (106) including between solid and solid, or between solid and viscous fluid, or between viscous fluid and viscous fluid, or between solid and gaseous or liquidity fluids to generate sliding damping;
-- centrifugal clutch (1006): configured by a centrifugal clutch structure device having the function of cutoff at static and low-speed, and installed between the radial relay clutch transmission board (1084) and the limit-torque sliding damping device (106), and when the active side of relay coupling structure is driven by the prime motive end (101) to perform rotationally driving to reach a set rotational speed, the centrifugal clutch (1006) is in an engaged state, so as to combine the radial relay clutch transmission board (1084) and the limit-torque sliding damping device (106) for generating limit-torque sliding damping between the radial relay clutch transmission board (1084) and the static housing (107), thereby a relative movement is generated between the active side of relay coupling structure and the passive side of relay coupling structure combined in the relay transmission structure assembly (104);
--a static housing (107): configured by a static housing structure for accommodating the centrifugal force combined with sliding damping type torque-actuated clutch;
-- an output-end clutch structure (1052): the output-end clutch structure (1052) is composed by a clutch function structure and is connected to the output end (102) to be served to perform opening/closing operations with the radial clutch structure (1087) of the transmission end (1089) of the radial clutch transmission block (1082) of the radial relay clutch transmission board (1084) for transferring rotary kinetic energy, or in a disengaged state for terminating the transmission of the rotary kinetic energy;
-- the clutch structure of the relay output clutch structure (1051) and the output-end clutch structure (1052) consists of the friction-type clutch structure, the engaging-type clutch structure or the synchro-engaging clutch structure;
-- a middle rolling member (1085): which can be replaced by rolling balls, cone-shaped cylinders, or spherical or arc-shaped protrusions.

9. The centrifugal force sliding damping type clutch actuated by torque as claimed in any one of the preceding claims, wherein it can be composed by two sets of centrifugal force combined with sliding damping type torque-actuated clutches and having the same prime motive end (101), including: two sets of centrifugal force combined with sliding damping type clutches actuated by torque both transmitting in the axial direction, having different operation directions and having the same prime motive end (101).

10. The centrifugal force sliding damping type clutch actuated by torque as claimed in any one of claims 1 to 8, wherein it can be composed by two sets of centrifugal force combined with sliding damping type torque-actuated clutches and having the same prime motive end (101), including: two sets of centrifugal force combined with sliding damping type clutches actuated by torque both transmitting in the axial direction, having the same operation direction and having the same prime motive end (101).

11. The centrifugal force sliding damping type clutch actuated by torque as claimed in any one of claims 1 to 8, wherein it can be composed by two sets of centrifugal force combined with sliding damping type torque-actuated clutches and having the same prime motive end (101), including: two sets of centrifugal force combined with sliding damping type clutches actuated by torque both transmitting in the radial direction, having different operation directions and having the same prime motive end (101).

12. The centrifugal force sliding damping type clutch actuated by torque as claimed in any one of claims 1 to 8, wherein it can be composed by two sets of centrifugal force combined with sliding damping type torque-actuated clutches and having the same prime motive end (101), including: two sets of centrifugal force combined with sliding damping type clutches actuated by torque both transmitting in the radial direction, having the same operation direction and having the same prime motive end (101).

13. The centrifugal force sliding damping type clutch actuated by torque as claimed in any one of claims 1 to 8, wherein it can be composed by two sets of centrifugal force combined with sliding damping type torque-actuated clutches and having the same prime motive end (101), including: two sets of centrifugal force combined with sliding damping type clutches actuated by torque in which one set transmitting in the radial direction and the other transmitting in the axial direction, having different operation directions and having the same prime motive end (101).

14. The centrifugal force sliding damping type clutch actuated by torque as claimed in any one of claims 1 to 8, wherein it can be composed by two sets of centrifugal force combined with sliding damping type torque-actuated clutches and having the same prime motive end (101), including: two sets of centrifugal force combined with sliding damping type clutches actuated by torque in which one set transmitting in the radial direction and the other transmitting in the axial direction, having the same operation direction and having the same prime motive end (10 1).

## Patentansprüche

1. Durch Drehmoment betätigte Fliehkraftgleitdämpfungskupplung, umfassend
eine Kupplungsvorrichtung,
eine Zwischenübertragungsstruktur Baugruppe (104)
ein drehbares Hauptantriebsende (101)
eine abtriebsseitige Kupplungsstruktur (1052)
eine Zwischenkupplungsstruktur (204),
eine Grenzdrehmoment-Gleitdämpfungsvorrichtung (106)
eine Fliehkraftkupplung (1006),
eine Rückführbetätigungsfeder (120)
wobei die durch Drehmoment betätigte Fliehkraftgleitdämpfungskupplung dazu in der Lage ist, eine Kupplungsvorrichtung zu steuern, um Vorgänge des Koppelns oder des Ausrückens mit dem Antriebsdrehmoment auszuführen, und eine Zwischenübertragungsstruktur-Baugruppe (104) zwischen einem drehbaren Hauptantriebsende (101) und einer abtriebsseitigen Kupplungsstruktur (1052) an einem Abtriebsende (102) installiert ist, die Zwischenübertragungsstruktur-Baugruppe (104) mit einer Zwischenkopplungsstruktur (204) installiert ist, die eine aktive Seite der Zwischenkopplungsstruktur und eine passive Seite der Zwischenkopplungsstruktur aufweist, das Hauptantriebsende (101) ist mit einer begrenzenden Struktur (115) versehen ist, um die relativen Positionen der Zwischenübertragungsstruktur-Baugruppe (104) und des Hauptantriebsendes (101) zu begrenzen;
eine Grenzdrehmoment-Gleitdämpfungsvorrichtung (106) und eine Fliehkraftkupplung (1006) zwischen der Zwischenübertragungsstruktur-Baugruppe (104) und dem feststehenden Gehäuse (107) installiert sind und in einer ersten Drehrichtung am Hauptantriebsende (101) gedreht werden, um die aktive Seite der Zwischenkopplungsstruktur (204) anzutreiben, die in der Zwischenübertragungsstruktur-Baugruppe (104) installiert ist, um sich im Leerlauf-Drehzustand zu befinden, bevor eine voreingestellte Drehgeschwindigkeit erzielt wird, und, sobald die voreingestellte Drehgeschwindigkeit erreicht oder überstiegen wird, sich die Fliehkraftkupplung (1006), die zwischen der Zwischenübertragungsstruktur-Baugruppe (104) und dem feststehenden Gehäuse (107) installiert ist, dreht, um sich in einem eingegriffenen Zustand zu befinden, um mit der Grenzdrehmoment-Gleitdämpfungsvorrichtung (106) kombiniert zu sein, um eine Gleitdämpfungswirkung zu generieren, so dass die passive Seite der Zwischenausgangskopplungs-Struktur durch die aktive Seite der Zwischenkopplungsstruktur angetrieben wird, um sich zu bewegen, und die Zwischenübertragungsstruktur-Baugruppe (104) und eine Zwischenabtriebskupplungs-Struktur (1051), die in der Zwischenübertragungsstruktur-Baugruppe (104) installiert ist, angetrieben wird, um Schließ-/Öffnungsvorgänge mit der abtriebsseitigen Kupplungsstruktur (1052) auszuführen, die am Abtriebsende (102) installiert ist, um kinetische Rotationsenergie zu übertragen und zu bewirken, dass die Rückführbetätigungsfeder (120), die zwischen der Zwischenabtriebskupplungs-Struktur (1051) und der abtriebsseitigen Kupplungsstruktur (1052) bereitgestellt wird, gespannt wird;
wenn das Drehantriebsmoment am Hauptantriebsende (101) nicht mehr bereitgestellt wird, wird die Zwischenübertragungsstruktur-Baugruppe (104) zurückgestellt, und die Zwischenabtriebskupplungs-Struktur (1051) und die abtriebsseitige Kupplungsstruktur (1052) werden durch Einwirkungen der Rückführbetätigungsfeder (120) ausgerückt, wodurch das Abtriebsende (102) freigegeben wird;
außerdem befindet sich, wenn die Drehgeschwindigkeit, mit der die Fliekraftkupplung (1006) am Hauptantriebsende (101) angetrieben wird, größer als ihre oder gleich ihrer auslösenden Drehgeschwindigkeit ist, die Fliekraftkupplung (1006) in einem ausgelösten Zustand, so dass die Dämpfung zwischen der Zwischenübertragungsstruktur-Baugruppe (104) und dem feststehenden Gehäuse (107) nicht bereitgestellt wird, und die passive Seite der Zwischenkopplungsstruktur der Zwischenübertragungsstruktur-Baugruppe (104) durch die Rückführbetätigungsfeder (120), die zurückgestellt werden soll, bewegt wird, wodurch die Zwischenabtriebskupplungs-Struktur (1051) und die abtriebsseitige Kupplungsstruktur (1052) ausgerückt werden.

2. Durch Drehmoment betätigte Fliehkraftgleitdämpfungskupplung nach Anspruch 1, wobei die Fliehkraftkupplung (1006) eines einer Abschneide- und einer Kombinations-Fliekraftkupplung ist.

3. Durch Drehmoment betätigte Fliehkraftgleitdämpfungskupplung nach Anspruch 1 oder 2, wobei sie aus Folgendem besteht:
-- einem Hauptantriebsende (101): zusammengesetzt aus einem Drehmechanismus, um kinetische Rotationsenergie einzugeben; wobei das Hauptantriebsende (101) dazu dient, eine aktive Seite der Zwischenkopplungsstruktur (204) anzutreiben, die in einer Zwischenübertragungsstruktur-Baugruppe (104) installiert ist, wobei das Hauptantriebsende (101) mit einer begrenzenden Struktur (115) installiert ist, um die relativen Positionen der Zwischenübertragungsstruktur-Baugruppe (104) und des Hauptantriebsendes (101) zu begrenzen;
-- einem Abtriebsende (102): zusammengesetzt aus einem Drehmechanismus, um kinetische Rotationsenergie abzugeben; wobei das Abtriebsende (102) mit einer abtriebsseitigen Kupplungsstruktur (1052) verbunden ist und durch die abtriebsseitige Kupplungsstruktur (1052) gesteuert wird;
-- einer Zwischenübertragungsstruktur-Baugruppe (104): die Zwischenübertragungsstruktur-Baugruppe (104) ist zwischen dem Hauptantriebsende (101) und dem Abtriebsende (102) installiert und ist dazu in der Lage, einen Drehantrieb und axiale Bewegungen auszuführen, wobei die Zwischenübertragungsstruktur-Baugruppe (104) mit einer Zwischenkopplungsstruktur (204) versehen ist, angetrieben vom Hauptantriebsende (101), wobei die Zwischenkopplungsstruktur (204) eine aktive Seite der Zwischenkopplungsstruktur und eine passive Seite der Zwischenkopplungsstruktur aufweist, die koaxial mit der aktiven Seite gekoppelt ist und damit interagiert, eine Grenzdrehmoment-Gleitdämpfungsvorrichtung (106) und eine Fliehkraftkupplung (1006) zwischen der Übertragungsstruktur-Baugruppe (104) und dem feststehenden Gehäuse (107) installiert sind, wenn die aktive Seite der Zwischenkopplungsstruktur vom Hauptantriebsende (101) angetrieben wird, um sich in einem Leerlauf-Drehzustand zu befinden, bevor eine voreingestellte Drehgeschwindigkeit erzielt wird, und sobald die voreingestellte Drehgeschwindigkeit erreicht oder überstiegen wird, sich die Fliehkraftkupplung (1006), die zwischen der Zwischenübertragungsstruktur-Baugruppe (104) und dem feststehenden Gehäuse (107) installiert ist, dreht, um sich in einem eingegriffenen Zustand zu befinden, um mit der Grenzdrehmoment-Gleitdämpfungsvorrichtung (106) kombiniert zu sein, um eine Gleitdämpferwirkung zu generieren, wodurch das Drehantriebsmoment auf die passive Seite der Zwischenkopplungsstruktur angewendet wird, um die passive Seite der Zwischenkopplungsstruktur zu bewegen, und weiter die Zwischenübertragungsstruktur-Baugruppe (104) zu veranlassen, eine relative Bewegung zu generieren, um die Zwischenabtriebskupplungs-Struktur (1051) anzutreiben, die in der Zwischenübertragungsstruktur-Baugruppe (104) installiert ist, um Schließ-/Öffnungsvorgänge mit einer abtriebsseitigen Kupplungsstruktur (1052) auszuführen, um kinetische Rotationsenergie zu übertragen und zu bewirken, dass eine Rückführbetätigungsfeder (120) gespannt wird;
wenn das Drehantriebsmoment vom Hauptantriebsende (101) an das Abtriebsende (102) nicht mehr bereitgestellt wird, werden die Zwischenabtriebskupplungs-Struktur (1051) und die abtriebsseitige Kupplungsstruktur (1052) ausgerückt, und die passive Seite der Zwischenkopplungsstruktur wird durch einen Freigabe-Rückführeffekt zurückgestellt, der durch die Rückführbetätigungsfeder (120) bereitgestellt wird, um dadurch die Übertragung der kinetischen Rotationsenergie zu beenden;
außerdem befindet sich, wenn die Drehgeschwindigkeit, mit der die Fliehkraftkupplung (1006) am Hauptantriebsende (101), angetrieben wird, größer als ihre oder gleich ihrer ausgelösten Drehgeschwindigkeit ist, die Fliehkraftkupplung (1006) in einem ausgelösten Zustand, so dass die Dämpfung zwischen der Zwischenübertragungsstruktur-Baugruppe (104) und dem feststehenden Gehäuse (107) nicht bereitgestellt wird, und die passive Seite der Zwischenkopplungsstruktur der Zwischenübertragungsstruktur-Baugruppe (104) durch die Rückführbetätigungsfeder (120), die zurückgestellt werden soll, bewegt wird, wodurch ermöglicht wird, dass die Zwischenabtriebskupplungs-Struktur (1051) und die abtriebsseitige Kupplungsstruktur (1052) ausgerückt werden.
-- eine Grenzdrehmoment-Gleitdämpfungsvorrichtung (106): bestehend aus einer Mechanikvorrichtung, die einen Grenzdrehmoment-Gleitdämpfungseffekt mit einer Rückhaltefunktion aufweist, während relative Drehbewegungen zwischen der Zwischenübertragungsstruktur-Baugruppe (104) und dem feststehenden Gehäuse (107) generiert werden; und zwischen der Fliehkraftkupplung (1006) und dem feststehenden Gehäuse (107) installiert wird, so dass, durch Einwirkungen der Grenzdrehmoment-Gleitdämpfungsvorrichtung (106), relative Bewegungen zwischen der aktiven Seite der Zwischenkopplungsstruktur und der passiven Seite der Zwischenkopplungsstruktur, die in der Zwischenübertragungsstruktur-Baugruppe (104) kombiniert sind, generiert werden, wenn die aktive Seite der Zwischenkopplungsstruktur vom Hauptantriebsende (101) in Drehung angetrieben wird,
wobei die Struktur Folgendes umfasst: bestehend aus der Mechanikvorrichtung, die durch die mechanische Kraft, die Federvorspannkraft, die elektromagnetische Kraft einer elektrisch erregten Spule oder die Einwirkungskraft eines Dauermagneten für die Grenzdrehmoment-Gleitdämpfungsvorrichtung (106), einschließlich zwischen Feststoff und Feststoff, oder zwischen einem Feststoff und einem viskösen Fluid, oder zwischen einem viskösen Fluid und einem viskösen Fluid, oder zwischen einem Feststoff und gasförmigen oder flüssigen Fluiden erfolgt, um eine Gleitdämpfung zu generieren;
-- Fliehkraftkupplung (1006): konfiguriert durch eine Fliehkraftkupplungs-Strukturvorrichtung mit der Funktion des Abschneidens bei einer feststehenden und geringen Geschwindigkeit, und installiert zwischen der Zwischenübertragungsstruktur-Baugruppe (104) und der Grenzdrehmoment-Gleitdämpfungsvorrichtung (106), und wenn die aktive Seite der Zwischenkopplungsstruktur vom Hauptantriebsende (101) in Drehung angetrieben wird, um eine voreingestellte Drehgeschwindigkeit zu erzielen, befindet sich die Fliehkraftkupplung (1006) in einem eingegriffenen Zustand, um die Zwischenübertragungsstruktur-Baugruppe (104) und die Grenzdrehmoment-Gleitdämpfungsvorrichtung (106) zu kombinieren, um die Grenzdrehmoment-Gleitdämpfung zwischen der Zwischenübertragungsstruktur-Baugruppe (104) und dem feststehenden Gehäuse (107) zu generieren, wodurch eine relative Bewegungen zwischen der aktiven Seite der Zwischenkopplungsstruktur und der passiven Seite der Zwischenkopplungsstruktur, kombiniert in der Zwischenübertragungsstruktur-Baugruppe (104), generiert wird;
-- ein feststehendes Gehäuse (107): konfiguriert durch eine feststehende Gehäusestruktur zur Unterbringung Fliehkraft, kombiniert mit der durch Drehmoment betätigten Gleitdämpfungskupplung;
-- eine begrenzende Struktur (115): bestehend aus einem Mechanismus, der dazu in der Lage ist, relative Positionen der Zwischenübertragungsstruktur-Baugruppe (104) und des Hauptantriebsendes (101) zu begrenzen, und mit dem drehenden Teil des Hauptantriebsendes (101) kombiniert ist;
-- eine Rückführbetätigungsfeder (120): wobei es sich um eine Federvorrichtung handelt, die zusammendrückbar ist, um Energie zu speichern, und lösbar ist, um Energie abzugeben, und die zwischen der Zwischenabtriebskupplungs-Struktur (1051) und der abtriebsseitigen Kupplungsstruktur (1052) angeordnet ist, und deren Normalzustand darin besteht, die Zwischenabtriebskupplungs-Struktur (1051) und die abtriebsseitige Kupplungsstruktur (1052) zu trennen, um die Übertragung der kinetischen Rotationsenergie zu beenden; wenn die Zwischenabtriebskupplungs-Struktur (1051) und die abtriebsseitige Kupplungsstruktur (1052) derart angetrieben werden, dass sie eingerückt sind, wird die Rückführbetätigungsfeder (120) synchron vorgespannt, um sich in einem Energie speichernden Zustand zu befinden;
-- eine Zwischenabtriebskupplungs-Struktur (1051): die Zwischenabtriebskupplungs-Struktur (1051) besteht aus einer Kupplungsfunktions-Struktur und ist in der Zwischenübertragungsstruktur-Baugruppe (104) installiert, wenn die aktive Seite der Zwischenkopplungsstruktur vom Hauptantriebsende (101) in angetrieben wird, werden die Zwischenabtriebskupplungs-Struktur (1051) und die Zwischenübertragungsstruktur-Baugruppe (104) durch die aktive Seite der Zwischenkopplungsstruktur (204) angetrieben, um Schließ-/Öffnungsvorgänge mit der abtriebsseitigen Kupplungsstruktur (1052) auszuführen, um kinetische Rotationsenergie zu übertragen, wenn die Antriebskraft vom Hauptantriebsende (101) zum Abtriebsende (102) nicht mehr bereitgestellt wird, werden die Zwischenabtriebskupplungs-Struktur (1051) und die abtriebsseitige Kupplungsstruktur (1052) durch die elastische Freigabekraft der Rückführbetätigungsfeder (120) ausgerückt, wodurch die Übertragung der kinetischen Rotationsenergie beendet wird.
-- eine abtriebsseitige Kupplungsstruktur (1052): bestehend aus einer Kupplungsfunktions-Struktur, die in der Lage ist, mit der Zwischenabtriebskupplungs-Struktur (1051) Schließ-/Öffnungsvorgänge auszuführen, um kinetische Rotationsenergie zu übertragen oder ausgerückt zu werden, um die Übertragung der kinetischen Rotationsenergie zu beenden, und die abtriebsseitige Kupplungsstruktur (1052) ist mit dem Abtriebsende (102) verbunden;
-- wobei die Kupplungsstruktur der Zwischenabtriebskupplungs-Struktur (1051) und der abtriebsseitigen Kupplungsstruktur (1052) aus einer Struktur nach Art einer Reibungskupplung, einer Struktur nach Art einer schaltbaren Kupplung oder einer Struktur nach Art einer Gleichlaufkupplung besteht.

4. Durch Drehmoment betätigte Fliehkraftgleitdämpfungskupplung nach einem der vorhergehenden Ansprüche, wobei die Zwischenkopplungsstruktur, die in der Zwischenübertragungsstruktur-Baugruppe (104) installiert ist, weiter aus einer Schraubenspindelstruktur (1041) und einer Schraubenmutterstruktur (1042) zusammengesetzt ist und aus Folgendem besteht:
-- ein Hauptantriebsende (101):zusammengesetzt aus einem Drehmechanismus, um kinetische Rotationsenergie einzugeben; wobei das Hauptantriebsende (101) dazu dient, eine aktive Seite der Zwischenkopplungsstruktur (204) anzutreiben, die in einer Zwischenübertragungsstruktur-Baugruppe (104) installiert ist, wobei das Hauptantriebsende (101) mit einer begrenzenden Struktur (115) installiert ist, um die relativen Positionen der Zwischenübertragungsstruktur-Baugruppe (104) und des Hauptantriebsendes (101) zu begrenzen;
-- ein Abtriebsende (102):bestehend aus einem Drehmechanismus, um kinetische Rotationsenergie abzugeben; wobei das Abtriebsende (102) mit einer abtriebsseitigen Kupplungsstruktur (1052) verbunden ist und durch die abtriebsseitige Kupplungsstruktur (1052) gesteuert wird;
- eine Zwischenübertragungsstruktur-Baugruppe (104): die Zwischenübertragungsstruktur-Baugruppe (104) ist zwischen dem Hauptantriebsende (101) und dem Abtriebsende (102) installiert und ist dazu in der Lage, Drehantriebs und axiale Bewegungen auszuführen, wobei die Zwischenübertragungsstruktur-Baugruppe (104) mit einer Zwischenkopplungsstruktur versehen ist, die von dem Hauptantriebsende (101) angetrieben wird, wobei die Zwischenkopplungsstruktur die Funktion der aktiven Seite der Zwischenkopplungsstruktur aufweist, die aus der Schraubenspindelstruktur (1041) besteht, und die Funktion der passiven Seite der Zwischenkopplungsstruktur aufweist, die aus der Schraubenmutterstruktur (1042) besteht, wobei die Schraubenspindelstruktur (1041) und die Schraubenmutterstruktur (1042) koaxial gekoppelt sind und interagieren, wobei die passive Seite der Zwischenkopplungsstruktur, die aus der Schraubenmutterstruktur (1042) besteht, mit der Zwischenübertragungsstruktur-Baugruppe (104) verbunden ist, wobei eine Grenzdrehmoment-Gleitdämpfungsvorrichtung (106) und eine Fliehkraftkupplung (1006) zwischen der Zwischenübertragungsstruktur-Baugruppe (104) und dem feststehenden Gehäuse (107) installiert ist, wenn die Schraubenspindelstruktur (1041) durch das Hauptantriebsende (101) angetrieben wird, um sich in einem Leerlauf-Drehzustand zu befinden, bevor eine eingestellte Drehgeschwindigkeit erzielt wird, und, sobald die voreingestellte Drehgeschwindigkeit der Fliehkraftkupplung (1006) erreicht oder überstiegen wird, die zwischen der Zwischenübertragungsstruktur-Baugruppe (104) und dem feststehenden Gehäuse (107) installiert ist, dreht, um sich in einem eingegriffenen Zustand zu befinden, um mit der Grenzdrehmoment-Dämpfungsvorrichtung (106) kombiniert zu sein, um eine dämpfende Wirkung zu generieren, wodurch das Drehantriebsmoment auf die Schraubenmutterstruktur (1042) angewendet wird, um sich zu bewegen, und weiter die Zwischenübertragungsstruktur-Baugruppe (104), die mit der Schraubenmutterstruktur (1042) verbunden ist, zu veranlassen, eine relative axiale Bewegung zu generieren, um die Zwischenabtriebskupplungs-Struktur (1051), die in der Zwischenübertragungsstruktur-Baugruppe (104) installiert ist, anzutreiben, um Schließ-/Öffnungsvorgänge mit der abtriebsseitigen Kupplungsstruktur (1052) auszuführen, um kinetische Rotationsenergie zu übertragen und zu bewirken, dass die Rückführbetätigungsfeder (120) gespannt wird;
wenn das Drehantriebsmoment vom Hauptantriebsende (101) zum Abtriebsende (102) nicht mehr bereitgestellt wird, die Zwischenabtriebskupplungs-Struktur (1051) und die abtriebsseitige Kupplungsstruktur (1052) ausgelöst werden und die Schraubenmutterstruktur (1042), durch den Freigabe-Rückführeffekt zurückgestellt wird, der durch die Rückführbetätigungsfeder (120) bereitgestellt wird, um dadurch die Übertragung der kinetischen Rotationsenergie beendet wird.
außerdem befindet sich, wenn die Drehgeschwindigkeit, mit der die Fliehkraftkupplung (1006) am Hauptantriebsende (101) angetrieben wird, größer als ihre oder gleich ihrer ausgelösten Drehgeschwindigkeit ist, die Fliehkraftkupplung (1006) in einem ausgelösten Zustand, so dass die Dämpfung zwischen der Zwischenübertragungsstruktur-Baugruppe (104) und dem feststehenden Gehäuse (107) nicht bereitgestellt wird, und die passive Seite der Zwischenkopplungsstruktur der Zwischenübertragungsstruktur-Baugruppe (104) durch die Rückführbetätigungsfeder (120), die zurückgestellt werden soll, bewegt wird, wodurch ermöglicht wird, dass die Zwischenabtriebskupplungs-Struktur (1051) und die abtriebsseitige Kupplungsstruktur (1052) ausgerückt werden;
-- eine Grenzdrehmoment-Gleitdämpfungsvorrichtung (106): bestehend aus einer Mechanikvorrichtung, die einen Grenzmoment-Gleitdämpfeffekt mit einer Rückhaltefunktion aufweist, während relative Drehbewegungen zwischen der Zwischenübertragungsstruktur-Baugruppe (104) und dem feststehenden Gehäuse (107) generiert werden; und installiert zwischen der Fliehkraftkupplung (1006) und dem feststehenden Gehäuse (107), so dass, wenn die Schraubenspindelstruktur (1041) durch das Hauptantriebsende (101) in Drehung angetrieben wird, durch Einwirkungen der Grenzdrehmoment-Gleitdämpfungsvorrichtung (106) relative Bewegungen zwischen der Schraubenspindelstruktur (1041) und der Schraubenmutterstruktur (1042), die in der Zwischenübertragungsstruktur-Baugruppe (104) kombiniert sind, generiert werden, während die Schraubenspindelstruktur (1041) einen Drehantrieb an der Schraubenmutterstruktur (1042) ausführt;
die Struktur umfasst Folgendes: bestehend aus der Mechanikvorrichtung, die durch die mechanische Kraft, die Federvorspannkraft, die elektromagnetische Kraft einer elektrisch erregten Spule oder die Einwirkungskraft eines Dauermagneten für die Grenzdrehmoment-Gleitdämpfungsvorrichtung (106), einschließlich zwischen Feststoff und Feststoff, oder zwischen einem Feststoff und einem viskösen Fluid, oder zwischen einem viskösen Fluid und einem viskösen Fluid, oder zwischen Feststoffen und gasförmigen oder flüssigen Fluiden erfolgt, um eine Gleitdämpfung zu generieren;
-- Fliehkraftkupplung (1006): konfiguriert durch eine Fliehkraftkupplungs-Strukturvorrichtung mit der Funktion des Abschneidens bei einer feststehenden und geringen Geschwindigkeit, und installiert zwischen der Zwischenübertragungsstruktur-Baugruppe (104) und der Grenzdrehmoment-Gleitdämpfungsvorrichtung (106), und wenn die aktive Seite der Zwischenkopplungsstruktur vom Hauptantriebsende (101) in Drehung angetrieben wird, um eine voreingestellte Drehgeschwindigkeit zu erzielen befindet sich die Fliehkraftkupplung (1006) in einem eingegriffenen Zustand, um die Zwischenübertragungsstruktur-Baugruppe (104) und der Grenzdrehmoment-Gleitdämpfungsvorrichtung (106) zu kombinieren, um die Grenzdrehmoment-Gleitdämpfung zwischen der Zwischenübertragungsstruktur-Baugruppe (104) und dem feststehenden Gehäuse (107) zu generieren, wodurch eine relative Bewegungen zwischen der aktiven Seite der Zwischenkopplungsstruktur und der passiven Seite der Zwischenkopplungsstruktur, die in der Zwischenübertragungsstruktur-Baugruppe (104) kombiniert sind, generiert wird;
-- ein feststehendes Gehäuse (107): konfiguriert durch eine feststehende Gehäusestruktur zur Unterbringung der Fliehkraft, kombiniert mit der durch Drehmoment betätigten Gleitdämpfungskupplung
-- eine begrenzende Struktur (115): bestehend aus einem Mechanismus, der dazu in der Lage ist, relative Positionen der Zwischenübertragungsstruktur-Baugruppe (104) und des Hauptantriebsendes (101) zu begrenzen und mit dem drehenden Teil des Hauptantriebsendes (101) kombiniert ist;
-- eine Rückführbetätigungsfeder (120): wobei es sich um eine Federvorrichtung handelt, die zusammendrückbar ist, um Energie zu speichern, und lösbar ist, um Energie abzugeben, und die zwischen der Zwischenabtriebskupplungs-Struktur (1051) und der abtriebsseitigen Kupplungsstruktur (1052) angeordnet ist, und deren Normalzustand darin besteht, die Zwischenabtriebskupplungs-Struktur (1051) und die abtriebsseitige Kupplungsstruktur (1052) zu trennen, um die Übertragung der kinetischen Rotationsenergie zu beenden; wenn die Zwischenabtriebskupplungs-Struktur (1051) und die abtriebsseitige Kupplungsstruktur (1052) derart angetrieben werden, dass sie eingerückt sind, wird die Rückführbetätigungsfeder (120) synchron vorgespannt, um sich in einem Energie speichernden Zustand zu befinden;
-- eine Zwischenabtriebskupplungs-Struktur (1051): die Zwischenabtriebskupplungs-Struktur (1051) besteht aus einer Kupplungsfunktions-Struktur und ist in der Zwischenübertragungsstruktur-Baugruppe (104) installiert, wenn die Schraubenspindelstruktur (1041) vom Hauptantriebsende (101) angetrieben wird, werden die Zwischenabtriebskupplungs-Struktur (1051) und die Zwischenübertragungsstruktur-Baugruppe (104) durch die Schraubenspindelstruktur (1041) der Zwischenkopplungsstruktur angetrieben, um Schließ-/Öffnungsvorgänge mit der abtriebsseitigen Kupplungsstruktur (1052) auszuführen, um kinetische Rotationsenergie zu übertragen und zu bewirken, dass die Rückführbetätigungsfeder (120) gespannt wird; wenn das Drehantriebsmoment vom Hauptantriebsende (101) zum Abtriebsende (102) nicht mehr bereitgestellt wird, werden die Zwischenabtriebskupplungs-Struktur (1051) und die abtriebsseitige Kupplungsstruktur (1052) durch die elastische Freigabekraft der Rückführbetätigungsfeder (120) ausgerückt , wodurch die Übertragung der kinetischen Rotationsenergie beendet wird.
-- eine abtriebsseitige Kupplungsstruktur (1052): bestehend aus einer Kupplungsfunktions-Struktur, die dazu in der Lage ist, mit der Zwischenabtriebskupplungs-Struktur (1051) Schließ-/Öffnungsvorgänge auszuführen, um kinetische Rotationsenergie zu übertragen, oder ausgerückt zu werden, um die Übertragung der kinetischen Rotationsenergie zu beenden, und die abtriebsseitige Kupplungsstruktur (1052) ist mit dem Abtriebsende (102) verbunden;
-- wobei die Kupplungsstruktur der Zwischenabtriebskupplungs-Struktur (1051) und der abtriebsseitigen Kupplungsstruktur (1052) aus einer Struktur nach Art einer Reibungskupplung, einer Struktur nach Art einer schaltbaren Kupplung oder der Struktur nach Art einer Gleichlaufkupplung.

5. Durch Drehmoment betätigte Fliehkraftgleitdämpfungskupplung nach einem der vorhergehenden Ansprüche, wobei die Zwischenkopplungsstruktur (204), die in der Zwischenübertragungsstruktur-Baugruppe (104) installiert ist, weiter aus einer spulenförmige Feder (1043) zusammengesetzt ist, die dazu in der Lage ist, dich für eine axiale Betätigung zu drehen und aus Folgendem besteht:
-- einem Hauptantriebsende (101): bestehend aus einem Drehmechanismus, um kinetische Rotationsenergie einzugeben; wobei das Hauptantriebsende (101) eine spulenförmige Feder ist, die dazu in der Lage ist, sich für eine axiale Betätigung (1043) zu drehen, um die Zwischenübertragungsstruktur-Baugruppe (104) anzutreiben, wobei das Hauptantriebsende (101) mit einer begrenzenden Struktur (115) installiert ist, um die relativen Positionen der Zwischenübertragungsstruktur-Baugruppe (104) und des Hauptantriebsendes (101) zu begrenzen;
-- einem Abtriebsende (102): bestehend aus einem Drehmechanismus, um kinetische Rotationsenergie abzugeben; wobei das Abtriebsende (102) mit einer abtriebsseitigen Kupplungsstruktur (1052) verbunden ist und durch die abtriebsseitige Kupplungsstruktur (1052) gesteuert wird;
-- eine Zwischenübertragungsstruktur-Baugruppe (104): die Zwischenübertragungsstruktur-Baugruppe (104) ist zwischen dem Hauptantriebsende (101) und dem Abtriebsende (102) installiert und ist dazu in der Lage, einen Drehantrieb und axiale Bewegungen auszuführen, die Zwischenkopplungsstruktur-Baugruppe (104) ist mit einer spulenförmigen Feder installiert, die dazu in der Lage ist, sich für eine axiale Betätigung (1043) zu drehen, die dazu dient, um die Funktion einer Zwischenkopplungsstruktur bereitzustellen und koaxial auf der Welle zwischen der Zwischenübertragungsstruktur-Baugruppe (104) und dem Hauptantriebsende (101) installiert ist, wobei ein Ende der spulenförmigen Feder, die dazu in der Lage ist, sich für eine Axialbetätigung (1043) zu drehen, an dem Hauptantriebsende (101) befestigt ist, um die Funktion der aktiven Seite der Zwischenkopplungsstruktur bereitzustellen, wobei das andere Ende der spulenförmigen Feder, die dazu in der Lage ist, sich für eine axiale Betätigung (1043) zu drehen, in der Zwischenübertragungsstruktur-Baugruppe (104) installiert ist, um die Funktion der passiven Seite der Zwischenkopplungsstruktur bereitzustellen, wobei eine Grenzdrehmoment-Gleitdämpfungsvorrichtung (106) und eine Fliehkraftkupplung (1006) zwischen der Zwischenübertragungsstruktur-Baugruppe (104) und dem feststehenden Gehäuse (107) installiert sind; wenn die spulenförmige Feder, die dazu in der Lage ist, sich für eine axiale Betätigung (1043) zu drehen, und die Zwischenübertragungsstruktur-Baugruppe (104) vom Hauptantriebsende (101) angetrieben werden, um sich in einem Leerlauf-Drehzustand zu befinden, bevor eine voreingestellte Drehgeschwindigkeit erzielt wird, und sobald die voreingestellte Drehgeschwindigkeit erreicht oder überstiegen wird, eine Dämpfungswirkung durch die Fliehkraft-kombinierende Fliehkraftkupplung (1006) und die Grenzdrehmoment-Gleitdämpfungsvorrichtung (106), die zwischen der Zwischenübertragungsstruktur-Baugruppe (104) und dem feststehenden Gehäuse (107) installiert ist, generiert wird, so dass die spulenförmige Feder, die dazu in der Lage, sich für eine axiale Betätigung (1043) zu drehen, gedreht und gespannt wird, um eine axiale Betätigungskraft zu generieren, und die Zwischenübertragungsstruktur-Baugruppe (104) veranlasst, eine relative axiale Bewegung zu generieren, so dass die Zwischenabtriebskupplungs-Struktur (1051), die in der Zwischenübertragungsstruktur-Baugruppe (104) installiert ist, angetrieben wird, um Schließ-/Öffnungsvorgänge mit der abtriebsseitigen Kupplungsstruktur (1052) auszuführen, um kinetische Rotationsenergie zu übertragen und zu bewirken, dass die Rückführbetätigungsfeder (120) gespannt wird;
wenn das Drehantriebsmoment vom Hauptantriebsende (101) zum Abtriebsende (102) nicht mehr bereitgestellt wird, werden die Zwischenabtriebskupplungs-Struktur (1051) und die abtriebsseitige Kupplungsstruktur (1052) durch die Freigaberückstellkraft der Rückführbetätigungsfeder (120) ausgerückt, und die spulenförmige Feder, die dazu in der Lage ist, sich für eine axiale Betätigung (1043) zu drehen, wird zurückgestellt, um die Übertragung der kinetischen Rotationsenergie zu beenden;
außerdem befindet sich, wenn die Drehgeschwindigkeit, mit der die Fliehkraftkupplung (1006) am Hauptantriebsende (101) angetrieben wird, größer als ihre oder gleich ihrer ausgelösten Drehgeschwindigkeit ist, die Fliehkraftkupplung (1006) in einem ausgelösten Zustand, so dass die Dämpfung zwischen der Zwischenübertragungsstruktur-Baugruppe (104) und dem feststehenden Gehäuse (107) nicht bereitgestellt wird, und die passive Seite der Zwischenkopplungsstruktur der Zwischenübertragungsstruktur-Baugruppe (104) durch die Rückführbetätigungsfeder (120), die zurückgestellt werden soll, bewegt wird, wobei die Zwischenabtriebskupplungs-Struktur (1051) und die abtriebsseitige Kupplungsstruktur (1052) ausgerückt werden;
-- eine Grenzdrehmoment-Gleitdämpfungsvorrichtung (106): bestehend aus einer Mechanikvorrichtung, die einen Grenzmoment-Gleitdämpfeffekt mit einer Rückhaltefunktion aufweist, während relative Drehbewegungen zwischen der Zwischenübertragungsstruktur-Baugruppe (104) und dem feststehenden Gehäuse (107) generiert werden; und zwischen der Fliehkraftkupplung (1006) und dem feststehenden Gehäuse (107) installiert; wenn die spulenförmige Feder, die dazu in der Lage ist, sich für eine axiale Betätigung (1043) zu drehen, durch das Hauptantriebsende (101) eine Winkelverschiebungs-Antriebs-Spannungskraft durch Einwirkungen der Grenzdrehmoment-Gleitdämpfungsvorrichtung (106) erfährt, werden relative Bewegungen in der Zwischenübertragungsstruktur-Baugruppe (104) generiert;
die Struktur umfasst Folgendes: bestehend aus der Mechanikvorrichtung, die durch die mechanische Kraft, die Federvorspannkraft, die elektromagnetische Kraft einer elektrisch erregten Spule oder die Einwirkungskraft eines Dauermagneten für die Grenzdrehmoment-Gleitdämpfungsvorrichtung (106), einschließlich zwischen Feststoff und Feststoff, oder zwischen einem Feststoff und einem viskösen Fluid, oder zwischen einem viskösen Fluid und einem viskösen Fluid, oder zwischen Feststoffen und gasförmigen oder flüssigen Fluiden erfolgt, um eine Gleitdämpfung zu generieren;
-- Fliehkraftkupplung (1006): konfiguriert durch eine Fliehkraftkupplungs-Strukturvorrichtung mit der Funktion des Abschneidens bei einer feststehenden und geringen Geschwindigkeit, und installiert zwischen der Zwischenübertragungsstruktur-Baugruppe (104) und der Grenzdrehmoment-Gleitdämpfungsvorrichtung (106), und wenn die aktive Seite der Zwischenkopplungsstruktur vom Hauptantriebsende (101) in Drehung angetrieben wird, um eine voreingestellte Drehgeschwindigkeit zu erzielen, befindet sich die Fliehkraftkupplung (1006) in einem eingegriffenen Zustand, um die Zwischenübertragungsstruktur-Baugruppe (104) und die Grenzdrehmoment-Gleitdämpfungsvorrichtung (106) zu kombinieren, um die Grenzdrehmoment-Gleitdämpfung zwischen der Zwischenübertragungsstruktur-Baugruppe (104) und dem feststehenden Gehäuse (107) zu generieren, wodurch eine relative Bewegungen zwischen der aktiven Seite der Zwischenkopplungsstruktur und der passiven Seite der Zwischenkopplungsstruktur, die in der Zwischenübertragungsstruktur-Baugruppe (104) kombiniert sind, generiert wird;
-- ein feststehendes Gehäuse (107): konfiguriert durch ein feststehendes Gehäusestruktur zur Unterbringung der Fliehkraft, kombiniert mit der durch Drehmoment betätigten Gleitdämpfungskupplung;
-- eine begrenzende Struktur (115): bestehend aus einem Mechanismus, der dazu in der Lage ist, relative Positionen der Zwischenübertragungsstruktur-Baugruppe (104) und des Hauptantriebsendes (101) zu begrenzen, und mit dem drehenden Teil des Hauptantriebsendes (101) kombiniert ist;
-- eine Rückführbetätigungsfeder (120): wobei es sich um eine Federvorrichtung handelt, die zusammendrückbar ist, um Energie zu speichern, und lösbar ist, um Energie abzugeben, und die zwischen der Zwischenabtriebskupplungs-Struktur (1051) und der abtriebsseitigen Kupplungsstruktur (1052) angeordnet ist, und deren Normalzustand darin besteht, die Zwischenabtriebskupplungs-Struktur (1051) und die abtriebsseitige Kupplungsstruktur (1052) zu trennen, um die Übertragung der kinetischen Rotationsenergie zu beenden; wenn die Zwischenabtriebskupplungs-Struktur (1051) und die abtriebsseitige Kupplungsstruktur (1052) derart angetrieben werden, dass sie eingerückt sind, wird die Rückführbetätigungsfeder (120) synchron vorgespannt, um sich in einem Energie speichernden Zustand zu befinden;
-- Zwischenabtriebskupplungs-Struktur (1051): die Zwischenabtriebskupplungs-Struktur (1051) besteht aus einer Kupplungsfunktions-Struktur und ist in der Zwischenübertragungsstruktur-Baugruppe (104) installiert, wenn die spulenförmige Feder, die dazu in der Lage ist, sich für eine axiale Betätigung (1043) zu drehen, am Hauptantriebsende (101) angetrieben wird und die Zwischenabtriebskupplungs-Struktur (1051) und die Zwischenübertragungsstruktur-Baugruppe (104) von der spulenförmigen Feder angetrieben werden, die dazu in der Lage ist, sich für eine axiale Betätigung (1043) zu drehen, umfassend die der Funktion der Zwischenkopplungsstruktur und installiert zwischen der Zwischenübertragungsstruktur-Baugruppe (104) und dem Hauptantriebsende (101), um Schließ-/Öffnungsvorgänge mit der abtriebsseitigen Kupplungsstruktur (1052) auszuführen, um kinetische Rotationsenergie zu übertragen und zu bewirken, dass die Rückführbetätigungsfeder (120) gespannt wird; wenn das Drehantriebsmoment vom Hauptantriebsende (101) zum Abtriebsende (102) nicht mehr bereitgestellt wird, werden die Zwischenabtriebskupplungs-Struktur (1051) und die abtriebsseitige Kupplungsstruktur (1052) ausgerückt, und die spulenförmige Feder, die dazu in der Lage ist, sich für eine axiale Betätigung (1043) zu drehen, wird durch den Freigabe-Rückführeffekt der Rückführbetätigungsfeder (120) zurückgestellt, um die Übertragung der kinetischen Rotationsenergie zu beenden;
-- eine abtriebsseitige Kupplungsstruktur (1052): bestehend aus einer Kupplungsfunktions-Struktur, die dazu in der Lage ist, mit der Zwischenabtriebskupplungs-Struktur (1051) Schließ-/Öffnungsvorgänge auszuführen, um kinetische Rotationsenergie zu übertragen, oder ausgerückt zu werden, um die Übertragung der kinetischen Rotationsenergie zu beenden, und die abtriebsseitige Kupplungsstruktur (1052) ist mit dem Abtriebsende (102) verbunden;
-- wobei die Kupplungsstruktur der Zwischenabtriebskupplungs-Struktur (1051) und der abtriebsseitigen Kupplungsstruktur (1052) aus einer Struktur nach Art einer Reibungskupplung, der Struktur nach Art einer schaltbaren Kupplung oder einer Struktur nach Art einer Gleichlaufkupplung besteht.

6. Durch Drehmoment betätigte Fliehkraftgleitdämpfungskupplung nach einem der vorhergehenden Ansprüche, wobei die Zwischenkopplungsstruktur, die in der Zwischenübertragungsstruktur-Baugruppe (104) installiert ist, weiter aus einer axialen Zwangsfreilaufkupplung zusammengesetzt ist und aus Folgendem besteht:
-- einem Hauptantriebsende (101): bestehend aus einem Drehmechanismus, um kinetische Rotationsenergie abzugeben; wobei das Hauptantriebsende (101) eine aktive Seite einer axialen Zwangsfreilaufkupplung (1061) ist, welche die Funktion der aktiven Seite der Zwischeneingangskopplungs-Struktur aufweist, um die Zwischenübertragungsstruktur-Baugruppe (104) anzutreiben, wobei das Hauptantriebsende (101) mit einer begrenzenden Struktur (115) installiert ist, um die relativen Positionen der Zwischenübertragungsstruktur-Baugruppe (104) und des Hauptantriebsendes (101) zu begrenzen;
-- einem Abtriebsende (102): bestehend aus einem Drehmechanismus, um kinetische Rotationsenergie abzugeben; wobei das Abtriebsende (102) mit einer abtriebsseitigen Kupplungsstruktur (1052) verbunden ist und durch die abtriebsseitige Kupplungsstruktur (1052) gesteuert wird;
-- einer Zwischenübertragungsstruktur-Baugruppe (104): die Zwischenübertragungsstruktur-Baugruppe (104) ist zwischen dem Hauptantriebsende (101) und dem Abtriebsende (102) installiert, wobei die Zwischenübertragungsstruktur-Baugruppe (104) mit einer axialen Zwangsfreilaufkupplung (1060) installiert ist, welche die Funktion der Zwischenkopplungsstruktur übernimmt, wobei die axiale Zwangsfreilaufkupplung (1060) mit einer aktiven Seite der axialen Zwangsfreilaufkupplung (1061) und einer passiven Seite der axialen Zwangsfreilaufkupplung (1062) und mittleren Laufelementen (1063) ausgestattet ist, wobei eine Vielzahl von sägezahnförmigen Zwischenräumen zwischen der aktiven Seite der axialen Zwangsfreilaufkupplung (1061) und der passiven Seite der axialen Zwangsfreilaufkupplung (1062) gebildet ist, um die mittleren Laufelemente (1063) aufzunehmen, um die Freilaufkupplungsfunktion zu bilden; wobei eine Grenzdrehmoment-Gleitdämpfungsvorrichtung (106) und eine Fliehkraft-kombinierende Fliehkraftkupplung (1006) zwischen der Zwischenübertragungsstruktur-Baugruppe (104) und dem feststehenden Gehäuse (107) installiert sind, wenn die axiale Zwangsfreilaufkupplung (1060) vom Hauptantriebsende (101) angetrieben wird, um sich in einem Leerlauf-Drehzustand zu befinden, bevor eine voreingestellte Rotationsgeschwindigkeit erzielt wird, und sobald die voreingestellte Drehgeschwindigkeit erreicht oder überstiegen wird, ein Dämpfungseffekt durch die Fliehkraft generiert wird, der die Fliekraftkupplung (1006) und die Grenzdrehmoment-Gleitdämpfungsvorrichtung (106) kombiniert, die zwischen der Zwischenübertragungsstruktur-Baugruppe (104) und dem feststehenden Gehäuse (107) installiert sind, so dass die aktive Seite der axialen Zwangsfreilaufkupplung (1061) das Drehantriebsmoment auf die passive Seite der axialen Zwangsfreilaufkupplung (1062) über die mittleren Laufelemente (1063) aufbringt; bevor bewirkt wird, dass die mittleren Laufelemente (1063) zwischen der aktiven Seite der axialen Zwangsfreilaufkupplung (1061) und der passiven Seite der axialen Zwangsfreilaufkupplung (1062) einrasten, wobei sich die passive Seite der axialen Zwangsfreilaufkupplung (1062) zwangsläufig axial bewegt, so dass die Zwischenübertragungsstruktur-Baugruppe (104), wird die passive Seite der axialen Zwangsfreilaufkupplung (1062) zwangsläufig axial bewegt, so dass die Zwischenübertragungsstruktur-Baugruppe (104), die mit der axialen Zwangsfreilaufkupplung (1060) installiert ist, eine relative Bewegung generiert, um die Zwischenabtriebskupplungs-Struktur (1051) und die abtriebsseitige Kupplungsstruktur (1052), die in der Zwischenübertragungsstruktur-Baugruppe (104) installiert ist, anzutreiben, um Öffnungs-/Schließvorgänge auszuführen um die kinetische Rotationsenergie zu übertragen und zu bewirken, dass die Rückführbetätigungsfeder (120) gespannt wird;
wenn das Drehantriebsmoment vom Hauptantriebsende (101) zum Abtriebsende (102) nicht mehr bereitgestellt wird, werden durch die Freigaberückstellkraft der Rückführbetätigungsfeder (120) die Zwischenabtriebskupplungs-Struktur (1051) und die abtriebsseitige Kupplungsstruktur (1052) ausgerückt, und die passive Seite der axialen Zwangsfreilaufkupplung (1062) wird zurückgestellt, um die Übertragung der kinetischen Rotationsenergie zu beenden;
außerdem befindet sich, wenn die Drehgeschwindigkeit, mit der die Fliehkraftkupplung (1006) am Hauptantriebsende (101) angetrieben wird, größer als ihre oder gleich ihrer ausgelösten Drehgeschwindigkeit ist, die Fliehkraftkupplung (1006) in einem ausgelösten Zustand, so dass die Dämpfung zwischen der Zwischenübertragungsstruktur-Baugruppe (104) und dem feststehenden Gehäuse (107) nicht bereitgestellt wird, und die passive Seite der Zwischenkopplungsstruktur der Zwischenübertragungsstruktur-Baugruppe (104) durch die Rückführbetätigungsfeder (120), die zurückgestellt werden soll, bewegt wird, wobei die Zwischenabtriebskupplungs-Struktur (1051) und die abtriebsseitige Kupplungsstruktur (1052) ausgelöst werden;
-- eine Grenzdrehmoment-Gleitdämpfungsvorrichtung (106): bestehend aus einer Mechanikvorrichtung, die einen Grenzdrehmoment-Gleitdämpfeffekt mit einer Rückhaltefunktion aufweist, während relative Drehbewegungen zwischen der Zwischenübertragungsstruktur-Baugruppe (104) und dem feststehenden Gehäuse (107) generiert werden; und zwischen der Fliehkraftkupplung (1006) und dem feststehenden Gehäuse (107) installiert ist; wenn die aktive Seite einer axialen Zwangsfreilaufkupplung (1061) vom Hauptantriebsende (101) in Drehung angetrieben wird, werden durch Einwirkungen der Grenzdrehmoment-Gleitdämpfungsvorrichtung (106) relative Bewegungen zwischen der aktiven Seite der axialen Zwangsfreilaufkupplung (1061) und der passiven Seite der axialen Zwangsfreilaufkupplung (1062) gebildet;
wobei die Struktur Folgendes umfasst: bestehend aus der Mechanikvorrichtung, die durch die mechanische Kraft, die Federvorspannkraft, die elektromagnetische Kraft einer elektrisch erregten Spule oder die Einwirkungskraft eines Dauermagneten für die Grenzdrehmoment-Gleitdämpfungsvorrichtung (106), einschließlich zwischen Feststoff und Feststoff, oder zwischen einem Feststoff und einem viskösen Fluid, oder zwischen einem viskösen Fluid und einem viskösen Fluid, oder zwischen Feststoffen und gasförmigen oder flüssigen Fluiden erfolgt, um eine Gleitdämpfung zu generieren;
-- eine Fliehkraftkupplung (1006): konfiguriert durch eine Fliehkraftkupplungs-Strukturvorrichtung mit der Funktion des Abschneidens bei einer feststehenden und geringen Geschwindigkeit, und installiert zwischen der Zwischenübertragungsstruktur-Baugruppe (104) und der Grenzdrehmoment-Gleitdämpfungsvorrichtung (106), und wenn die aktive Seite der Zwischenkopplungsstruktur vom Hauptantriebsende (101) in Drehung angetrieben wird, um eine voreingestellte Drehgeschwindigkeit zu erzielen, befindet sich die Fliehkraftkupplung (1006) in einem eingegriffenen Zustand, um die Zwischenübertragungsstruktur-Baugruppe (104) und die Grenzdrehmoment-Gleitdämpfungsvorrichtung (106) zu kombinieren, um die Grenzdrehmoment-Gleitdämpfung zwischen der Zwischenübertragungsstruktur-Baugruppe (104) und dem feststehenden Gehäuse(107) zu generieren, wodurch eine relative Bewegungen zwischen der aktiven Seite der Zwischenkopplungsstruktur und der passiven Seite der Zwischenkopplungsstruktur, die in der Zwischenübertragungsstruktur-Baugruppe (104) kombiniert sind, generiert wird;
-- ein feststehendes Gehäuse (107): konfiguriert durch eine feststehende Gehäusestruktur zur Unterbringung der Fliehkraft, kombiniert mit der durch Drehmoment betätigten Gleitdämpfungskupplung;
-- eine begrenzende Struktur (115): bestehend aus einem Mechanismus, der dazu in der Lage ist, relative Positionen der Zwischenübertragungsstruktur-Baugruppe (104) und des Hauptantriebsendes (101) zu begrenzen, und mit dem drehenden Teil des Hauptantriebsendes (101) kombiniert ist;
-- eine Rückführbetätigungsfeder (120): wobei es sich um eine Federvorrichtung handelt, die zusammendrückbar ist, um Energie zu speichern, und lösbar ist, um Energie abzugeben, und die zwischen der Zwischenabtriebskupplungs-Struktur (1051) und der abtriebsseitigen Kupplungsstruktur (1052) angeordnet ist, und deren Normalzustand darin besteht, die Zwischenabtriebskupplungs-Struktur (1051) und die abtriebsseitige Kupplungsstruktur (1052) zu trennen, um die Übertragung der kinetischen Rotationsenergie zu beenden; wenn die Zwischenabtriebskupplungs-Struktur (1051) und die abtriebsseitige Kupplungsstruktur (1052) derart angetrieben werden, dass sie eingerückt sind, wird die Rückführbetätigungsfeder (120) synchron vorgespannt, um sich in einem Energie speichernden Zustand zu befinden;
-- eine Zwischenabtriebskupplungs-Struktur (1051): die Zwischenabtriebskupplungs-Struktur (1051) besteht aus einer Kupplungsfunktions-Struktur und ist in der Zwischenübertragungsstruktur-Baugruppe (104) installiert, wenn die aktive Seite der axialen Zwangsfreilaufkupplung (1061) vom Hauptantriebsende (101) angetrieben wird, wird die passive Seite der axialen Zwangsfreilaufkupplung (1062), die in der Zwischenübertragungsstruktur-Baugruppe (104) installiert ist, axial angetrieben, um die Zwischenübertragungsstruktur-Baugruppe (104) anzutreiben, und die Zwischenabtriebskupplungs-Struktur (1051): die in der Zwischenübertragungsstruktur-Baugruppe (104) installiert ist, um Schließ-/Öffnungsvorgänge mit der abtriebsseitigen Kupplungsstruktur (1052) auszuführen, um kinetische Rotationsenergie zu übertragen und zu bewirken, dass die Rückführbetätigungsfeder (120) gespannt wird; wenn das Drehantriebsmoment vom Hauptantriebsende (101) zum Abtriebsende (102) nicht mehr bereitgestellt wird, werden die Zwischenabtriebskupplungs-Struktur (1051) und die abtriebsseitige Kupplungsstruktur (1052) ausgerückt, und die passive Seite der axialen Zwangsfreilaufkupplung (1062), wird durch den Freigabe-Rückführeffekt zur Rückführung der Rückführbetätigungsfeder (120) zurückgestellt, um die Übertragung der kinetischen Rotationsenergie zu beenden;
-- eine abtriebsseitige Kupplungsstruktur (1052): bestehend aus einer Kupplungsfunktions-Struktur, die dazu in der Lage ist, mit der Zwischenabtriebskupplungs-Struktur (1051) Schließ-/Öffnungsvorgänge auszuführen, um kinetische Rotationsenergie zu übertragen, oder ausgerückt zu werden, um die Übertragung der kinetischen Rotationsenergie zu beenden, und die abtriebsseitige Kupplungsstruktur (1052) ist mit dem Abtriebsende (102) verbunden;
-- wobei die Kupplungsstruktur der Zwischenabtriebskupplungs-Struktur (1051) und der abtriebsseitigen Kupplungsstruktur (1052) besteht aus einer Struktur nach Art einer Reibungskupplung, einer Struktur nach Art einer schaltbaren Kupplung oder einer Struktur nach Art einer Gleichlaufkupplung besteht.

7. Durch Drehmoment betätigte Fliehkraftgleitdämpfungskupplung nach einem der vorhergehenden Ansprüche, wobei die Zwischenkopplungsstruktur, die in der Zwischenübertragungsstruktur-Baugruppe (104) installiert ist, weiter aus einer axialen Zwischenkopplung des axialen Kupplungsübertragungsblocks besteht, der eine Rückführung der axialen Zwangsvorspannung aufweist und Folgendes umfasst:
-- ein Hauptantriebsende (101): bestehend aus einem Drehmechanismus, um kinetische Rotationsenergie einzugeben; wobei das Hauptantriebsende (101) eine axiale Zwischenkupplung ist, welche die Funktion der Zwischenkopplungsstruktur übernimmt, um die Zwischenübertragungsstruktur-Baugruppe (104) anzutreiben,
-- ein Abtriebsende (102) : bestehend aus einem Drehmechanismus, um kinetische Rotationsenergie abzugeben; wobei das Abtriebsende (102) mit einer abtriebsseitigen Kupplungsstruktur (1052) verbunden ist und durch die abtriebsseitige Kupplungsstruktur (1052) gesteuert wird;
-- eine Zwischenübertragungsstruktur-Baugruppe (104): die Zwischenübertragungsstruktur-Baugruppe (104) ist zwischen dem Hauptantriebsende (101) und dem Abtriebsende (102) installiert, wobei die Zwischenübertragungsstruktur-Baugruppe (104) eine axiale Zwischenkupplung ,die hauptsächlich aus einer aktiven Seite der axialen Zwischenkupplung (1071) besteht, einen axialen Kupplungsübertragungsblock (1072), eine Rückführfeder für den axialen Kupplungsübertragungsblock (1073), einen axialen Zwischenkupplungsübertragungsblock (1074), und ein mittleres Laufelement (1075) aufweist; wobei die aktive Seite der axialen Zwischenkupplung (1071), die das mittlere Laufelement (1075) unterbringt, durch das Hauptantriebsende (101) angetrieben wird, wobei das mittlere Laufelement (1075) mit einer passiven Seite der axialen Zwischenkupplung (1076) gekoppelt ist, wobei es sich um eine im Verhältnis zu dem axialen Kupplungsübertragungsblock (1072) zwangsläufig schräggestellte Oberfläche handelt, wobei der axiale Kupplungsübertragungsblock (1072) auf der axialen Zwischenkupplungs-Übertragungsplatte (1074) installiert ist, wobei eine Grenzdrehmoment-Gleitdämpfungsvorrichtung (106) und eine Fliehkraftkupplung (1006) zwischen der axialen Zwischenkupplungs-Übertragungsplatte (1074), und dem feststehenden Gehäuse (107) installiert sind, wobei ein Ende des axialen Kupplungsübertragungsblock (1072) auf der axialen Zwischenkupplungs-Übertragungsplatte (1074) befestigt ist,
wobei das andere Ende des axialen Kupplungsübertragungsblocks (1072) als Übertragungsende (1079) dient, wobei die passive Seite der axialen Zwischenkupplung (1076) des Übertragungsendes (1079) eine zwangsläufig schräggestellte Oberfläche ist, welche die Kopplung des mittleren Laufelements (1075) ermöglicht, wobei die andere Oberfläche des Übertragungsendes (1079) als eine axiale Kupplungsstruktur (1077) dient, wenn sich die aktive Seite der axialen Zwischenkupplung (1071), die durch das Hauptantriebsende (101) mit dem mittleren Laufelement (1075) ausgestattet ist, in einem Leerlauf-Drehzustand zu befindet, bevor eine voreingestellte Rotationsgeschwindigkeit erzielt wird, und, sobald die voreingestellte Drehgeschwindigkeit erreicht oder überstiegen wird, sich die Fliehkraftkupplung (1006), die zwischen der Zwischenübertragungsstruktur-Baugruppe (104) und dem feststehenden Gehäuse (107) installiert ist, in einem eingegriffenen Zustand befindet, um mit der Grenzdrehmoment-Gleitdämpfungsvorrichtung (106) kombiniert zu sein, um eine Gleitdämpferwirkung zu generieren, wobei die passive Seite der axialen Zwischenkupplung (1076), wobei es sich um ein zwangsläufig schräggestellte Oberfläche mit Bezug auf den axialen Kupplungsübertragungsblock (1072) handelt, zur Bewegung durch das mittlere Laufelement (1075) gezwungen wird, das auf der aktiven Seite der axialen Zwischenkupplung (1071) installiert ist, und die axiale Kupplungsstruktur (1077) weiter bewegt wird, um mit der abtriebsseitigen Kupplungsstruktur (1052) des Abtriebsendes (102) gekoppelt zu werden, um kinetische Rotationsenergie zu übertragen, wenn das Drehantriebsmoment vom Hauptantriebsende (101) zum Abtriebsende (102) nicht mehr bereitgestellt wird, durch die Elastizität des axialen Kupplungsübertragungsblocks (1072) und/oder die Freigabe-Rückführkraft der Rückführfeder (1073) für den axialen Kupplungsübertragungsblock, die zwischen der axialen Zwischenkupplungs-Übertragungsplatte (1074) und dem mittleren Laufelement (1075) installiert ist, so dass die axiale Kupplungsstruktur (1077) des axialen Kupplungsübertragungsblocks (1072) und die abtriebsseitige Kupplungsstruktur (1052) des Abtriebsendes (102) ausgerückt werden, und die axiale Zwischenkupplungs-Übertragungsplatte (1074) zurückgesetzt ist, um die Übertragung der kinetischen Rotationsenergie zu beenden;
außerdem befindet sich, wenn die Drehgeschwindigkeit, mit der die Fliehkraftkupplung (1006) am Hauptantriebsende (101) angetrieben wird, kleiner oder gleich ihrer ausrückenden Drehgeschwindigkeit ist, die Fliekraftkupplung (1006) in einem ausgerückten Zustand, so dass die Dämpfung zwischen der Zwischenübertragungsstruktur-Baugruppe (104) und dem feststehenden Gehäuse (107) nicht bereitgestellt wird, und die passive Seite der Zwischenkopplungsstruktur der Zwischenübertragungsstruktur-Baugruppe (104) durch die Rückführbetätigungsfeder (1073), die rückgeführt werden soll, bewegt wird, wobei axiale Kupplungsstruktur (1077) und die abtriebsseitige Kupplungsstruktur (1052) ausgelöst werden;
-- eine Grenzdrehmoment-Gleitdämpfungsvorrichtung (106): bestehend aus einer Mechanikvorrichtung, die einen Grenzdrehmoment-Gleitdämpfeffekt mit einer Rückhaltefunktion aufweist, während relative Drehbewegungen zwischen der axialen Zwischenkupplungs-Übertragungsplatte (1074) und dem feststehenden Gehäuse (107) generiert werden; und zwischen dem feststehenden Gehäuse (107) und der axialen Zwischenkupplungs-Übertragungsplatte (1074) installiert ist, wenn die aktive Seite der axialen Zwischenkupplung (1071) vom Hauptantriebsende (101) in Drehung angetrieben wird, durch Einwirkungen der Grenzdrehmoment-Gleitdämpfungsvorrichtung (106), während die aktive Seite der axialen Zwischenkupplung (1071) einen Drehantrieb auf die axiale Zwischenkupplungs-Übertragungsplatte (1074) ausübt, der axiale Kupplungsübertragungsblock (1072) und die axiale Kupplungsstruktur (1077) der axialen Zwischenkupplungs-Übertragungsplatte (1074) zur Bewegung durch das mittlere Laufelement (1075) gezwungen wird, angetrieben von der aktiven Seite der axialen Zwischenkupplung (1071), um relative Bewegungen zu generieren.
wobei die Struktur Folgendes umfasst: bestehend aus der Mechanikvorrichtung, die durch die mechanische Kraft, die Federvorspannkraft, die elektromagnetische Kraft einer elektrisch erregten Spule oder die Einwirkungskraft eines Dauermagneten für die Grenzdrehmoment-Gleitdämpfungsvorrichtung (106), einschließlich zwischen Feststoff und Feststoff, oder zwischen einem Feststoff und einem viskösen Fluid, oder zwischen einem viskösen Fluid und einem viskösen Fluid, oder zwischen Feststoffen und gasförmigen oder flüssigen Fluiden erfolgt, um eine Gleitdämpfung zu generieren;
-- Fliehkraftkupplung (1006): konfiguriert durch eine Fliehkraftkupplungs-Strukturvorrichtung mit der Funktion des Abschneidens bei einer feststehenden und geringen Geschwindigkeit, und installiert zwischen der axialen Zwischenkupplungs-Übertragungsplatte (1074) und der Grenzdrehmoment-Gleitdämpfungsvorrichtung (106), und wenn die aktive Seite der Zwischenkopplungsstruktur vom Hauptantriebsende (101) angetrieben wird, um einen Drehantrieb anzuwenden, um eine eingestellte Drehgeschwindigkeit zu erzielen, befindet sich die Fliehkraftkupplung (1006) in einem eingegriffenen Zustand, um die axialen Zwischenkupplungs-Übertragungsplatte (1074) und die Grenzdrehmoment-Gleitdämpfungsvorrichtung (106) zu kombinieren, um die Grenzdrehmoment-Gleitdämpfung zwischen der axialen Zwischenkupplungs-Übertragungsplatte (1074) und dem feststehenden Gehäuse (107) zu generieren, wodurch eine relative Bewegungen zwischen der aktiven Seite der Zwischenkopplungsstruktur und der passiven Seite der Zwischenkopplungsstruktur, die in der Zwischenübertragungsstruktur-Baugruppe (104) kombiniert sind, generiert wird;
-- ein feststehendes Gehäuse (107): konfiguriert durch eine feststehendes Gehäusestruktur zur Unterbringung der Fliehkraft, kombiniert mit der durch Drehmoment betätigten Gleitdämpfungskupplung
-- eine abtriebsseitige Kupplungsstruktur (1052): wobei die abtriebsseitige Kupplungsstruktur (1052) eine Kupplungsfunktionsstruktur umfasst und mit dem Abtriebsende (102) verbunden ist, um Öffnungs-/Schließvorgänge mit der axialen Kupplungsstruktur (1077) des Übertragungsendes (1079) des axialen Kupplungsübertragungsblocks (1072) der axialen Zwischenkupplungs-Übertragungsplatte (1074) durchzuführen, um kinetische Rotationsenergie zu übertragen, oder in einem ausgelösten Zustand dazu dient, die Übertragung der kinetischen Rotationsenergie zu beenden;
-- wobei die Kupplungsstruktur der Zwischenabtriebskupplungs-Struktur (1051) und der abtriebsseitigen Kupplungsstruktur (1052) aus einer Struktur nach Art einer Reibungskupplung, einer Struktur nach Art einer schaltbaren Kupplung oder einer Struktur nach Art einer Gleichlaufkupplung besteht.
-- ein mittleres Laufelement (1075): das durch Laufkugeln, konische Zylinder oder kugelförmige oder bogenförmige Vorsprünge ersetzt werden kann.

8. Durch Drehmoment betätigte Fliehkraftgleitdämpfungskupplung nach einem der vorhergehenden Ansprüche, wobei die Zwischenabtriebskupplungs-Struktur, die in der Zwischenübertragungsstruktur-Baugruppe (104) installiert ist, weiter aus der radialen Zwischenkupplung des radialen Kupplungsübertragungsblocks besteht, die eine Rückführung der radialen Zwangsvorspannung aufweist, und hauptsächlich Folgendes umfasst:
-- ein Hauptantriebsende (101): bestehend aus einem Drehmechanismus, um kinetische Rotationsenergie einzugeben; wobei das Hauptantriebsende (101) eine radiale Zwischenkupplung ist, welche die Funktion der Zwischenkopplungsstruktur übernimmt, um die Zwischenübertragungsstruktur-Baugruppe (104) anzutreiben;
-- ein Abtriebsende (102) : bestehend aus einem Drehmechanismus, um kinetische Rotationsenergie abzugeben; wobei das Abtriebsende (102) mit einer abtriebsseitigen Kupplungsstruktur (1052) verbunden ist und durch die abtriebsseitige Kupplungsstruktur (1052) gesteuert wird;
-- eine Zwischenübertragungsstruktur-Baugruppe (104): die Zwischenübertragungsstruktur-Baugruppe (104) ist zwischen dem Hauptantriebsende (101) und dem Abtriebsende (102) installiert, wobei die drei Komponenten als eine konzentrische ringförmige Struktur angeordnet sind, wobei die 2wischenübertragungsstruktur-Baugruppe (104) mit einer radialen Zwischenkupplung ausgestattet ist, die hauptsächlich aus einer aktiven Seite der axialen Zwischenkupplung (1081), einem radialen Kupplungsübertragungsblock (1082), einer Rückführfeder (1083) für den radialen Kupplungsübertragungsblock, einer radialen Zwischenkupplungs-Übertragungsplatte (1084) und einem mittleren Laufelement (1085) besteht; wobei die aktive Seite der radialen Zwischenkupplung (1081), die das mittlere Laufelement (1085) unterbringt, durch das Hauptantriebsende (101) angetrieben wird, wobei das mittlere Laufelement (1085) mit einer passiven Seite der radialen Zwischenkupplung (1086) gekoppelt ist, wobei es sich um eine im Verhältnis zu dem radialen Kupplungsübertragungsblock (1082) zwangsläufig schräggestellte Oberfläche handelt, wobei der radiale Kupplungsübertragungsblock (1082) an der radialen Zwischenkupplungs-Übertragungsplatte (1084) installiert ist, wobei eine Grenzdrehmoment-Gleitdämpfungsvorrichtung (106) und eine die Fliehkraft kombinierende Fliehkraftkupplung (1006) zwischen der radialen Zwischenkupplungs-Übertragungsplatte (1084) und dem feststehenden Gehäuse (107) installiert sind, wobei ein Ende des radialen Kupplungsübertragungsblocks (1082) an der radialen Zwischenkupplungs-Übertragungsplatte (1084) befestigt ist, wobei das andere Ende des radialen Kupplungsübertragungsblocks (1082) als ein Übertragungsende (1089) dient, wobei die passive Seite der radialen Zwischenkupplung (1086) des Übertragungsendes (1089) eine zwangsläufig schräggestellte Oberfläche ist, welche die Kopplung des mittleren Laufelements (1085) ermöglicht, wobei die andere Oberfläche des Übertragungsendes (1089) als eine radiale Kupplungsstruktur (1087) dient, wenn die aktive Seite der radialen Zwischenkupplung (1081), die mit dem mittleren Laufelement (1085) ausgestattet ist, durch das Hauptantriebsende (101) angetrieben wird, um sich in einem Leerlaufzustand zu befinden, bevor eine voreingestellte Rotationsgeschwindigkeit erreicht wird, und, sobald die voreingestellte Drehgeschwindigkeit erreicht oder überstiegen wird, sich die Fliehkraft kombinierende Fliehkraftkupplung (1006), die zwischen der Zwischenübertragungsstruktur-Baugruppe (104) und dem feststehenden Gehäuse (107) installiert ist, in einem eingegriffenen Zustand befindet, um mit der Grenzdrehmoment-Gleitdämpfungsvorrichtung (106) kombiniert zu sein, um eine dämpfende Wirkung zu generieren, wobei die passive Seite der radialen Zwischenkupplung (1086), wobei es sich um eine im Verhältnis zu dem radialen Kupplungsübertragungsblock (1082) zwangsläufig schräggestellte Oberfläche handelt, zur Bewegung durch das mittlere Laufelement (1085) gezwungen wird, das auf der aktiven Seite der radialen Zwischenkupplung (1081) installiert ist, und die radiale Kupplungsstruktur (1087) weiter bewegt wird, um mit der abtriebsseitigen Kupplungsstruktur (1052) des Abtriebsendes (102) zur Übertragung einer kinetischen Rotationsenergie gekoppelt zu werden,
wenn das Drehantriebsmoment vom Hauptantriebsende (101) zum Abtriebsende (102) nicht mehr bereitgestellt wird, durch die Elastizität des radialen Kupplungsübertragungsblocks (1082) und/oder die Freigabe-Rückführkraft der Rückführfeder (1083) für den radialen Kupplungsübertragungsblock, installiert zwischen der radialen 2wischenkupplungs-Übertragungsplatte (1084) und einem mittleren Laufelement (1085), so dass die radiale Kupplungsstruktur (1087) des radialen Kupplungsübertragungsblocks (1082) und die abtriebsseitige Kupplungsstruktur (1052) des Abtriebsendes (102) ausgerückt werden, und die radiale Zwischenkupplungs-Übertragungsplatte (1084) zurückgesetzt ist, wodurch die Übertragung der kinetischen Rotationsenergie beendet wird;
außerdem befindet sich, wenn die Drehgeschwindigkeit, mit der die Fliehkraftkupplung (1006) am Hauptantriebsende (101) angetrieben wird, kleiner oder gleich ihrer ausrückenden Drehgeschwindigkeit ist, die Fliehkraftkupplung (1006) in einem ausgelösten Zustand, so dass die Dämpfung zwischen der Zwischenübertragungsstruktur-Baugruppe (104) und dem feststehenden Gehäuse (107) nicht bereitgestellt wird, und die passive Seite der Zwischenkopplungsstruktur der Zwischenübertragungsstruktur-Baugruppe (104) durch die Rückführbetätigungsfeder (1083) des radialen Kupplungsübertragungsblocks, die rückgeführt werden soll, bewegt wird, wobei die radiale Kopplungsstruktur (1087) und die abtriebsseitige Kupplungsstruktur (1052) ausgerückt werden;
-- eine Grenzdrehmoment-Gleitdämpfungsvorrichtung (106): bestehend aus einer Mechanikvorrichtung, die einen Grenzdrehmoment-Gleitdämpfeffekt mit einer Rückhaltefunktion aufweist, während relative Drehbewegungen zwischen der radialen Zwischenkupplungs-Übertragungsplatte (1084) und dem feststehenden Gehäuse (107) generiert werden; und zwischen dem feststehenden Gehäuse (107) und der radialen Zwischenkupplungs-Übertragungsplatte (1084) installiert, und wenn die aktive Seite der radialen Zwischenkupplung (1081) vom Hauptantriebsende (101) in Drehung angetrieben wird, durch Einwirkungen der Grenzdrehmoment-Gleitdämpfungsvorrichtung (106), während die aktive Seite der radialen Zwischenkupplung (1081) einen Drehantrieb auf die radiale Zwischenkupplungs-Übertragungsplatte (1084) ausübt, wobei der radiale Kupplungsübertragungsblock (1082) und die radiale Kupplungsstruktur (1087) der radialen Zwischenkupplungs-Übertragungsplatte (1084) zur Bewegung durch das mittlere Laufelement (1085) gezwungen wird, angetrieben von der aktiven Seite der radialen Zwischenkupplung (1081), um relative Bewegungen zu generieren.
wobei die Struktur Folgendes umfasst: bestehend aus der Mechanikvorrichtung, die durch die mechanische Kraft, die Federvorspannkraft, die elektromagnetische Kraft einer elektrisch erregten Spule oder die Einwirkungskraft eines Dauermagneten für die Grenzdrehmoment-Gleitdämpfungsvorrichtung (106), einschließlich zwischen Feststoff und Feststoff, oder zwischen einem Feststoff und einem viskösen Fluid, oder zwischen einem viskösen Fluid und einem viskösen Fluid, oder zwischen Feststoffen und gasförmigen oder flüssigen Fluiden erfolgt, um eine Gleitdämpfung zu generieren;
-- Fliehkraftkupplung (1006): konfiguriert durch eine Fliehkraftkupplungs-Strukturvorrichtung mit der Funktion des Abschneidens bei einer feststehenden und geringen Geschwindigkeit, und installiert zwischen der radialen Zwischenkupplungs-Übertragungsplatte (1084) und der Grenzdrehmoment-Gleitdämpfungsvorrichtung (106), und wenn die aktive Seite der Zwischenkopplungsstruktur vom Hauptantriebsende (101) angetrieben wird, um einen Drehantrieb anzuwenden, um eine voreingestellte Rotationsgeschwindigkeit zu erzielen, befindet sich die Fliehkraftkupplung (1006) in einem eingegriffenen Zustand, um die radiale Zwischenkupplungs-Übertragungsplatte (1084) und die Grenzdrehmoment-Gleitdämpfungsvorrichtung (106) zu kombinieren, um die Grenzdrehmoment-Gleitdämpfung zwischen der radialen Zwischenkupplungs-Übertragungsplatte (1084) und dem feststehenden Gehäuse (107) zu generieren, wodurch eine relative Bewegungen zwischen der aktiven Seite der Zwischenkopplungsstruktur und der passiven Seite der Zwischenkopplungsstruktur, die in der Zwischenübertragungsstruktur-Baugruppe (104) kombiniert sind, generiert wird;
-- ein feststehendes Gehäuse (107): konfiguriert durch eine feststehende Gehäusestruktur zur Unterbringung der Fliehkraft, kombiniert mit der durch Drehmoment betätigten Gleitdämpfungskupplung
-- eine abtriebsseitige Kupplungsstruktur (1052): die abtriebsseitige Kupplungsstruktur (1052) besteht aus einer Kupplungsfunktionsstruktur und ist mit dem Abtriebsende (102) verbunden, das dazu dient, um Öffnungs-/Schließvorgänge mit der radialen Kupplungsstruktur (1087) des Übertragungsendes (1089) des radialen Kupplungsübertragungsblocks (1082) der radialen Zwischenkupplungs-Übertragungsplatte (1084) durchzuführen, um kinetische Rotationsenergie zu übertragen, oder in einem ausgerückten Zustand, um die Übertragung der kinetischen Rotationsenergie zu beenden;
-- wobei die Kupplungsstruktur der Zwischenabtriebskupplungs-Struktur (1051) und der abtriebsseitigen Kupplungsstruktur (1052) aus einer Struktur nach Art einer Reibungskupplung, einer Struktur nach Art einer schaltbaren Kupplung oder einer Struktur nach Art einer Gleichlaufkupplung besteht;
-- ein mittleres Laufelement (1085): das durch Laufkugeln, konische Zylinder oder kugelförmige oder bogenförmige Vorsprünge ersetzt werden kann.

9. Durch Drehmoment betätigte Fliehkraftgleitdämpfungskupplung nach einem der vorhergehenden Ansprüche, wobei es aus zwei Sätzen von Fliehkraft, kombiniert mit durch Drehmoment betätigte Fliehkraftgleitdämpfungskupplungen zusammengesetzt sein kann und das gleiche Hauptantriebsende (101) aufweist, umfassend: zwei Sätze Fliehkraft, kombiniert mit durch Drehmoment betätigte Fliehkraftgleitdämpfungskupplungen, die beide in der axialen Richtung übertragen, mit den verschiedenen Betriebsrichtungen und dem gleichen Hauptantriebsende (101).

10. Durch Drehmoment betätigte Fliehkraftgleitdämpfungskupplung nach einem der Ansprüche 1 bis 8, wobei es aus zwei Sätzen von Fliehkraft, kombiniert mit durch Drehmoment betätigte Fliehkraftgleitdämpfungskupplungen zusammengesetzt sein kann und das gleiche Hauptantriebsende (101) aufweist, umfassend: zwei Sätze Fliehkraft, kombiniert mit durch Drehmoment betätigte Fliehkraftgleitdämpfungskupplungen, die beide in der axialen Richtung übertragend, mit der gleichen Betriebsrichtung und dem gleichen Hauptantriebsende (101).

11. Durch Drehmoment betätigte Fliehkraftgleitdämpfungskupplung nach einem der Ansprüche 1 bis 8, wobei es aus zwei Sätzen von Fliehkraft, kombiniert mit durch Drehmoment betätigte Fliehkraftgleitdämpfungskupplungen zusammengesetzt sein kann und das gleiche Hauptantriebsende (101) aufweist, umfassend: zwei Sätze Fliehkraft, kombiniert mit durch Drehmoment betätigte Fliehkraftgleitdämpfungskupplung, betätigt durch das Drehmoment, die beide in der radialen Richtung übertragen, mit verschiedenen Betriebsrichtungen und dem gleichen Hauptantriebsende (101).

12. Durch Drehmoment betätigte Fliehkraftgleitdämpfungskupplung nach einem der Ansprüche 1 bis 8, wobei es aus zwei Sätzen von Fliehkraft, kombiniert mit durch Drehmoment betätigte Fliehkraftgleitdämpfungskupplungen zusammengesetzt sein kann und das gleiche Hauptantriebsende (101) aufweist, umfassend: zwei Sätze Fliehkraft, kombiniert mit durch Drehmoment betätigte Fliehkraftgleitdämpfungskupplung, die beide in der radialen Richtung übertragen, mit der gleichen Betriebsrichtung und dem gleichen Hauptantriebsende (101).

13. Durch Drehmoment betätigte Fliehkraftgleitdämpfungskupplung nach einem der Ansprüche 1 bis 8, wobei es aus zwei Sätzen von Fliehkraft, kombiniert mit durch Drehmoment betätigte Fliehkraftgleitdämpfungskupplungen zusammengesetzt sein kann und das gleiche Hauptantriebsende (101) aufweist, umfassend: zwei Sätze Fliehkraft, kombiniert mit durch Drehmoment betätigte Fliehkraftgleitdämpfungskupplung, wobei ein Satz in der radialen Richtung überträgt und der andere in der axialen Richtung überträgt, mit verschiedenen Betriebsrichtungen und dem gleichen Hauptantriebsende (101).

14. Durch Drehmoment betätigte Fliehkraftgleitdämpfungskupplung nach einem der Ansprüche 1 bis 8, wobei es aus zwei Sätzen von Fliehkraft, kombiniert mit durch Drehmoment betätigte Fliehkraftgleitdämpfungskupplungen zusammengesetzt sein kann und das gleiche Hauptantriebsende (101) aufweist, umfassend: zwei Sätze Fliehkraft, kombiniert mit durch Drehmoment betätigte Fliehkraftgleitdämpfungskupplung, wobei ein Satz in der radialen Richtung überträgt und der andere in der axialen Richtung überträgt, mit der gleichen Betriebsrichtung und dem gleichen Hauptantriebsende (101).

## Revendications

1. Embrayage de type centrifuge actionné par couple avec amortissement coulissant comprenant :
un dispositif d'embrayage,
un ensemble de structure de transmission relais (104),
une extrémité motrice d'entraînement en rotation (101),
une structure d'embrayage d'extrémité de sortie (1052),
une structure de couplage relais (204),
un dispositif d'amortissement coulissant de couple limite (106),
un embrayage centrifuge (1006),
un ressort d'actionnement de récupération (120), l'embrayage de type centrifuge actionné par couple avec amortissement coulissant étant apte à commander un dispositif d'embrayage pour réaliser des opérations de couplage ou de désengagement avec le couple d'entraînement, et un ensemble de structure de transmission relais (104) entre une extrémité motrice d'entraînement en rotation (101) et une structure d'embrayage d'extrémité de sortie (1052) étant installé à une extrémité de sortie (102), l'ensemble de structure de transmission relais (104) étant installé avec une structure de couplage relais (204) ayant un côté actif de structure de couplage relais et un côté passif de structure de couplage relais, l'extrémité motrice d'entraînement (101) comportant une structure limitante (115) pour limiter des positions relatives de l'ensemble de structure de transmission relais (104) et de l'extrémité motrice d'entraînement (101) ;
un dispositif d'amortissement coulissant de couple limite (106) et un embrayage centrifuge (1006) sont installés entre l'ensemble de structure de transmission relais (104) et le boîtier statique (107) et sont entraînés en rotation dans un premier sens de rotation à l'extrémité motrice d'entraînement (101) pour commander le côté actif de structure de couplage relais de la structure de couplage relais (204) installée dans l'ensemble de structure de transmission relais (104) pour être dans un état de rotation au ralenti avant d'atteindre une vitesse de rotation préréglée, et au moment d'atteindre ou de dépasser la vitesse de rotation préréglée, l'embrayage centrifuge (1006) installé entre l'ensemble de structure de transmission relais (104) et le boîtier statique (107) tourne pour être dans un état en prise de manière à être combiné au dispositif d'amortissement coulissant de couple limite (106) pour générer un effet d'amortissement coulissant, de telle sorte que le côté passif de la structure de couplage de sortie relais est amené par le côté actif de structure de couplage relais à se déplacer, et l'ensemble de structure de transmission relais (104) et la structure d'embrayage de sortie relais (1051) installée dans l'ensemble de structure de transmission relais (104) sont amenés à réaliser des opérations d'ouverture/fermeture avec la structure d'embrayage d'extrémité de sortie (1052) installée à l'extrémité de sortie (102) de manière à transmettre de l'énergie cinétique de rotation, et à forcer le ressort d'actionnement de récupération (120) disposé entre la structure d'embrayage de sortie relais (1051) et la structure d'embrayage d'extrémité de sortie (1052) à être resserré ;
lorsque le couple d'entraînement en rotation à l'extrémité motrice d'entraînement (101) n'est plus fourni, l'ensemble de structure de transmission relais (104) est rappelé et la structure d'embrayage de sortie relais (1051) et la structure d'embrayage d'extrémité de sortie (1052) sont désengagées à travers des actions du ressort d'actionnement de récupération (120), ainsi l'extrémité de sortie (102) est libérée ;
de plus, lorsque la vitesse de rotation à laquelle l'embrayage centrifuge (1006) entraîné à l'extrémité motrice d'entraînement (101) est supérieure ou égale à sa vitesse de rotation de désengagement, l'embrayage centrifuge (1006) est dans un état désengagé, de telle sorte que l'amortissement entre l'ensemble de structure de transmission relais (104) et le boîtier statique (107) n'est pas fourni, et le côté passif de la structure de couplage relais de l'ensemble de structure de transmission relais (104) est déplacé par le ressort d'actionnement de récupération (120) pour être rappelé, ainsi la structure d'embrayage de sortie relais (1051) et la structure d'embrayage d'extrémité de sortie (1052) sont désengagées.

2. Embrayage de type centrifuge actionné par couple avec amortissement coulissant selon la revendication 1, dans lequel l'embrayage centrifuge (1006) est l'un d'un embrayage centrifuge de type coupure et de type combinant.

3. Embrayage de type centrifuge actionné par couple avec amortissement coulissant selon les revendications 1 ou 2, consistant en :
- une extrémité motrice d'entraînement (101) : composée par un mécanisme rotatif pour mettre en entrée une énergie cinétique de rotation ; l'extrémité motrice d'entraînement (101) sert à entraîner un côté actif de structure de couplage relais d'une structure de couplage relais (204) installée dans un ensemble de structure de transmission relais (104), l'extrémité motrice d'entraînement (101) étant installée avec une structure limitante (115) pour limiter des positions relatives de l'ensemble de structure de transmission relais (104) et de l'extrémité motrice d'entraînement (101) ;
- une extrémité de sortie (102) : composée par un mécanisme rotatif pour délivrer en sortie une énergie cinétique de rotation ; l'extrémité de sortie (102) est reliée à une structure d'embrayage d'extrémité de sortie (1052) et est commandée par la structure d'embrayage d'extrémité de sortie (1052) ;
- un ensemble de structure de transmission relais (104) : l'ensemble de structure de transmission relais (104) est installé entre l'extrémité motrice d'entraînement (101) et l'extrémité de sortie (102), et est apte à réaliser un entraînement en rotation et des déplacements axiaux, l'ensemble de structure de transmission relais (104) comporte une structure de couplage relais (204) entraînée par l'extrémité motrice d'entraînement (101), la structure de couplage relais (204) a un côté actif de structure de couplage relais et un côté passif de structure de couplage relais couplé et interagissant coaxialement avec le côté actif, un dispositif d'amortissement coulissant de couple limite (106) et un embrayage centrifuge (1006) sont installés entre l'ensemble de structure de transmission mentionné (104) et le boîtier statique (107), lorsque le côté actif de la structure de couplage relais est entraîné par l'extrémité motrice d'entraînement (101) pour être dans un état de rotation au ralenti avant d'atteindre une vitesse de rotation préréglée, et au moment d'atteindre ou de dépasser la vitesse de rotation préréglée, l'embrayage centrifuge (1006) installé entre l'ensemble de structure de transmission relais (104) et le boîtier statique (107) tourne pour être dans un état en prise de manière à être combiné avec le dispositif d'amortissement coulissant de couple limite (106) pour générer un effet d'amortissement, appliquant ainsi le couple d'entraînement en rotation sur le côté passif de structure de couplage relais pour déplacer le côté passif de structure de couplage relais, et en outre pour amener l'ensemble de structure de transmission relais (104) à générer un déplacement relatif, de manière à entraîner la structure d'embrayage de sortie relais (1051) installée dans l'ensemble de structure de transmission relais (104) pour réaliser des opérations d'ouverture/fermeture avec une structure d'embrayage d'extrémité de sortie (1052) pour transmettre une énergie cinétique de rotation et forcer un ressort d'actionnement de récupération (120) à être resserré ;
lorsque le couple d'entraînement en rotation de l'extrémité motrice d'entraînement (101) à l'extrémité de sortie (102) n'est plus fourni, la structure d'embrayage de sortie relais (1051) et la structure d'embrayage d'extrémité de sortie (1052) sont désengagées et le côté passif de structure de couplage relais est rappelé à travers un effet de récupération par libération fourni par le ressort d'actionnement de récupération (120), terminant ainsi la transmission de l'énergie cinétique de rotation ;
de plus, lorsque la vitesse de rotation à laquelle l'embrayage centrifuge (1006) entraîné à l'extrémité motrice d'entraînement (101) est supérieure ou égale à sa vitesse de rotation de désengagement, l'embrayage centrifuge (1006) est dans un état désengagé, de telle sorte que l'amortissement entre l'ensemble de structure de transmission relais (104) et le boîtier statique (107) n'est pas fourni, et le côté passif de structure de couplage relais de l'ensemble de structure de transmission relais (104) est déplacé par le ressort d'actionnement de récupération (120) pour être rappelé, permettant ainsi à la structure d'embrayage de sortie relais (1051) et à la structure d'embrayage d'extrémité de sortie (1052) d'être désengagées ;
- un dispositif d'amortissement coulissant de couple limite (106) : composé par un dispositif de mécanisme ayant un effet d'amortissement coulissant de couple limite ayant une fonction de retenue alors que des déplacements en rotation relatifs sont générés entre l'ensemble de structure de transmission relais (104) et le boîtier statique (107) ; et est installé entre l'embrayage centrifuge (1006) et le boîtier statique (107), ainsi à travers des actions du dispositif d'amortissement coulissant de couple limite (106), des déplacements relatifs sont générés entre le côté actif de structure de couplage relais et le côté passif de structure de couplage relais combinés dans l'ensemble de structure de transmission relais (104) lorsque le côté actif de structure de couplage relais est entraîné en rotation par l'extrémité motrice d'entraînement (101) ;
la structure comprend : constituée par le dispositif de mécanisme, qui passe par la force mécanique, la force de pré-tension de ressort, la force électromagnétique de bobine électrique excitée ou la force d'action d'aimant permanent pour le dispositif d'amortissement coulissant de couple limite (106) comprenant entre solide et solide, ou entre solide et fluide visqueux, ou entre fluide visqueux et fluide visqueux, ou entre solide et fluides gazeux ou liquides pour générer un amortissement coulissant ;
- un embrayage centrifuge (1006) : configuré par un dispositif de structure d'embrayage centrifuge ayant la fonction de coupure à l'état statique et à basse vitesse, et installé entre l'ensemble de structure de transmission relais (104) et le dispositif d'amortissement coulissant de couple limite (106), et lorsque le côté actif de structure de couplage relais est entraîné en rotation par l'extrémité motrice d'entraînement (101) pour atteindre une vitesse de rotation préréglée, l'embrayage centrifuge (1006) est dans un état en prise, de manière à combiner l'ensemble de structure de transmission relais (104) et le dispositif d'amortissement coulissant de couple limite (106) pour générer l'amortissement coulissant de couple limite entre l'ensemble de structure de transmission relais (104) et le boîtier statique (107), ainsi un déplacement relatif est généré entre le côté actif de structure de couplage relais et le côté passif de structure de couplage relais combinés dans l'ensemble de structure de transmission relais (104) ;
- un boîtier statique (107) : configuré par une structure de boîtier statique pour recevoir la force centrifuge combinée avec un embrayage actionné par couple de type à amortissement coulissant ;
- une structure limitante (115) : composée par un mécanisme apte à limiter des positions relatives de l'ensemble de structure de transmission relais (104) et de l'extrémité motrice d'entraînement (101), et est combinée avec la partie rotative de l'extrémité motrice d'entraînement (101) ;
- un ressort d'actionnement de récupération (120) : qui est un dispositif de ressort apte à être comprimé pour stocker de l'énergie et être libéré pour délivrer en sortie de l'énergie, et est disposé entre la structure d'embrayage de sortie relais (1051) et la structure d'embrayage d'extrémité de sortie (1052), et l'état normal de celui-ci est de séparer la structure d'embrayage de sortie relais (1051) et la structure d'embrayage d'extrémité de sortie (1052), de manière à terminer la transmission de l'énergie cinétique de rotation ; lorsque la structure d'embrayage de sortie relais (1051) et la structure d'embrayage d'extrémité de sortie (1052) sont amenées de manière à être en prise, le ressort d'actionnement de récupération (120) est pré-comprimé de façon synchronisée pour être dans un état de stockage d'énergie ;
- une structure d'embrayage de sortie relais (1051) : la structure d'embrayage de sortie relais (1051) est composée par une structure à fonction d'embrayage et est installée dans l'ensemble de structure de transmission relais (104), lorsque le côté actif de structure de couplage relais est entraîné par l'extrémité motrice d'entraînement (101), la structure d'embrayage de sortie relais (1051) et l'ensemble de structure de transmission relais (104) sont entraînés par le côté actif de structure de couplage relais de la structure de couplage relais (204), pour réaliser des opérations de fermeture/ouverture avec la structure d'embrayage d'extrémité de sortie (1052) de manière à transmettre de l'énergie cinétique de rotation, lorsque la force d'entraînement de l'extrémité motrice d'entraînement (101) à l'extrémité de sortie (102) n'est plus fournie, la structure d'embrayage de sortie relais (1051) et la structure d'embrayage d'extrémité de sortie (1052) sont désengagées à travers la force élastique de libération du ressort d'actionnement de récupération (120), terminant ainsi la transmission de l'énergie cinétique de rotation ;
- une structure d'embrayage d'extrémité de sortie (1052) : composée par une structure à fonction d'embrayage apte à réaliser des opérations de fermeture/ouverture avec la structure d'embrayage de sortie relais (1051) pour transmettre de l'énergie cinétique de rotation, ou d'être désengagée pour terminer la transmission de l'énergie cinétique de rotation, et la structure d'embrayage d'extrémité de sortie (1052) est reliée à l'extrémité de sortie (102) ;
- la structure d'embrayage de la structure d'embrayage de sortie relais (1051) et de la structure d'embrayage d'extrémité de sortie (1052) consiste en la structure d'embrayage de type friction, la structure d'embrayage de type prise ou la structure d'embrayage de prise synchronisée.

4. Embrayage de type centrifuge actionné par couple avec amortissement coulissant selon l'une quelconque des revendications précédentes, dans lequel la structure de couplage relais installée dans l'ensemble de structure de transmission relais (104) est en outre composée par une structure de tige filetée (1041) et une structure d'écrou fileté (1042) et il consiste en :
- une extrémité motrice d'entraînement (101) : composée par un mécanisme rotatif pour mettre en entrée une énergie cinétique de rotation ; l'extrémité motrice d'entraînement (101) sert à entraîner un côté actif de structure de couplage relais d'une structure de couplage relais (204) installée dans un ensemble de structure de transmission relais (104), l'extrémité motrice d'entraînement (101) est installée avec une structure limitante (115) pour limiter des positions relatives de l'ensemble de structure de transmission relais (104) et de l'extrémité motrice d'entraînement (101) ;
- une extrémité de sortie (102) : composée par un mécanisme rotatif pour délivrer en sortie une énergie cinétique de rotation ; l'extrémité de sortie (102) est reliée à une structure d'embrayage d'extrémité de sortie (1052) et est commandée par la structure d'embrayage d'extrémité de sortie (1052) ;
- un ensemble de structure de transmission relais (104) : l'ensemble de structure de transmission relais (104) est installé entre l'extrémité motrice d'entraînement (101) et l'extrémité de sortie (102) et est apte à réaliser un entraînement en rotation et des déplacements axiaux, l'ensemble de structure de transmission relais (104) est installé avec une structure de couplage relais entraînée par l'extrémité motrice d'entraînement (101), la structure de couplage relais a la fonction du côté actif de structure de couplage relais composée par la structure de tige filetée (1041) et la fonction du côté passif de structure de couplage relais composée par la structure d'écrou fileté (1042), la structure de tige filetée (1041) et la structure d'écrou fileté (1042) sont couplées et interagissent de manière coaxiale, le côté passif mentionné de la structure de couplage relais composé par la structure d'écrou fileté (1042) est relié à l'ensemble de structure de transmission relais (104), un dispositif d'amortissement coulissant de couple limite (106) et un embrayage centrifuge (1006) sont installés entre l'ensemble de structure de transmission relais (104) et le boîtier statique (107), lorsque la structure de tige filetée (1041) est entraînée par l'extrémité motrice d'entraînement (101) pour être dans un état de rotation au ralenti avant d'atteindre une vitesse de rotation réglée, et au moment d'atteindre ou de dépasser la vitesse de rotation préréglée, l'embrayage centrifuge (1006) installé entre l'ensemble de structure de transmission relais (104) et le boîtier statique (107) tourne pour être dans un état en prise de manière à être combiné avec le dispositif d'amortissement coulissant de couple limite (106) pour générer un effet d'amortissement, appliquant ainsi le couple d'entraînement en rotation sur la structure d'écrou fileté (1042) pour le déplacer, et en outre pour amener l'ensemble de structure de transmission relais (104) relié à la structure d'écrou fileté (1042) générant un déplacement axial relatif pour entraîner la structure d'embrayage de sortie relais (1051) installée dans l'ensemble de structure de transmission relais (104) à réaliser des opérations d'ouverture/fermeture avec la structure d'embrayage d'extrémité de sortie (1052) pour transmettre de l'énergie cinétique de rotation, et forçant le ressort d'actionnement de récupération (120) à être resserré ;
lorsque le couple d'entraînement en rotation de l'extrémité motrice d'entraînement (101) à l'extrémité de sortie (102) n'est plus fourni, la structure d'embrayage de sortie relais (1051) et la structure d'embrayage d'extrémité de sortie (1052) sont désengagées et la structure d'écrou fileté (1042) est rappelée à travers l'effet de récupération de libération fourni par le ressort d'actionnement de récupération (120), terminant ainsi la transmission de l'énergie cinétique de rotation ;
de plus, lorsque la vitesse de rotation à laquelle l'embrayage centrifuge (1006) entraîné à l'extrémité motrice d'entraînement (101) est supérieure ou égale à sa vitesse de rotation de désengagement, l'embrayage centrifuge (1006) est dans un état désengagé, de telle sorte que l'amortissement entre l'ensemble de structure de transmission relais (104) et le boîtier statique (107) n'est pas fourni, et le côté passif de structure de couplage relais de l'ensemble de structure de transmission relais (104) est déplacé par le ressort d'actionnement de récupération (120) pour être rappelé, permettant ainsi à la structure d'embrayage de sortie relais (1051) et à la structure d'embrayage d'extrémité de sortie (1052) d'être désengagées ;
- un dispositif d'amortissement coulissant de couple limite (106) : composé par un dispositif de mécanisme ayant un effet d'amortissement coulissant de couple limite ayant une fonction de retenue alors que des déplacements en rotation relatifs sont générés entre l'ensemble de structure de transmission relais (104) et le boîtier statique (107) ; et est installé entre l'embrayage centrifuge (1006) et le boîtier statique (107), ainsi lorsque la structure de tige filetée (1041) est entraînée en rotation par l'extrémité motrice d'entraînement (101), à travers des actions du dispositif d'amortissement coulissant de couple limite (106), des déplacements relatifs sont générés entre la structure de tige filetée (1041) et la structure d'écrou filetée (1042) combinées dans l'ensemble de structure de transmission relais (104) durant la réalisation, par la structure de tige filetée (1041), d'un entraînement en rotation de la structure d'écrou fileté (1042) ;
la structure comprend : constituée par le dispositif de mécanisme, qui passe par la force mécanique, la force de pré-tension de ressort, la force électromagnétique de bobine électrique excitée ou la force d'action d'aimant permanent pour le dispositif d'amortissement coulissant de couple limite (106) comprenant entre solide et solide, ou entre solide et fluide visqueux, ou entre fluide visqueux et fluide visqueux, ou entre solide et fluides gazeux ou liquides pour générer un amortissement coulissant ;
- un embrayage centrifuge (1006) : configuré par un dispositif de structure d'embrayage centrifuge ayant la fonction de coupure à un état statique et de basse vitesse, et installé entre l'ensemble de structure de transmission relais (104) et le dispositif d'amortissement coulissant de couple limite (106), et lorsque le côté actif de structure de couplage relais est entraîné en rotation par l'extrémité motrice d'entraînement (101) pour atteindre une vitesse de rotation préréglée, l'embrayage centrifuge (1006) est dans un état en prise, de manière à combiner l'ensemble de structure de transmission relais (104) et le dispositif d'amortissement coulissant de couple limite (106) pour générer l'amortissement coulissant de couple limite entre l'ensemble de structure de transmission relais (104) et le boîtier statique (107), ainsi un déplacement relatif est généré entre le côté actif de structure de couplage relais et le côté passif de structure de couplage relais combinés dans l'ensemble de structure de transmission relais (104) ;
- un boîtier statique (107) : configuré par une structure de boîtier statique pour recevoir la force centrifuge combinée avec un embrayage actionné par couple de type à amortissement coulissant ;
- une structure limitante (115) : composée par un mécanisme apte à limiter des positions relatives de l'ensemble de structure de transmission relais (104) et de l'extrémité motrice d'entraînement (101) et est combinée avec la partie rotative de l'extrémité motrice d'entraînement (101) ;
- un ressort d'actionnement de récupération (120) : qui est un dispositif de ressort apte à être comprimé pour stocker de l'énergie et être libéré pour délivrer en sortie de l'énergie, et est disposé entre la structure d'embrayage de sortie relais (1051) et la structure d'embrayage d'extrémité de sortie (1052), et l'état normal de celui-ci est de séparer la structure d'embrayage de sortie relais (1051) et la structure d'embrayage d'extrémité de sortie (1052), de manière à terminer la transmission de l'énergie cinétique de rotation ; lorsque la structure d'embrayage de sortie relais (1051) et la structure d'embrayage d'extrémité de sortie (1052) sont entraînées de manière à être en prise, le ressort d'actionnement de récupération (120) est pré-comprimé de façon synchronisée pour être dans un état de stockage d'énergie ;
- une structure d'embrayage de sortie relais (1051) : la structure d'embrayage de sortie relais (1051) est composée par une structure à fonction d'embrayage et est installée dans l'ensemble de structure de transmission relais (104), lorsque le structure de tige filetée (1041) est entraînée par l'extrémité motrice d'entraînement (101), la structure d'embrayage de sortie relais (1051) et l'ensemble de structure de transmission relais (104) sont entraînés par la structure de tige filetée (1041) de la structure de couplage relais, pour réaliser des opérations de fermeture/ouverture avec la structure d'embrayage d'extrémité de sortie (1052) de manière à transmettre de l'énergie cinétique de rotation et à forcer le ressort d'actionnement de récupération (120) qui est resserré ; lorsque le couple d'entraînement en rotation de l'extrémité motrice d'entraînement (101) à l'extrémité de sortie (102) n'est plus fourni, la structure d'embrayage de sortie relais (1051) et la structure d'embrayage d'extrémité de sortie (1052) sont désengagées par la force élastique de libération du ressort d'actionnement de récupération (120), terminant ainsi la transmission de l'énergie cinétique de rotation ;
- une structure d'embrayage d'extrémité de sortie (1052) : composée par une structure à fonction d'embrayage apte à réaliser des opérations de fermeture/ouverture avec la structure d'embrayage de sortie relais (1051) pour transmettre de l'énergie cinétique de rotation, ou être désengagée pour terminer la transmission de l'énergie cinétique de rotation, et la structure d'embrayage d'extrémité de sortie (1052) est reliée à l'extrémité de sortie (102) ;
- la structure d'embrayage de la structure d'embrayage de sortie relais (1051) et de la structure d'embrayage d'extrémité de sortie (1052) consiste en la structure d'embrayage de type friction, la structure d'embrayage de type prise ou la structure d'embrayage de prise synchronisée.

5. Embrayage de type centrifuge actionné par couple avec amortissement coulissant selon l'une quelconque des revendications précédentes, dans lequel la structure de couplage relais (204) installée dans l'ensemble de structure de transmission relais (104) est en outre composée par un ressort de forme hélicoïdale apte à tourner pour un actionnement axial (1043), et il consiste en :
- une extrémité motrice d'entraînement (101) : composée par un mécanisme rotatif pour mettre en entrée une énergie cinétique de rotation ; l'extrémité motrice d'entraînement (101) étant un ressort de forme hélicoïdale apte à tourner pour un actionnement axial (1043) pour entraîner l'ensemble de structure de transmission relais (104), l'extrémité motrice d'entraînement (101) est installée avec une structure limitante (115) pour limiter des positions relatives de l'ensemble de structure de transmission relais (104) et de l'extrémité motrice d'entraînement (101) ;
- une extrémité de sortie (102) : composée par un mécanisme rotatif pour délivrer en sortie de l'énergie cinétique de rotation ; l'extrémité de sortie (102) est reliée à une structure d'embrayage d'extrémité de sortie (1052), et est commandée par la structure d'embrayage d'extrémité de sortie (1052) ;
- un ensemble de structure de transmission relais (104) : l'ensemble de structure de transmission relais (104) est installé entre l'extrémité motrice d'entraînement (101) et l'extrémité de sortie (102), et est apte à réaliser un entraînement en rotation et des déplacements axiaux, l'ensemble de structure de transmission relais (104) est installé avec un ressort de forme hélicoïdale apte à tourner pour un actionnement axial (1043) servant à fournir la fonction de structure de couplage relais et est installé sur arbre de façon coaxiale entre l'ensemble de structure de transmission relais (104) et l'extrémité motrice d'entraînement (101), une extrémité du ressort de forme hélicoïdale apte à tourner pour un actionnement axial (1043) est fixée à l'extrémité motrice d'entraînement (101) pour fournir la fonction du côté actif de structure de couplage relais, l'autre extrémité du ressort de forme hélicoïdale apte à tourner pour un actionnement axial (1043) est installée dans l'ensemble de structure de transmission relais (104) pour fournir la fonction du côté passif de structure de couplage relais, un dispositif d'amortissement coulissant de couple limite (106) et un embrayage centrifuge (1006) sont installés entre l'ensemble de structure de transmission relais (104) et le boîtier statique (107) ; lorsque le ressort de forme hélicoïdale apte à tourner pour un actionnement axial (1043) et l'ensemble de structure de transmission relais (104) sont entraînés par l'extrémité motrice d'entraînement (101) pour être dans un état de rotation au ralenti avant d'atteindre une vitesse de rotation réglée, et au moment d'atteindre ou de dépasser la vitesse de rotation préréglée, un effet d'amortissement est généré à travers l'embrayage centrifuge de type à combinaison de force centrifuge (1006) et le dispositif d'amortissement coulissant de couple limite (106) installés entre l'ensemble de structure de transmission relais (104) et le boîtier statique (107), ainsi le ressort de forme hélicoïdale apte à tourner pour un actionnement axial (1043) est tourné et resserré pour générer une force d'actionnement axiale, et amène l'ensemble de structure de transmission relais (104) à générer un déplacement axial relatif, de telle sorte que la structure d'embrayage de sortie relais (1051) installée dans l'ensemble de structure de transmission relais (104) est amenée à réaliser des opérations de fermeture/ouverture avec la structure d'embrayage d'extrémité de sortie (1052) de manière à transmettre de l'énergie cinétique de rotation, et à forcer le ressort d'actionnement de récupération (101) à être resserré ;
lorsque le couple d'enseignement en rotation de l'extrémité motrice d'entraînement (101) à l'extrémité de sortie (102) n'est plus fourni, à travers la force de récupération de libération du ressort d'actionnement de récupération (120), la structure d'embrayage de sortie relais (1051) et la structure d'embrayage d'extrémité de sortie (1052) sont désengagées et le ressort de forme hélicoïdale apte à tourner pour un actionnement axial (1043) est rappelé, terminant ainsi la transmission de l'énergie cinétique de rotation ;
de plus, lorsque la vitesse de rotation à laquelle l'embrayage centrifuge (1006) entraîné à l'extrémité motrice d'entraînement (101) est supérieure ou égale à sa vitesse de rotation de désengagement, l'embrayage centrifuge (1006) est dans un état désengagé, de telle sorte que l'amortissement entre l'ensemble de structure de transmission relais (104) et le boîtier statique (107) n'est pas fourni, et le côté passif de structure de couplage relais de l'ensemble de structure de transmission relais (104) est déplacé par le ressort d'actionnement de récupération (101) pour être rappelé, permettant ainsi à la structure d'embrayage de sortie relais (1051) et à la structure d'embrayage d'extrémité de sortie (1052) d'être désengagées ;
- un dispositif d'amortissement coulissant de couple limite (106) : composé par un dispositif de mécanisme ayant un effet d'amortissement coulissant de couple limite ayant une fonction de retenue alors que des déplacements en rotation relatifs sont générés entre l'ensemble de structure de transmission relais (104) et le boîtier statique (107) ; et est installé entre l'embrayage centrifuge (1006) et le boîtier statique (107) ; lorsque le ressort de forme hélicoïdale apte à tourner pour un actionnement axial (1043) se voit appliquer une force d'entraînement de déplacement angulaire de resserrage par l'extrémité motrice d'entraînement (101), à travers des actions du dispositif d'amortissement coulissant de couple limite (106), des déplacements relatifs sont générés dans l'ensemble de structure de transmission relais (104) ;
la structure comprend : constituée par le dispositif de mécanisme, qui passe par la force mécanique, la force de pré-tension de ressort, la force électromagnétique de bobine électrique excitée, ou la force d'action d'aimant permanent pour le dispositif d'amortissement coulissant de couple limite (106) comprenant entre solide et solide, ou entre solide et fluide visqueux, ou entre fluide visqueux et fluide visqueux, ou entre solide et fluides gazeux ou liquides pour générer un amortissement coulissant ;
- un embrayage centrifuge (1006) : configuré par un dispositif de structure d'embrayage centrifuge ayant la fonction de coupure à un état statique et à basse vitesse, et installé entre l'ensemble de structure de transmission relais (104) et le dispositif d'amortissement coulissant de couple limite (106), et lorsque le côté actif de structure de couplage relais est entraîné en rotation par l'extrémité motrice d'entraînement (101) pour atteindre une vitesse de rotation préréglée, l'embrayage de centrifuge (1006) est dans un état en prise, de manière à combiner l'ensemble de structure de transmission relais (104) et le dispositif d'amortissement coulissant de couple limite (106) pour générer l'amortissement coulissant de couple limite entre l'ensemble de structure de transmission relais (104) et le boîtier statique (107), ainsi un déplacement relatif est généré entre le côté actif de structure de couplage relais et le côté passif de structure de couplage relais combinés dans l'ensemble de structure de transmission relais (104) ;
- un boîtier statique (107) : configuré par une structure de boîtier statique pour recevoir la force centrifuge combinée avec un embrayage actionné par couple de type amortissement coulissant ;
- une structure limitante (115) : composée par un mécanisme apte à limiter des positions relatives de l'ensemble de structure de transmission relais (104) et de l'extrémité motrice d'entraînement (101), et est combinée avec la partie rotative de l'extrémité motrice d'entraînement (101) ;
- un ressort d'actionnement de récupération (120) : qui est un dispositif de ressort apte à être comprimé pour stocker de l'énergie et être libéré pour délivrer en sortie de l'énergie, et est disposé entre la structure d'embrayage de sortie relais (1051) et la structure d'embrayage d'extrémité de sortie (1052), et l'état normal de celui-ci est de séparer la structure d'embrayage de sortie relais (1051) et la structure d'embrayage d'extrémité de sortie (1052), de manière à terminer la transmission de l'énergie cinétique de rotation ; lorsque la structure d'embrayage de sortie relais (1051) et la structure d'embrayage d'extrémité de sortie (1052) sont entraînées de manière à être en prise, le ressort d'actionnement de récupération (120) est pré-comprimé de façon synchronisée pour être dans un état de stockage d'énergie ;
- une structure d'embrayage de sortie relais (1051) : la structure d'embrayage de sortie relais (1051) est composée par une structure à fonction d'embrayage et est installée dans l'ensemble de structure de transmission relais (104), lorsque le ressort de forme hélicoïdale apte à tourner pour un actionnement axial (1043) est entraîné à l'extrémité motrice d'entraînement (101), la structure d'embrayage de sortie relais (1051) et l'ensemble de structure de transmission relais (104) sont entraînés par le ressort de forme hélicoïdale apte à tourner pour un actionnement axial (1043) ayant la fonction de structure de couplage relais et installé entre l'ensemble de structure de transmission relais (104) et l'extrémité motrice d'entraînement (101), de manière à réaliser des opérations de fermeture/ouverture avec la structure d'embrayage d'extrémité de sortie (1052) pour transmettre de l'énergie cinétique de rotation et forcer le ressort d'actionnement de récupération (120) à être resserré ; lorsque le couple d'entraînement en rotation de l'extrémité motrice d'entraînement (101) à l'extrémité de sortie (102) n'est plus fourni, la structure d'embrayage de sortie relais (1051) et la structure d'embrayage d'extrémité de sortie (1052) sont désengagées et le ressort de forme hélicoïdale apte à tourner pour un actionnement axial (1043) est rappelé par la force de récupération de libération du ressort d'actionnement de récupération (120), terminant ainsi la transmission de l'énergie cinétique de rotation ;
- une structure d'embrayage d'extrémité de sortie (1052) : composée par une structure à fonction d'embrayage apte à réaliser des opérations de fermeture/ouverture avec la structure d'embrayage de sortie relais (1051) pour transmettre de l'énergie cinétique de rotation, ou être désengagée pour terminer la transmission de l'énergie cinétique de rotation, et la structure d'embrayage d'extrémité de sortie (102) est reliée à l'extrémité de sortie (102) ;
- la structure d'embrayage de sortie relais (1051) et de la structure d'embrayage d'extrémité de sortie (1052) consiste en la structure d'embrayage de type friction, la structure d'embrayage de type prise ou la structure d'embrayage de prise synchronisée.

6. Embrayage de type centrifuge actionné par couple avec amortissement coulissant selon l'une quelconque des revendications précédentes, dans lequel la structure de couplage relais installée dans l'ensemble de structure de transmission relais (104) est en outre composée par un embrayage à roue libre et contrainte axiale, et il consiste en :
- une extrémité motrice d'entraînement (101) : composée par un mécanisme rotatif pour délivrer en sortie de l'énergie cinétique de rotation ; l'extrémité motrice d'entraînement (101) est un côté actif d'embrayage à roue libre et contrainte axiale (1061), ayant la fonction de côté actif de structure de couplage d'entrée relais, pour entraîner l'ensemble de structure de transmission relais (104), l'extrémité motrice d'entraînement (101) est installée avec une structure limitante (115) pour limiter des positions relatives de l'ensemble de structure de transmission relais (104) et de l'extrémité motrice d'entraînement (101) ;
- une extrémité de sortie (102) : composée par un mécanisme rotatif pour délivrer en sortie de l'énergie cinétique de rotation ; l'extrémité de sortie (102) est reliée à une structure d'embrayage d'extrémité de sortie (1052), et est commandée par la structure d'embrayage d'extrémité de sortie (1052) ;
- un ensemble de structure de transmission relais (104) : l'ensemble de structure de transmission relais (104) est installé entre l'extrémité motrice d'entraînement (101) et l'extrémité de sortie (102), l'ensemble de structure de transmission relais (104) est installé avec un embrayage à roue libre et contrainte axiale (1060) ayant la fonction de structure de couplage relais, l'embrayage à roue libre et contrainte axiale (1060) est équipé d'un côté actif d'embrayage à roue libre et contrainte axiale (1061) et d'un côté passif d'embrayage à roue libre et contrainte axiale (1062) et d'éléments roulants intermédiaires (1063), une pluralité d'intervalles en forme de scie sont formés entre le côté actif d'embrayage à roue libre et contrainte axiale (1061) et le côté passif d'embrayage à roue libre et contrainte axiale (1062) pour recevoir les éléments roulants intermédiaires (1063) de manière à constituer la fonction d'embrayage à roue libre ; un dispositif d'amortissement coulissant de couple limite (106) et un embrayage centrifuge de type à combinaison de force centrifuge (1006) sont installés entre l'ensemble de structure de transmission relais (104) et le boîtier statique (107), lorsque l'embrayage à roue libre et contrainte axiale (1060) est entraîné par l'extrémité motrice d'entraînement (101) pour être dans un état au ralenti avant d'atteindre une vitesse de rotation réglée, et au moment d'atteindre ou de dépasser la vitesse de rotation réglée, un effet d'amortissement est généré à travers l'embrayage centrifuge de type à combinaison de force centrifuge (1006) et le dispositif d'amortissement coulissant de couple limite (106) installé entre l'ensemble de structure de transmission relais (104) et le boîtier statique (107), ainsi le côté actif d'embrayage à roue libre et contrainte axiale (1061) applique le couple d'entraînement en rotation au côté passif d'embrayage à roue libre et contrainte axiale (1062) par l'intermédiaire des éléments roulants intermédiaires (1063) ; avant que les éléments roulants intermédiaires (1063) ne soient forcés à être verrouillés entre le côté actif d'embrayage à roue libre et contrainte axiale (1061) et le côté passif d'embrayage à roue libre et contrainte axiale (1062), le côté passif d'embrayage à roue libre et contrainte axiale (1062) est contraint à être déplacé axialement, ainsi l'ensemble de structure de transmission relais (104) installé avec l'embrayage à roue libre et contrainte axiale (1060) génère un déplacement relatif pour amener la structure d'embrayage de sortie relais (1051) et la structure d'embrayage d'extrémité de sortie (1052) installées dans l'ensemble de structure de transmission relais (104) à réaliser des opérations d'ouverture/fermeture pour transmettre de l'énergie cinétique de rotation et à forcer le ressort d'actionnement de récupération (120) à être resserré ;
lorsque le couple d'entraînement en rotation de l'extrémité motrice d'entraînement (101) à l'extrémité de sortie (102) n'est plus fourni, à travers la force de récupération de libération du ressort d'actionnement de récupération (120), la structure d'embrayage de sortie relais (1051) et la structure d'embrayage d'extrémité de sortie (1052) sont désengagées et le côté passif d'embrayage à roue libre et contrainte axiale (1062) est rappelé, terminant ainsi la transmission de l'énergie cinétique de rotation ;
de plus, lorsque la vitesse de rotation à laquelle l'embrayage centrifuge (1006) entraîné à l'extrémité motrice d'entraînement (101) est supérieure ou égale à sa vitesse de rotation de désengagement, l'embrayage centrifuge (1006) est dans un état désengagé, de telle sorte que l'amortissement entre l'ensemble de structure de transmission relais (104) et le boîtier statique (107) n'est pas fourni, et le côté passif de structure de couplage relais de l'ensemble de structure de transmission relais (104) est déplacé par le ressort d'actionnement de récupération (120) pour être rappelé, permettant ainsi à la structure d'embrayage de sortie relais (1051) et à la structure d'embrayage d'extrémité de sortie (1052) d'être désengagées ;
- un dispositif d'amortissement coulissant de couple limite (106) : composé par un dispositif de mécanisme ayant un effet d'amortissement coulissant de couple limite ayant une fonction de retenue alors que des déplacements en rotation relatifs sont générés entre l'ensemble de structure de transmission relais (104) et le boîtier statique (107) ; et est installé entre l'embrayage centrifuge (1006) et le boîtier statique (107) ; lorsque le côté actif d'embrayage à roue libre et contrainte axiale (1061) est entraîné en rotation par l'extrémité motrice d'entraînement (101), à travers des actions du dispositif d'amortissement coulissant de couple limite (106), des déplacements relatifs sont générés entre le côté actif d'embrayage à roue libre et contrainte axiale (1061) et le côté passif d'embrayage à roue libre et contrainte axiale (1062) ;
la structure comprend : constituée par le dispositif de mécanisme, qui passe par la force mécanique, la force de pré-tension de ressort, la force électromagnétique de bobine électrique excitée, ou la force d'action d'aimant permanent pour le dispositif d'amortissement coulissant de couple limite (106) comprenant entre solide et solide, ou entre solide et fluide visqueux, ou entre fluide visqueux et fluide visqueux, ou entre solide et fluides gazeux ou liquides pour générer un amortissement coulissant ;
- un embrayage centrifuge (1006) : configuré par un dispositif de structure d'embrayage centrifuge ayant la fonction de coupure à un état statique et à basse vitesse, et installé entre l'ensemble de structure de transmission relais (104) et le dispositif d'amortissement coulissant de couple limite (106), et lorsque le côté actif de structure de couplage relais est entraîné en rotation par l'extrémité motrice d'entraînement (101) pour atteindre une vitesse de rotation préréglée, l'embrayage centrifuge (1006) est dans un état en prise, de manière à combiner l'ensemble de structure de transmission relais (104) et le dispositif d'amortissement coulissant de couple limite (106) pour générer l'amortissement coulissant de couple limite entre l'ensemble de structure de transmission relais (104) et le boîtier statique (107), ainsi un déplacement relatif est généré entre le côté actif de structure de couplage relais et le côté passif de structure de couplage relais combinés dans l'ensemble de structure de transmission relais (104) ;
- un boîtier statique (107) : configuré par une structure de boîtier statique pour recevoir la force centrifuge combinée avec un embrayage actionné par couple de type à amortissement coulissant ;
- une structure limitante (115) : composée par un mécanisme apte à limiter des positions relatives de l'ensemble de structure de transmission relais (104) et de l'extrémité motrice d'entraînement (101), et est combinée avec la partie rotative de l'extrémité motrice d'entraînement (101) ;
- un ressort d'actionnement de récupération (120) : qui est un dispositif de ressort apte à être comprimé pour stocker de l'énergie et être libéré pour délivrer en sortie de l'énergie, et est disposé entre la structure d'embrayage de sortie relais (1051) et la structure d'embrayage d'extrémité de sortie (1052), et l'état normal de celui-ci est de séparer la structure d'embrayage de sortie relais (1051) et la structure d'embrayage d'extrémité de sortie (1052), de manière à terminer la transmission de l'énergie cinétique de rotation ; lorsque la structure d'embrayage de sortie relais (1051) et la structure d'embrayage d'extrémité de sortie (1052) sont entraînées de manière à être en prise, le ressort d'actionnement de récupération (120) est pré-comprimé de façon synchronisée pour être dans un état de stockage d'énergie ;
- une structure d'embrayage de sortie relais (1051) : la structure d'embrayage de sortie relais (1051) est composée par une structure à fonction d'embrayage et est installée dans l'ensemble de structure de transmission relais (104), lorsque le côté actif d'embrayage à roue libre et contrainte axiale (1061) est entraîné par l'extrémité motrice d'entraînement (101), le côté passif d'embrayage à roue libre et contrainte axiale (1062) installé dans l'ensemble de structure de transmission relais (104) est entraîné axialement de manière à amener l'ensemble de structure de transmission relais (104) et la structure d'embrayage de sortie relais (1051) installée dans l'ensemble de structure de transmission relais (104) à réaliser des opérations d'ouverture/fermeture avec la structure d'embrayage d'extrémité de sortie (1052) pour transférer de l'énergie cinétique de rotation et forcer le ressort d'actionnement de récupération (120) à être resserré ; lorsque le couple d'entraînement en rotation de l'extrémité motrice d'entraînement (101) à l'extrémité de sortie (102) n'est plus fourni, la structure d'embrayage de sortie relais (1051) et la structure d'embrayage d'extrémité de sortie (1052) sont désengagées et le côté passif d'embrayage à roue libre et contrainte axiale (1062) est rappelé par la force de récupération de libération du ressort d'actionnement de récupération (120), terminant ainsi la transmission de l'énergie cinétique de rotation ;
- une structure d'embrayage d'extrémité de sortie (1052) : composée par une structure ç fonction d'embrayage apte à réaliser des opérations de fermeture/ouverture avec la structure d'embrayage de sortie relais (1051) pour transmettre de l'énergie cinétique de rotation, ou être désengagée pour terminer la transmission de l'énergie cinétique de rotation, et la structure d'embrayage d'extrémité de sortie (1052) est reliée à l'extrémité de sortie (102) ;
- la structure d'embrayage de la structure d'embrayage de sortie relais (1051) et de la structure d'embrayage d'extrémité de sortie (1052) consiste en la structure d'embrayage de type friction, la structure d'embrayage de type prise ou la structure d'embrayage de prise synchronisée.

7. Embrayage de type centrifuge actionné par couple avec amortissement coulissant selon l'une quelconque des revendications précédentes, dans lequel la structure de couplage relais installée dans l'ensemble de structure de transmission relais (104) est en outre composée par un embrayage relais axial du bloc de transmission d'embrayage axial ayant une récupération pré-forcée de contrainte axiale et il consiste en :
- une extrémité motrice d'entraînement (101) : composée par un mécanisme rotatif pour mettre en entrée de l'énergie cinétique de rotation ; l'extrémité motrice d'entraînement (101) est un embrayage relais axial ayant la fonction de structure de couplage relais, pour entraîner l'ensemble de structure de transmission relais (104) ;
- une extrémité de sortie (102) : composée par un mécanisme rotatif pour délivrer en sortie de l'énergie cinétique de rotation ; l'extrémité de sortie (102) est reliée à une structure d'embrayage d'extrémité de sortie (1052), et est commandée par la structure d'embrayage d'extrémité de sortie (1052) ;
- un ensemble de structure de transmission relais (104) : l'ensemble de structure de transmission relais (104) est installé entre l'extrémité motrice d'entraînement (101) et l'extrémité de sortie (102), l'ensemble de structure de transmission relais (104) a un embrayage relais axial qui consiste principalement en un côté actif d'embrayage relais axial (1071), un bloc de transmission d'embrayage axial (1072), un ressort de récupération de bloc de transmission d'embrayage axial (1073), une carte de transmission d'embrayage relais axial (1074) et un élément roulant intermédiaire (1075) ; le côté actif d'embrayage relais axial (1071) recevant l'élément roulant intermédiaire (1075) est entraîné par l'extrémité motrice d'entraînement (101), l'élément roulant intermédiaire (1075) est couplé à un côté passif d'embrayage relais axial (1076) qui est une surface contrainte de manière oblique par rapport au bloc de transmission d'embrayage axial (1072), le bloc de transmission d'embrayage axial (1072) est installé sur la carte de transmission d'embrayage relais axial (1074), un dispositif d'amortissement coulissant de couple limite (106) et un embrayage centrifuge (1006) sont installés entre la carte de transmission d'embrayage relais axial (1074) et le boîtier statique (107), une extrémité du bloc de transmission d'embrayage axial (1072) est fixée sur la carte de transmission d'embrayage relais axial (1074), l'autre extrémité du bloc de transmission d'embrayage axial (1072) sert d'extrémité de transmission (1079), le côté passif d'embrayage relais axial (1076) de l'extrémité de transmission (1079) est une surface contrainte de manière oblique permettant à l'élément roulant intermédiaire (1075) d'être couplé, l'autre surface de l'extrémité de transmission (1079) servant de structure d'embrayage axial (1077), lorsque le côté actif d'embrayage relais axial (1071) équipé de l'élément roulant intermédiaire (1075) par l'extrémité motrice d'entraînement (101) pour être dans un état au ralenti avant d'atteindre une vitesse de rotation réglée, et au moment d'atteindre ou de dépasser la vitesse de rotation réglée, l'embrayage centrifuge (1006) installé entre l'ensemble de structure de transmission relais (104) et le boîtier statique (107) est dans un état en prise de manière à être combiné avec le dispositif d'amortissement coulissant de couple limite (106) pour générer un effet d'amortissement, ainsi le côté passif d'embrayage relais axial (1076) qui est une surface contrainte de manière oblique par rapport au bloc de transmission d'embrayage axial (1072) est contraint à se déplacer par l'élément roulant intermédiaire (1075) installé au côté actif d'embrayage relais axial (1071), et la structure d'embrayage axial (1077) est encore déplacée pour être couplée à la structure d'embrayage d'extrémité de sortie (1052) de l'extrémité de sortie (102) pour transférer de l'énergie cinétique de rotation, lorsque le couple d'entraînement en rotation de l'extrémité motrice d'entraînement (101) à l'extrémité de sortie (102) n'est plus fourni, à travers l'élasticité du bloc de transmission d'embrayage axial (1072) et/ou la force de récupération de libération du ressort de récupération de bloc de transmission d'embrayage axial (1073) installé entre la carte de transmission d'embrayage relais axial (1074) et l'élément roulant intermédiaire (1075), de telle sorte que la structure d'embrayage axial (1077) du bloc de transmission d'embrayage axial (1072) et la structure d'embrayage d'extrémité de sortie (1052) de l'extrémité de sortie (102) sont désengagées, et la carte de transmission d'embrayage relais axial (1074) est rappelée, terminant ainsi la transmission de l'énergie cinétique de rotation ;
de plus, lorsque la vitesse de rotation à laquelle un embrayage centrifuge (1006) entraîné à l'extrémité motrice d'entraînement (101) est inférieure ou égale à sa vitesse de rotation de désengagement, un embrayage centrifuge (1006) est dans un état désengagé, de telle sorte que l'amortissement entre l'ensemble de structure de transmission relais (104) et le boîtier statique (107) n'est pas fourni, et le côté passif de structure de couplage relais de l'ensemble de structure de transmission relais (104) est déplacé par le ressort de récupération de bloc de transmission d'embrayage axial (1073) pour être rappelé, permettant ainsi à la structure d'embrayage axial (1077) et à la structure d'embrayage d'extrémité de sortie (1052) d'être désengagées ;
- un dispositif d'amortissement coulissant de couple limite (106) : composé par un dispositif de mécanisme ayant un effet d'amortissement coulissant de couple limite ayant une fonction de retenue alors que des déplacements en rotation relatifs sont générés entre la carte de transmission d'embrayage relais axial (1074) et le boîtier statique (107), et est installé entre le boîtier statique (107) et la carte de transmission d'embrayage relais axial (1074), lorsque le côté actif d'embrayage relais axial (1071) est entraîné en rotation par l'extrémité motrice d'entraînement (101), à travers des actions du dispositif d'amortissement coulissant de couple limite (106), pendant que le côté actif d'embrayage relais axial (1071) réalise un entraînement en rotation de la carte de transmission d'embrayage relais axial (1074), le bloc de transmission d'embrayage axial (1072) et la structure d'embrayage axial (1077) de la carte de transmission d'embrayage relais axial (1074) sont contraintes à se déplacer par l'élément roulant intermédiaire (1075) entraîné par le côté actif d'embrayage relais axial (1071) pour générer des déplacements relatifs ;
la structure comprend : constituée par le dispositif de mécanisme, qui passe par la force mécanique, la force de pré-tension de ressort, la force électromagnétique de bobine électrique excitée, ou la force d'action d'aimant permanent pour le dispositif d'amortissement coulissant de couple limite (106) comprenant entre solide et solide, ou entre solide et fluide visqueux, ou entre fluide visqueux et fluide visqueux, ou entre solide et fluides gazeux ou liquides pour générer un amortissement coulissant ;
- un embrayage centrifuge (1006) : configuré par un dispositif de structure d'embrayage centrifuge ayant la fonction de coupure à un état statique et à basse vitesse, et installé entre la carte de transmission d'embrayage relais axial (1074) et le dispositif d'amortissement coulissant de couple limite (106), et lorsque le côté actif de structure de couplage relais est entraîné par l'extrémité motrice d'entraînement (101) pour réaliser un entraînement en rotation pour atteindre une vitesse de rotation réglée, l'embrayage centrifuge (1006) est dans un état en prise, de manière à combiner la carte de transmission d'embrayage relais axial (1074) et le dispositif d'amortissement coulissant de couple limite (106) pour générer un amortissement coulissant de couple limite entre la carte de transmission d'embrayage relais axial (1074) et le boîtier statique (107), ainsi un déplacement relatif est généré entre le côté actif de structure de couplage relais et le côté passif de structure de couplage relais combinés dans l'ensemble de structure de transmission relais (104) ;
- un boîtier statique (107) : configuré par une structure de boîtier statique pour recevoir la force centrifuge combinée avec un embrayage actionné par couple de type à amortissement coulissant ;
- une structure d'embrayage d'extrémité de sortie (1052) : la structure d'embrayage d'extrémité de sortie (1052) est composée par une structure à fonction d'embrayage et est reliée à l'extrémité de sortie (102) pour servir à réaliser des opérations d'ouverture/fermeture avec la structure d'embrayage axial (1077) de l'extrémité de transmission (1079) du bloc de transmission d'embrayage axial (1072) de la carte de transmission d'embrayage relais axial (1074) pour transférer de l'énergie cinétique de rotation, ou dans un état désengagé pour terminer la transmission de l'énergie cinétique de rotation ;
- la structure d'embrayage de la structure d'embrayage de sortie relais (1051) et de la structure d'embrayage d'extrémité de sortie (1052) consiste en la structure d'embrayage de type friction, la structure d'embrayage de type prise ou la structure d'embrayage de prise synchronisée ;
- un élément roulant intermédiaire (1075) : qui peut être remplacé par des billes roulantes, des cylindres en forme de cône ou des saillies sphériques ou en forme d'arc.

8. Embrayage de type centrifuge actionné par couple avec amortissement coulissant selon l'une quelconque des revendications précédentes, dans lequel la structure de couplage de sortie relais installée dans l'ensemble de structure de transmission relais (104) est en outre composée par l'embrayage relais radial du bloc de transmission d'embrayage radial ayant une récupération pré-forcée de contrainte radiale, et il consiste principalement en :
- une extrémité motrice d'entraînement (101) : composée par un mécanisme rotatif pour mettre en entrée de l'énergie cinétique de rotation ; l'extrémité motrice d'entraînement (101) est un embrayage relais radial ayant la fonction de structure de couplage relais, pour entraîner l'ensemble de structure de transmission relais (104) ;
- une extrémité de sortie (102) : composée par un mécanisme rotatif pour délivrer en sortie de l'énergie cinétique de rotation ; l'extrémité de sortie (102) est reliée à une structure d'embrayage d'extrémité de sortie (1052), et est commandée par la structure d'embrayage d'extrémité de sortie (1052) ;
- un ensemble de structure de transmission relais (104) : l'ensemble de structure de transmission relais (104) est installé entre l'extrémité motrice d'entraînement (101) et l'extrémité de sortie (102), les trois composants sont agencés sous forme de structure annulaire concentrique, l'ensemble de structure de transmission relais (104) a un embrayage relais radial qui consiste principalement en un côté actif d'embrayage relais radial (1081), un bloc de transmission d'embrayage radial (1082), un ressort de récupération de bloc de transmission d'embrayage radial (1083), une carte de transmission d'embrayage relais radial (1084), et un élément roulant intermédiaire (1085) ; le côté actif d'embrayage relais radial (1081) recevant l'élément roulant intermédiaire (1085) est entraîné par l'extrémité motrice d'entraînement (101), l'élément roulant intermédiaire (1085) est couplé à un côté passif d'embrayage relais radial (1086) qui est une surface contrainte de façon oblique par rapport au bloc de transmission d'embrayage radial (1082), le bloc de transmission d'embrayage radial (1082) est installé sur la carte de transmission d'embrayage relais radial (1084), un dispositif d'amortissement coulissant de couple limite (106) et un embrayage centrifuge de type à combinaison de force centrifuge (1006) sont installés entre la carte de transmission d'embrayage relais radial (1084) et le boîtier statique (107), une extrémité du bloc de transmission d'embrayage radial (1082) est fixée sur la carte de transmission d'embrayage relais radial (1084), l'autre extrémité du bloc de transmission d'embrayage radial (1082) sert d'extrémité de transmission (1089), le côté passif d'embrayage relais radial (1086) de l'extrémité de transmission (1089) est une surface contrainte de façon oblique permettant à l'élément roulant intermédiaire (1085) d'être couplé, l'autre surface de l'extrémité de transmission (1089) sert de structure d'embrayage radial (1087), lorsque le côté actif d'embrayage relais radial (1081) équipé de l'élément roulant intermédiaire (1085) est entraîné par l'extrémité motrice d'entraînement (101) pour être dans un état au ralenti avant d'atteindre une vitesse de rotation réglée, et au moment d'atteindre ou de dépasser la vitesse de rotation réglée l'embrayage centrifuge de type à combinaison de force centrifuge (1006) installé entre l'ensemble de structure de transmission relais (104) et le boîtier statique (107) est dans un état en prise de manière à être combiné avec le dispositif d'amortissement coulissant de couple limite (106) pour générer un effet d'amortissement, ainsi le côté passif d'embrayage relais radial (1086) qui est une surface contrainte de façon oblique par rapport au bloc de transmission d'embrayage radial (1082) est contraint à se déplacer par l'élément roulant intermédiaire (1085) installé au côté actif d'embrayage relais radial (1081), et la structure d'embrayage radial (1087) est encore déplacée pour être couplée à la structure d'embrayage d'extrémité de sortie (1052) de l'extrémité de sortie (102) pour transférer de l'énergie cinétique de rotation ;
lorsque le couple d'entraînement en rotation de l'extrémité motrice d'entraînement (101) à l'extrémité de sortie (102) n'est plus fourni, à travers l'élasticité du bloc de transmission d'embrayage radial (1082) et/ou la force de récupération de libération du ressort de récupération de bloc de transmission d'embrayage radial (1083) installé entre la carte de transmission d'embrayage relais radial (1084) et l'élément roulant intermédiaire (1085), de telle sorte que la structure d'embrayage radial (1087) du bloc de transmission d'embrayage radial (1082) et la structure d'embrayage d'extrémité de sortie (1052) de l'extrémité de sortie (102) sont désengagées, et la carte de transmission d'embrayage relais radial (1084) est rappelée, terminant ainsi la transmission de l'énergie cinétique de rotation ;
de plus, lorsque la vitesse de rotation à laquelle l'embrayage centrifuge (1006) entraîné à l'extrémité motrice d'entraînement (101) est inférieure ou égale à sa vitesse de rotation de désengagement, l'embrayage centrifuge (1006) est dans un état désengagé, de telle sorte que l'amortissement entre l'ensemble de structure de transmission relais (104) et le boîtier statique (107) n'est pas fourni, et le côté passif de structure de couplage relais de l'ensemble de structure de transmission relais (104) est déplacé par le ressort de récupération de bloc de transmission d'embrayage radial (1083) pour être rappelé, permettant ainsi à la structure d'embrayage radial (1087) et à la structure d'embrayage d'extrémité de sortie (1052) d'être désengagées ;
- un dispositif d'amortissement coulissant de couple limite (106) : composé par un dispositif de mécanisme ayant un effet d'amortissement coulissant de couple limite ayant une fonction de retenue alors que des déplacements en rotation relatifs sont générés entre la carte de transmission d'embrayage relais radial (1084) et le boîtier statique (107), et est installé entre le boîtier statique (107) et la carte de transmission d'embrayage relais radial (1084), lorsque le côté actif d'embrayage relais radial (1081) est entraîné en rotation par l'extrémité motrice d'entraînement (101), à travers des actions du dispositif d'amortissement coulissant de couple limite (106), pendant que le côté actif d'embrayage relais radial (1081) réalise un entraînement en rotation de la carte de transmission d'embrayage relais radial (1084), le bloc de transmission d'embrayage radial (1082) et la structure d'embrayage radial (1087) de la carte de transmission d'embrayage relais radial (1084) sont contraints à se déplacer par l'élément roulant intermédiaire (1085) entraîné par le côté actif d'embrayage relais radial (1081) pour générer des déplacements relatifs ;
la structure comprend : constituée par le dispositif de mécanisme, qui passe par la force mécanique, la force de pré-tension de ressort, la force électromagnétique de bobine électrique excitée, ou la force d'action d'aimant permanent pour le dispositif d'amortissement coulissant de couple limite (106) comprenant entre solide et solide, ou entre solide et fluide visqueux, ou entre fluide visqueux et fluide visqueux, ou entre solide et fluides gazeux ou liquides pour générer un amortissement coulissant ;
- un embrayage centrifuge (1006) : configuré par un dispositif de structure d'embrayage centrifuge ayant la fonction de coupure à un état statique et à basse vitesse, et installé entre la carte de transmission d'embrayage relais radial (1084) et le dispositif d'amortissement coulissant de couple limite (106), et lorsque le côté actif de structure de couplage relais est amené par l'extrémité motrice d'entraînement (101) à réaliser un entraînement en rotation pour atteindre une vitesse de rotation réglée, l'embrayage centrifuge (1006) est dans un état en prise, de manière à combiner la carte de transmission d'embrayage relais radial (1084) et le dispositif d'amortissement coulissant de couple limite (106) pour générer un amortissement coulissant de couple limite entre la carte de transmission d'embrayage relais radial (1084) et le boîtier statique (107), ainsi un déplacement relatif est généré entre le côté actif de structure de couplage relais et le côté passif de structure de couplage relais combinés dans l'ensemble de structure de transmission relais (104) ;
- un boîtier statique (107) : configuré par une structure de boîtier statique pour recevoir la force centrifuge combinée avec un embrayage actionné par couple de type à amortissement coulissant ;
- une structure d'embrayage d'extrémité de sortie (1052) : la structure d'embrayage d'extrémité de sortie (1052) est composée par une structure à fonction d'embrayage et est reliée à l'extrémité de sortie (102) pour servir à réaliser des opérations d'ouverture/fermeture avec la structure d'embrayage radial (1087) de l'extrémité de transmission (1089) du bloc de transmission d'embrayage radial (1082) de la carte de transmission d'embrayage relais radial (1084) pour transférer de l'énergie cinétique de rotation, ou dans état désengagé pour terminer la transmission de l'énergie cinétique de rotation ;
- la structure d'embrayage de la structure d'embrayage de sortie relais (1051) et de la structure d'embrayage extrémité de sortie (1052) consiste en la structure d'embrayage de type friction, la structure d'embrayage de type prise ou la structure d'embrayage de prise synchronisée ;
- un élément roulant intermédiaire (1085) : qui peut être remplacé par des billes roulantes, des cylindres en forme de cône, ou des saillies sphériques ou en forme d'arc.

9. Embrayage de type centrifuge actionné par couple avec amortissement coulissant selon l'une quelconque des revendications précédentes, dans lequel il peut être composé par deux ensembles combinés d'embrayages de type centrifuge actionnés par couple avec amortissement coulissant et ayant la même extrémité motrice d'entraînement (101), comprenant : deux ensembles combinés d'embrayages de type centrifuge actionnés par couple avec amortissement coulissant transmettant tous les deux dans la direction axiale, ayant des directions de fonctionnement différentes et ayant la même extrémité motrice d'entraînement (101).

10. Embrayage de type centrifuge actionné par couple avec amortissement coulissant selon l'une quelconque des revendications 1 à 8, dans lequel il peut être composé par deux ensembles d'embrayages combinés de type centrifuge actionné par couple avec amortissement coulissant et ayant la même extrémité motrice d'entraînement (101), comprenant : deux ensembles combinés d'embrayages de type centrifuge actionnés par couple avec amortissement coulissant transmettant tous les deux dans la direction axiale, ayant la même direction de fonctionnement et ayant la même extrémité motrice d'entraînement (101).

11. Embrayage de type centrifuge actionné par couple avec amortissement coulissant selon l'une quelconque des revendications 1 à 8, dans lequel il peut être composé par deux ensembles combinés d'embrayages de type centrifuge actionnés par couple avec amortissement coulissant et ayant la même extrémité motrice d'entraînement (101), comprenant : deux ensembles combinés d'embrayages de type centrifuge actionnés par couple avec amortissement coulissant transmettant tous les deux dans la direction radiale, ayant des directions de fonctionnement différentes et ayant la même extrémité motrice d'entraînement (101).

12. Embrayage de type centrifuge actionné par couple avec amortissement coulissant selon l'une quelconque des revendications 1 à 8, dans lequel il peut être composé par deux ensembles combinés d'embrayage de type centrifuge actionnés par couple avec amortissement coulissant et ayant la même extrémité motrice d'entraînement (101), comprenant : deux ensembles combinés d'embrayages de type centrifuge actionnés par couple avec amortissement coulissant transmettant tous les deux dans la direction radiale, ayant la même direction de fonctionnement et ayant la même extrémité motrice d'entraînement (101).

13. Embrayage de type centrifuge actionné par couple avec amortissement coulissant selon l'une quelconque des revendications 1 à 8, dans lequel il peut être composé par deux ensembles combinés d'embrayages de type centrifuge actionnés par couple avec amortissement coulissant et ayant la même extrémité motrice d'entraînement (101), comprenant : deux ensembles combinés d'embrayage de type centrifuge actionnés par couple avec amortissement coulissant, un ensemble transmettant dans la direction radiale et l'autre transmettant dans la direction axiale, ayant différentes directions de fonctionnement et ayant la même extrémité motrice d'entraînement (101).

14. Embrayage de type centrifuge actionné par couple avec amortissement coulissant selon l'une quelconque des revendications 1 à 8, dans lequel il peut être composé par deux ensembles combinés d'embrayage de type centrifuge actionnés par couple avec amortissement coulissant et ayant la même extrémité motrice d'entraînement (101), comprenant : deux ensembles combinés d'embrayage de type centrifuge actionnés par couple avec amortissement coulissant, un ensemble transmettant dans la direction radiale et l'autre transmettant dans la direction axiale, ayant la même direction de fonctionnement et ayant la même extrémité motrice d'entraînement (101).
